# EUROPEAN PATENT SPECIFICATION

(11) **EP 2 492 543 B1**
(45) Date of publication and mention of the grant of the patent: **19.09.2018**
(21) Application number: 12156918.0
(22) Date of filing: 24.02.2012
(51) Int. Cl.: F16H 3/72

(54) **Dual-drive electric machine having controllable epicycle gear set**
Elektrische Maschine mit Doppelantrieb mit steuerbarem Umlaufrädergetriebesatz
Machine électrique double commande dotée d'un ensemble à engrenages d'épicycle contrôlable

(30) Priority: 24.02.2011 US 201113033753; 24.02.2011 US 201113033866
(43) Date of publication of application: 29.08.2012
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- EP-A2- 1 350 650
- CN-A- 101 204 919
- CN-A- 101 451 597
- CN-A- 101 480 913
- CN-Y- 201 423 916
- FR-A1- 2 834 938
- GB-A- 2 314 128
- JP-A- 9 175 199

## Description

### BACKGROUND OF THE INVENTION

### (a) Field of the Invention

The present invention is structured by a dual-drive electric machine being combined with an epicycle gear set (EG101) and a controllable brake device, through controlling the controllable brake device to perform brake locking or releasing, the operations of transmission function of combining transmission or releasing between a rotation shaft (S101) at an output/input end, a rotation shaft (S102) at an output/input end and a sleeve type rotation shaft (AS101) at an output/input end of the epicycle gear set (EG101) are enabled to be controlled, and the interacting operation between the dual-drive electric machine (EM100) and the output/input ends are also enabled to be controlled.

### (b) Description of the Prior Art

Conventionally, a friction type electromagnetic clutch device is often installed between the output/input end of a rotation electric machine and a load; and through electrically charging or breaking the friction type electromagnetic clutch device to perform operations of combining or releasing, the load is enabled to engaged or released with the rotary electric machine. One primary disadvantage of the conventional arts is that residual rotary torque is often remained during the releasing, which may cause the kinetic energy loss and the ineffective operation.

CN201423916 discloses a driving device used for a parallel hybrid electric vehicle comprising a dual-rotor motor, a motor controller, a planetary mechanism, a storage battery pack, an electronic control unit (ECU) and a fixed-axis gear pair. An input shaft of the engine is respectively connected with a sun gear and a gear ring of the planetary mechanism through a power transmission mechanism which is composed of the dual-rotor motor and the fixed-axis gear pair.

### SUMMARY OF THE INVENTION

The present invention is structured by a dual-drive electric machine being combined with an bevel gear set (EG101) and a controllable brake device, through controlling the controllable brake device to perform brake locking or releasing, the operations of transmission function of combining transmission or releasing between a rotation shaft (S101) at an output/input end, a rotation shaft (S102) at an output/input end and a sleeve type rotation shaft (AS101) at an output/input end of the bevel gear set (EG101) are enabled to be controlled, and the interacting operation between the dual-drive electric machine (EM100) and the output/input ends are also enabled to be controlled.

According to a second aspect of the present invention, a drive device comprises a dual-drive electric machine (EM100); an bevel gear set (EG101) connected so as to be driven by the dual drive electric machine (EM100); a controllable brake device to perform brake locking and releasing operations; a first rotation shaft (S101) at a first output/input end; a second rotational shaft (SI02) at a second output/input end; and a sleeve type rotation shaft (AS101). More than one brake device is included in the clutch device. The brake device or devices might be located in a number of positions within the clutch device.

In some embodiments, more than one brake device is included.

### BRIEF DESCRIPTION OF THE DRAWINGS

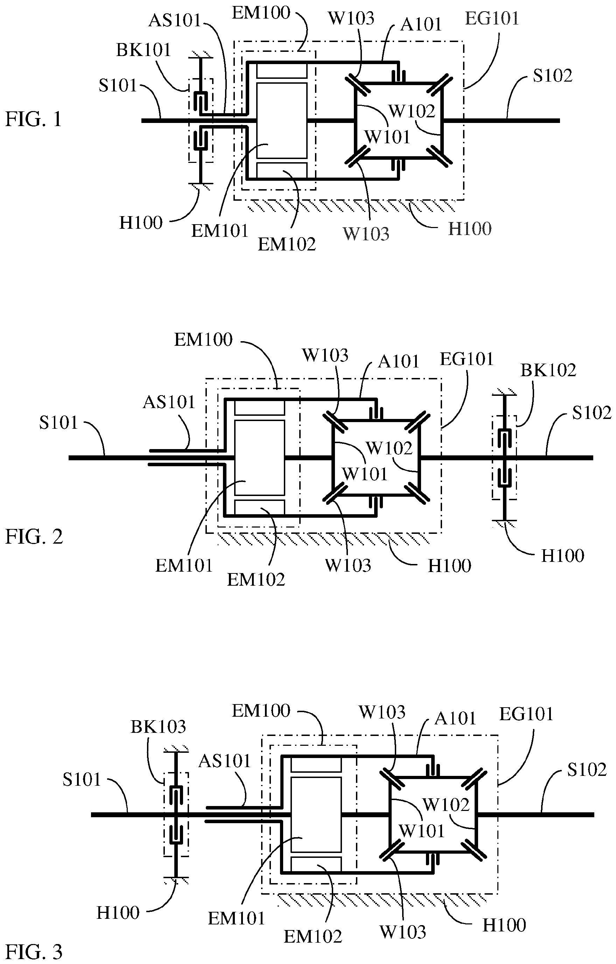

FIG. 1 is a schematic structural view showing the rotation shaft (S101) shared by the input wheel (W101) of the epicycle gear set (EG101) and the inner rotation part of electric machine (EM101) of the dual-drive electric machine (EM100) being served as an output/input end, the rocker arm (A101) linked by the epicycle wheel (W103) being combined with the outer rotation part of electric machine (EM102) and combined with the sleeve type rotation shaft (AS 101), and the sleeve type rotation shaft (AS101) rotated and sleeved on the rotation shaft (S101) being served as an output/input end and connected to an action side of the controllable brake device (BK101), and the other action side of the controllable brake device (BK101) being fixed in the housing (H100), the epicycle gear set (EG101) also being fixed in the housing (H100), and the output wheel (W102) of the epicycle gear set (EG101) being provided for driving the rotation shaft (S102) to be served as an output/input end, according to one embodiment of the present invention.
FIG. 2 is a schematic structural view showing the rotation shaft (S101) shared by the input wheel (W101) of the epicycle gear set (EG101) and the inner rotation part of electric machine (EM101) of the dual-drive electric machine (EM100) being served as an output/input end, the rocker arm (A101) linked by the epicycle wheel (W103) being combined with the outer rotation part of electric machine (EM102) and combined with the sleeve type rotation shaft (AS101), and the sleeve type rotation shaft (AS101) sleeved on the rotation shaft (S101) being served as an output/input end, and the output wheel (W102) of the epicycle gear set (EG101) being provided for driving the rotation shaft (S102) to be served as an output/input end, the rotation shaft (S102) being connected to an action side of the controllable brake device (BK102), and the other action side of the controllable brake device (BK102) being fixed in the housing (H100), according to one embodiment of the present invention.
FIG. 3 is a schematic structural view showing the rotation shaft (S101) shared by the input wheel (W101) of the epicycle gear set (EG101) and the inner rotation part of electric machine (EM101) of the dual-drive electric machine (EM100) being served as an output/input end for connecting with an action side of the controllable brake device (BK103), the other action side of the controllable brake device (BK103) being fixed in the housing (H100), the epicycle gear set (EG101) also being fixed in the housing (H100), the epicycle wheel (W103) of the epicycle gear set (EG101) being provided for linking the rocker arm (A101) and combined with the outer rotation part of electric machine (EM102) and the sleeve type rotation shaft (AS101), and the sleeve type rotation shaft (AS101) being served as an output/input end, and the output wheel (W102) of the epicycle gear set (EG101) being provided for driving the rotation shaft (S102) to be served as an output/input end, according to one embodiment of the present invention.

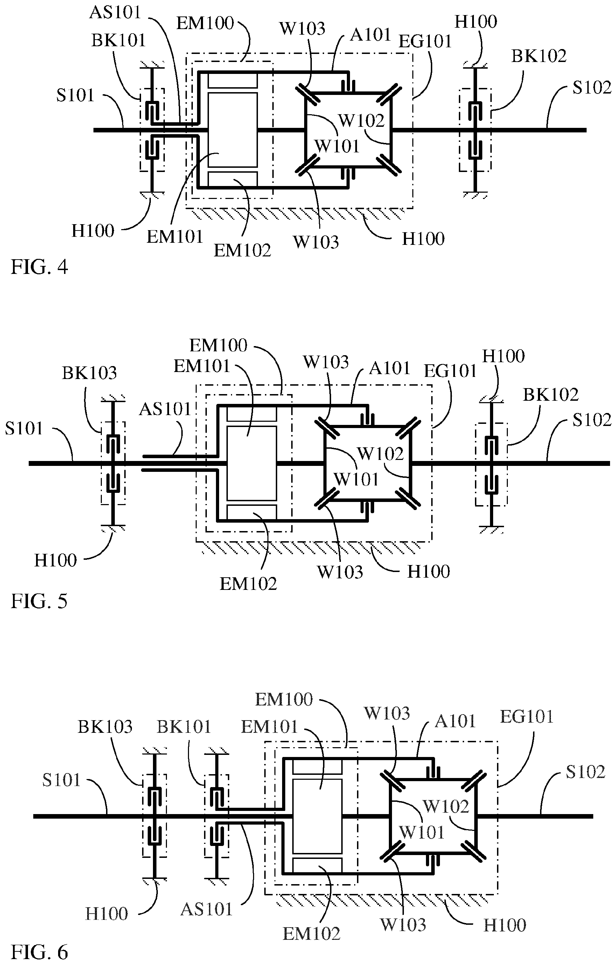

FIG. 4 is a schematic structural view showing the controllable brake device (BK102) being further installed between the rotation shaft (SI02) and the housing (H100) as shown in FIG. 1.
FIG. 5 is a schematic structural view showing the controllable brake device (BK103) being further installed between the rotation shaft (S101) and the housing (H100) as shown in FIG. 2.
FIG. 6 is a schematic structural view showing the controllable brake device (BK101) being further installed between the sleeve type rotation shaft (AS101) and the housing (H100) as shown in FIG. 3.

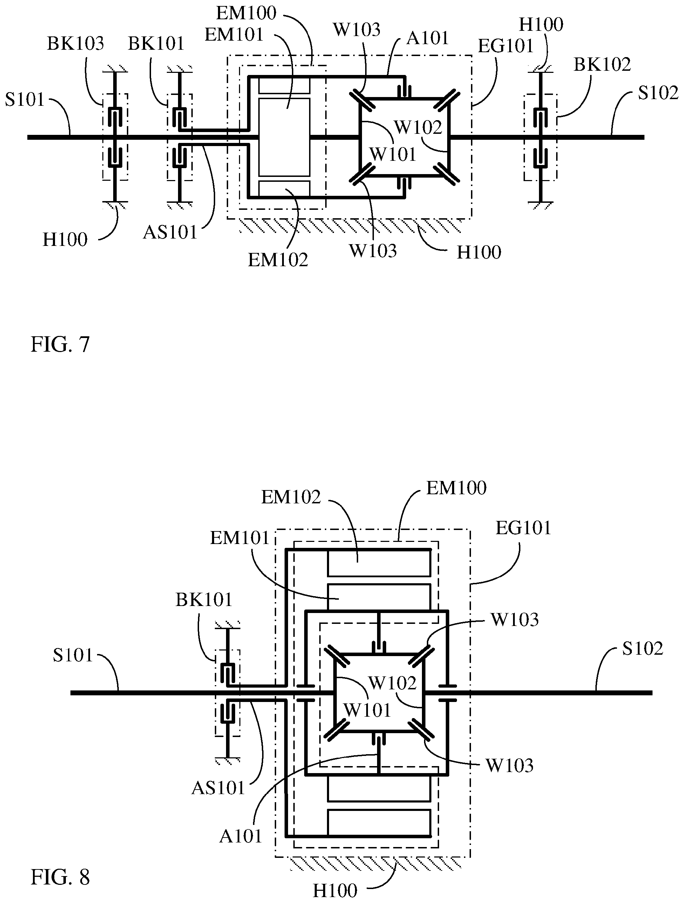

FIG. 7 is a schematic structural view showing the rotation shaft (S101) shared by the input wheel (W101) of the epicycle gear set (EG101) and the inner rotation part of electric machine (EM101) of the dual-drive electric machine (EM100) being served as an output/input end, and served for connecting with an action side of the controllable brake device (BK103) while the other action side of the controllable brake device (BK103) being fixed in the housing (H100), and the epicycle wheel (W103) of the epicycle gear set (EG101) is provided for linking the rocker arm (A101) and combined with the outer rotation part of electric machine (EM102) and combined with the sleeve type rotation shaft (AS101), and the sleeve type rotation shaft (AS101) being rotated and sleeved on the rotation shaft (S101) for being served as an output/input end, and the sleeve type rotation shaft (AS101) being connected to an action side of the controllable brake device (BK101), and the other action side of the controllable brake device (BK101) being fixed in the housing (H100), and the epicycle gear set (EG101) also being fixed in the housing (H100), and the output wheel (W102) of the epicycle gear set (EG101) being provided for driving the rotation shaft (S102) to be served as an output/input end, and served for connecting with an action side of the controllable brake device (BK102), and the other action side of the controllable brake device (BK102) being fixed in the housing (H100), according to one embodiment of the present invention.
FIG. 8 is a schematic structural view showing the rotation shaft (S101) being combined with the input wheel (W101) of the epicycle gear set (EG101) for being served as an output/input end, the rocker arm (A101) linked by the epicycle wheel (W103) being combined with the inner rotation part of electric machine (EM101), the outer rotation part of electric machine (EM102) being combined with the sleeve type rotation shaft (AS101), the sleeve type rotation shaft (AS101) rotated and sleeved on the rotation shaft (S101) being served as an output/input end and provided for connecting to an action side of the controllable brake device (BK101) while the other action side of the controllable brake device (BK101) being fixed in the housing (H100), the epicycle gear set (EG101) also being fixed in the housing (H100), and the output wheel (W102) of the epicycle gear set (EG101) being provided for driving the rotation shaft (S102) to be served as an output/input end, according to one embodiment of the present invention.

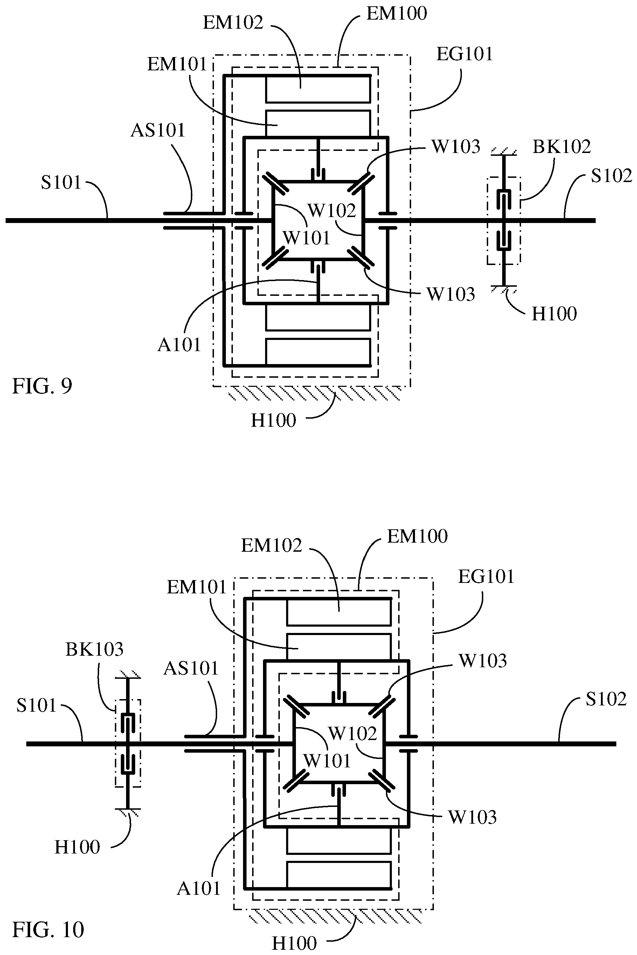

FIG. 9 is a schematic structural view showing the rotation shaft (S101) combined with the input wheel (W101) of the epicycle gear set (EG101) being served as an output/input end, the rocker arm (A101) linked by the epicycle wheel (W103) being combined with the inner rotation part of electric machine (EM101), the outer rotation part of electric machine (EM102) being combined with the sleeve type rotation shaft (AS 101), the sleeve type rotation shaft (AS101) rotated and sleeved on the rotation shaft (S101) being served as an output/input end, the output wheel (W102) of the epicycle gear set (EG101) being provided for driving the rotation shaft (SI02) to be served as an output/input end, and the rotation shaft (SI02) being connected to an action side of the controllable brake device (BK102) while the other action side of the controllable brake device (BK102) being fixed in the housing (H100), according to one embodiment of the present invention.
FIG. 10 is a schematic structural view showing the rotation shaft (S101) being combined with the input wheel (W101) of the epicycle gear set (EG101) and provided for connecting to an action side of the controllable brake device (BK103) while the other action side of the controllable brake device (BK103) being fixed in the housing (H100), the epicycle gear set (EG101) also being fixed in the housing (H100), the epicycle wheel (W103) of the epicycle gear set (EG101) being provided for linking the rocker arm (A101) and combined with the inner rotation part of electric machine (EM101), the outer rotation part of electric machine (EM102) being connected to the sleeve type rotation shaft (AS101), the sleeve type rotation shaft (AS101) rotated and sleeved on the rotation shaft (S101) being served as an output/input end, and the output wheel (W102) of the epicycle gear set (EG101) being provided for driving the rotation shaft (S102) to be served as an output/input end, according to one embodiment of the present invention.

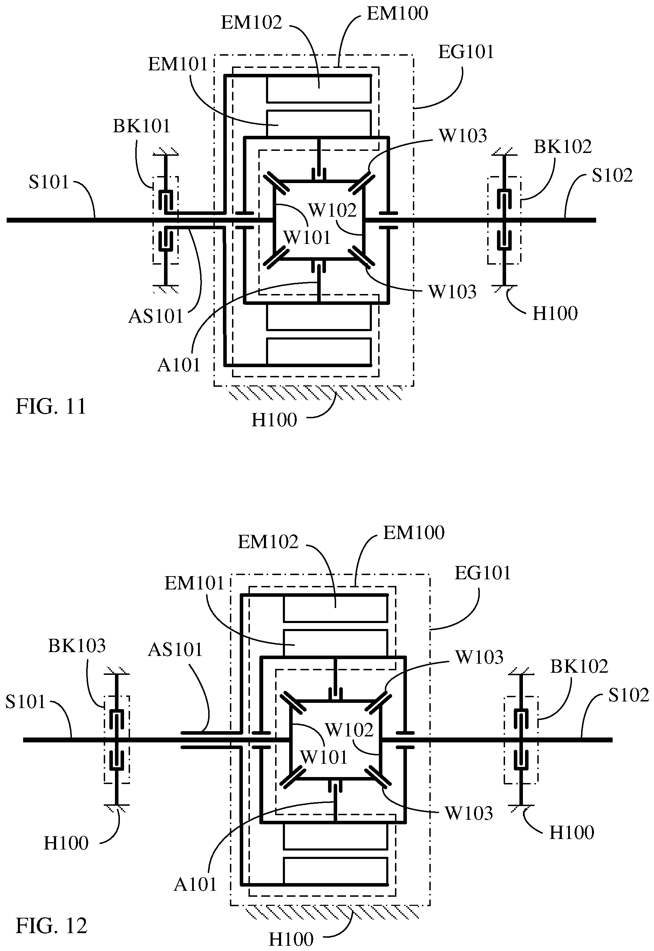

FIG. 11 is a schematic structural view showing the controllable brake device (BK102) being further installed between the rotation shaft (SI02) and the housing (H100) as shown in FIG. 8.
FIG. 12 is a schematic structural view showing the controllable brake device (BK103) being further installed between the rotation shaft (S101) and the housing (H100) as shown in FIG. 9.

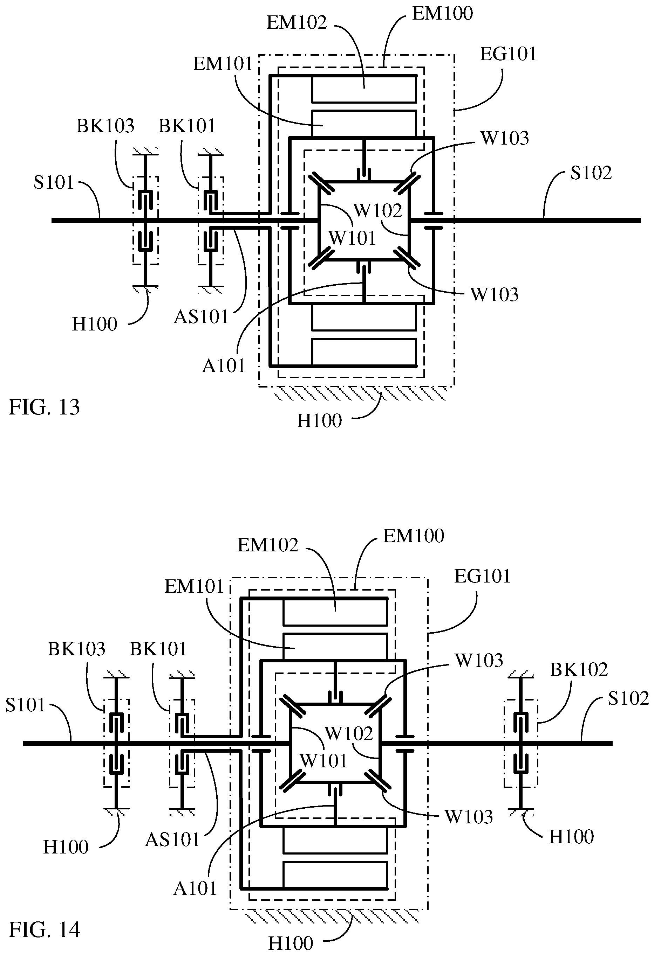

FIG. 13 is a schematic structural view showing the controllable brake device (BK101) being further installed between the sleeve type rotation shaft (AS101) and the housing (H100) as shown in FIG. 10.
FIG. 14 is a schematic structural view showing the rotation shaft (S101) combined with the input wheel (W101) of the epicycle gear set (EG101) being served as an output/input end and provided for connecting to an action side of the controllable brake device (BK103) while the other action side of the controllable brake device (BK103) being fixed in the housing (H100), the epicycle wheel (W103) of the epicycle gear set (EG101) being provided for linking the rocker arm (A101) and combined with the inner rotation part of electric machine (EM101), the outer rotation part of electric machine (EM102) being connected to the sleeve type rotation shaft (AS101), the sleeve type rotation shaft (AS101) being rotated and sleeved on the rotation shaft (S101) for being served as an output/input end, the sleeve type rotation shaft (AS101) being connected to an action side of the controllable brake device (BK101) while the other action side of the controllable brake device (BK101) being fixed in the housing (H100), the epicycle gear set (EG101) also being fixed in the housing (H100), and the output wheel (W102) of the epicycle gear set (EG101) being provided for driving the rotation shaft (S102) to be served as an output/input end and provided for connecting to an action side of the controllable brake device (BK102) while the other action side of the controllable brake device (BK102) being fixed in the housing (H100), according to one embodiment of the present invention.

### DESCRIPTION OF MAIN COMPONENT SYMBOLS

A101 : Rocker arm
AS101 : Sleeve type rotation shaft
BK101, BK102, BK103 : Controllable brake device
EG101 : Epicycle gear set
EM100 : Dual-drive electric machine
EM101 : Inner rotation part of electric machine
EM102 : Outer rotation part of electric machine
H100 : Housing
S101, S102 : Rotation shaft
W101 : Input wheel
W102 : Output wheel
W103 : Epicycle wheel

### DETAILED DESCRIPTION OF THE PREFERRED EMBODIMENTS

Conventionally, a friction type electromagnetic clutch device is often installed between the output/input end of a rotation electric machine and a load; and through electrically charging or breaking the friction type electromagnetic clutch device to perform operations of combining or releasing, the load is enabled to engaged or released with the rotary electric machine. One primary disadvantage of the conventional arts is that residual rotary torque is often remained during the releasing, which may cause the kinetic energy loss and the ineffective operation.

The present invention provides a dual-drive electric machine having a controllable epicycle gear set, in which an inner rotation part of electric machine (EM101) of the dual-drive electric machine (EM100) is combined with an input wheel (W101) of an epicycle gear set (EG101) and a rotation shaft (S101) shared by the above two is served as an output/input end, a rotation shaft (S102) combined with an output wheel (W102) is served as an output/input end, and a rocker arm (A101) linked by an epicycle wheel (W103) of the epicycle gear set (EG101) combined with an outer rotation part of electric machine (EM102) and combined with a sleeve type rotation shaft (AS101) is served as an output/input end, so that a part or all of the three output/input ends are respectively connected to an action side of a corresponding controllable brake device, and the other action side of the controllable brake device is connected to a housing (H100); through controlling the controllable brake device to perform brake locking or releasing, the operations of transmission function of connecting transmission or releasing between the rotation shaft (S101) at the output/input end, the rotation shaft (S102) at the output/input end and the sleeve type rotation shaft (AS 101) at the output/input end of the epicycle gear set (EG101) are enabled to be controlled, and the interactive operation between the dual-drive electric machine (EM100) and the output/input ends are also enabled to be controlled.

The structures and embodiments of the dual-drive electric machine having controllable epicycle gear set of the present invention are disclosed as followings:
FIG. 1 is a schematic structural view showing the rotation shaft (S101) shared by the input wheel (W101) of the epicycle gear set (EG101) and the inner rotation part of electric machine (EM101) of the dual-drive electric machine (EM100) being served as an output/input end, the rocker arm (A101) linked by the epicycle wheel (W103) being combined with the outer rotation part of electric machine (EM102) and combined with the sleeve type rotation shaft (AS101), and the sleeve type rotation shaft (AS101) rotated and sleeved on the rotation shaft (S101) being served as an output/input end and connected to an action side of the controllable brake device (BK101), and the other action side of the controllable brake device (BK101) being fixed in the housing (H100), the epicycle gear set (EG101) also being fixed in the housing (H100), and the output wheel (W102) of the epicycle gear set (EG101) being provided for driving the rotation shaft (SI02) to be served as an output/input end, according to one embodiment of the present invention.

As show in FIG 1, it mainly consists of:
--Epicycle gear set (EG101): constituted by an input wheel (W101) and an output wheel (W102) and at least an epicycle wheel (W103), and including by means of the bevel gears engaging with each other or the bevel friction wheels mutually performing friction transmissions to form the epicycle gear set function, and also constituted by the rotation shaft (S101), the rotation shaft (SI02), the rocker arm (A101), the sleeve type rotation shaft (AS101) and a bearing, as well as installed with a shell for being combined in the housing (H100);
   The speed ratios of the input wheel (W101) and the output wheel (W102) of the mentioned epicycle gear set (EG101) are the same, and the speed ratios between the above two and the epicycle wheel (W103) can be the same or different; or
   The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK101): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS 101) or the rocker arm (A101) while the other action side is fixed in the housing (H100);
--Dual-drive electric machine (EM100): constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--The rotation shaft (S101) shared by the input wheel (W101) of the epicycle gear set (EG101) and the inner rotation part of electric machine (EM101) of the dual-drive electric machine (EM100) is served as an output/input end, the rocker arm (A101) linked by the epicycle wheel (W103) is combined with the outer rotation part of electric machine (EM102) and combined with the sleeve type rotation shaft (AS101), and the sleeve type rotation shaft (AS101) rotated and sleeved on the rotation shaft (S101) is served as an output/input end, and the sleeve type rotation shaft (AS101) is connected to an action side of the controllable brake device (BK101), and the other action side of the controllable brake device (BK101) is fixed in the housing (H100), the output wheel (W102) of the epicycle gear set (EG101) is provided for driving the rotation shaft (SI02) to be served as an output/input end, and the rotation shaft (S101) connected with the input wheel (W101) is also served as an output/input end;
According to the embodiment shown in FIG. 1, the operations of the dual-drive electric machine having controllable epicycle gear set of the present invention include one or more than one of following functions:
--When the controllable brake device (BK101) is controlled to be in the releasing state, and the dual-drive electric machine (EM100) is not operated with the electric machinery function, the transmission relations between the rotation shaft (S101) and the rotation shaft (S102) and the sleeve type rotation shaft (AS 101) are in the releasing state allowing idle rotation;
-- When the controllable brake device (BK101) is controlled to be in the releasing state, and the dual-drive electric machine (EM100) is operated with the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state, and the dual-drive electric machine (EM100) is not operated with the electric machinery function, the transmission relation between the rotation shaft (S101) and the rotation shaft (S102) is in a connecting relation allowing for transmission;
--When the controllable brake device (BK101) is controlled to be in the brake locking state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the rotation shaft (S102);

The interactive operations of corresponding function performed by the mentioned dual-drive electric machine (EM100) include receiving the driving control of externally inputted electric energy, operating as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 2 is a schematic structural view showing the rotation shaft (S101) shared by the input wheel (W101) of the epicycle gear set (EG101) and the inner rotation part of electric machine (EM101) of the dual-drive electric machine (EM100) being served as an output/input end, the rocker arm (A101) linked by the epicycle wheel (W103) being combined with the outer rotation part of electric machine (EM102) and combined with the sleeve type rotation shaft (AS101), and the sleeve type rotation shaft (AS101) sleeved on the rotation shaft (S101) being served as an output/input end, and the output wheel (W102) of the epicycle gear set (EG101) being provided for driving the rotation shaft (S102) to be served as an output/input end, the rotation shaft (S102) being connected to an action side of the controllable brake device (BK102), and the other action side of the controllable brake device (BK102) being fixed in the housing (H100), according to one embodiment of the present invention.

As show in FIG 2, it mainly consists of:
--Epicycle gear set (EG101): constituted by an input wheel (W101) and an output wheel (W102) and at least an epicycle wheel (W103), and including by means of the bevel gears engaging with each other or the bevel friction wheels mutually performing friction transmissions to form the epicycle gear set function, and also constituted by the rotation shaft (S101), the rotation shaft (SI02), the rocker arm (A101), the sleeve type rotation shaft (AS101) and a bearing, as well as installed with a shell for being combined in the housing (H100);
   The speed ratios of the input wheel (W101) and the output wheel (W102) of the mentioned epicycle gear set (EG101) are the same, and the speed ratios between the above two and the epicycle wheel (W103) can be the same or different; or
   The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102) while the other action side is fixed in the housing (H100);
--Dual-drive electric machine (EM100): constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--The rotation shaft (S101) shared by the input wheel (W101) of the epicycle gear set (EG101) and the inner rotation part of electric machine (EM101) of the dual-drive electric machine (EM100) is served as an output/input end, the rocker arm (A101) linked by the epicycle wheel (W103) is combined with the outer rotation part of electric machine (EM102) and combined with the sleeve type rotation shaft (AS101), and the sleeve type rotation shaft (AS101) is rotated and sleeved on the rotation shaft (S101) for being served as an output/input end;
--The output wheel (W102) of the epicycle gear set (EG101) is provided for driving the rotation shaft (SI02) to be served as an output/input end, and the rotation shaft (SI02) is connected to an action side of the controllable brake device (BK102) while the other action side of the controllable brake device (BK102) is fixed in the housing (H100);
According to the embodiment shown in FIG. 2, the operations of the dual-drive electric machine having controllable epicycle gear set of the present invention include one or more than one of following functions:
--When the controllable brake device (BK102) is controlled to be in the releasing state, and the dual-drive electric machine (EM100) is not operated with the electric machinery function, the transmission relations between the rotation shaft (S101) and the sleeve type rotation shaft (AS 101) and the rotation shaft (S102) are in the releasing state allowing idle rotation;
-- When the controllable brake device (BK102) is controlled to be in the releasing state, and the dual-drive electric machine (EM100) is operated with the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK102) is controlled to be in the brake locking state, and the dual-drive electric machine (EM100) is not operated with the electric machinery function, the transmission relation between the rotation shaft (S101) and the sleeve type rotation shaft (AS101) is in a connecting relation allowing for transmission;
--When the controllable brake device (BK102) is controlled to be in the brake locking state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);

The interactive operations of corresponding function performed by the mentioned dual-drive electric machine (EM100) include receiving the driving control of externally inputted electric energy, operating as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 3 is a schematic structural view showing the rotation shaft (S101) shared by the input wheel (W101) of the epicycle gear set (EG101) and the inner rotation part of electric machine (EM101) of the dual-drive electric machine (EM100) being served as an output/input end for connecting with an action side of the controllable brake device (BK103), and the other action side of the controllable brake device (BK103) being fixed in the housing (H100); the epicycle gear set (EG101) also being fixed in the housing (H100), the epicycle wheel (W103) of the epicycle gear set (EG101) being provided for linking the rocker arm (A101) and combined with the outer rotation part of electric machine (EM102) and the sleeve type rotation shaft (AS 101), and the sleeve type rotation shaft (AS101) being served as an output/input end, and the output wheel (W102) of the epicycle gear set (EG101) being provided for driving the rotation shaft (SI02) to be served as an output/input end, according to one embodiment of the present invention.

As show in FIG 3, it mainly consists of:
--Epicycle gear set (EG101): constituted by an input wheel (W101) and an output wheel (W102) and at least an epicycle wheel (W103), and including by means of the bevel gears engaging with each other or the bevel friction wheels mutually performing friction transmissions to form the epicycle gear set function, and also constituted by the rotation shaft (S101), the rotation shaft (SI02), the rocker arm (A101), the sleeve type rotation shaft (AS101) and a bearing, as well as installed with a shell for being combined in the housing (H100);
   The speed ratios of the input wheel (W101) and the output wheel (W102) of the mentioned epicycle gear set (EG101) are the same, and the speed ratios between the above two and the epicycle wheel (W103) can be the same or different; or
   The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK103): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101) while the other action side is fixed in the housing (H100);
--Dual-drive electric machine (EM100): constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--The rotation shaft (S101) shared by the input wheel (W101) of the epicycle gear set (EG101) and the inner rotation part of electric machine (EM101) of the dual-drive electric machine (EM100) is served as an output/input end for connecting with an action side of the controllable brake device (BK103) while the other action side of the controllable brake device (BK103) is fixed in the housing (H100);
--The epicycle wheel (W103) of the epicycle gear set (EG101) is provided for linking the rocker arm (A101) and combined with the outer rotation part of electric machine (EM102) and combined with the sleeve type rotation shaft (AS101), and the sleeve type rotation shaft (AS101) is rotated and sleeved on the rotation shaft (S101) for being served as an output/input end, the output wheel (W102) of the epicycle gear set (EG101) is provided for driving the rotation shaft (SI02) to be served as an output/input end, and the rotation shaft (S101) connected with the input wheel (W101) is also served as an output/input end;
The operations of the dual-drive electric machine having controllable epicycle gear set shown in FIG. 3 include one or more than one of following functions:
--When the controllable brake device (BK103) is controlled to be in the releasing state, and the dual-drive electric machine (EM100) is not operated with the electric machinery function, the transmission relations between the rotation shaft (S101) and the sleeve type rotation shaft (AS 101) and the rotation shaft (S102) are in the releasing state allowing idle rotation;
-- When the controllable brake device (BK103) is controlled to be in the releasing state, and the dual-drive electric machine (EM100) is operated with the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS 101);
--When the controllable brake device (BK103) is controlled to be in the brake locking state, and the dual-drive electric machine (EM100) is not operated with the electric machinery function, the transmission relation between the sleeve type rotation shaft (AS101) and the rotation shaft (S102) is in a connecting relation allowing for transmission;
--When the controllable brake device (BK103) is controlled to be in the brake locking state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the sleeve type rotation shaft (AS101) and the rotation shaft (S102);
The interactive operations of corresponding function performed by the mentioned dual-drive electric machine (EM100) include receiving the driving control of externally inputted electric energy, operating as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 4 is a schematic structural view showing the controllable brake device (BK102) being further installed between the rotation shaft (SI02) and the housing (H100) as shown in FIG. 1.

As shown in FIG. 4, the rotation shaft (S101) shared by the input wheel (W101) of the epicycle gear set (EG101) and the inner rotation part of electric machine (EM101) of the dual-drive electric machine (EM100) is served as an output/input end, the rocker arm (A101) linked by the epicycle wheel (W103) is combined with the outer rotation part of electric machine (EM102) and combined with the sleeve type rotation shaft (AS101), and the sleeve type rotation shaft (AS101) rotated and sleeved on the rotation shaft (S101) is served as an output/input end, the sleeve type rotation shaft (AS101) is connected with an action side of the controllable brake device (BK101), and the other action side of the controllable brake device (BK101) is fixed in the housing (H100), the epicycle gear set (EG101) is also fixed in the housing (H100), the output wheel (W102) of the epicycle gear set (EG101) is provided for driving the rotation shaft (SI02) to be served as an output/input end, and the rotation shaft (S102) is connected to an action side of the controllable brake device (BK102), and the other action side of the controllable brake device (BK102) is fixed in the housing (H100), which mainly consists of:
--Epicycle gear set (EG101): constituted by an input wheel (W101) and an output wheel (W102) and at least an epicycle wheel (W103), and including by means of the bevel gears engaging with each other or the bevel friction wheels mutually performing friction transmissions to form the epicycle gear set function, and also constituted by the rotation shaft (S101), the rotation shaft (S102), the rocker arm (A101), the sleeve type rotation shaft (AS101) and a bearing, as well as installed with a shell for being combined in the housing (H100); or
   The speed ratios of the input wheel (W101) and the output wheel (W102) of the mentioned epicycle gear set (EG101) are the same, and the speed ratios between the above two and the epicycle wheel (W103) can be the same or different;
   The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK101): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101) while the other action side is fixed in the housing (H100);
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102) while the other action side is fixed in the housing (H100);
--Dual-drive electric machine (EM100): constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--The rotation shaft (S101) shared by the input wheel (W101) of the epicycle gear set (EG101) and the inner rotation part of electric machine (EM101) of the dual-drive electric machine (EM100) is served as an output/input end, the output wheel (W102) of the epicycle gear set (EG101) combined with the rotation shaft (SI02) is served as an output/input end, the rocker arm (A101) linked by the epicycle wheel (W103) is combined with the outer rotation part of electric machine (EM102) and combined with the sleeve type rotation shaft (AS101), and the sleeve type rotation shaft (AS101) rotated and sleeved on the rotation shaft (S101) is served as an output/input end, and the sleeve type rotation shaft (AS101) is connected to an action side of the controllable brake device (BK101), and the other action side of the controllable brake device (BK101) is fixed in the housing (H100), and the output wheel (W102) of the epicycle gear set (EG101) is provided for driving the rotation shaft (S102) to be served as an output/input end, and the rotation shaft (SI02) is connected to an action side of the controllable brake device (BK102) while the other action side of the controllable brake device (BK102) is fixed in the housing (H100);
According to the embodiment shown in FIG. 4, the operations of the dual-drive electric machine having controllable epicycle gear set of the present invention include one or more than one of following functions:
--When the controllable brake device (BK101) and the controllable brake device (BK102) are both controlled to be in the releasing state, and the dual-drive electric machine (EM100) is not operated with the electric machinery function, the transmission relations between the rotation shaft (S101) and the rotation shaft (S102) and the sleeve type rotation shaft (AS101) are in the releasing state allowing idle rotation;
-- When the controllable brake device (BK101) and the controllable brake device (BK102) are both controlled to be in the releasing state, and the dual-drive electric machine (EM100) is operated with the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state and the controllable brake device (BK102) is controlled to be in the releasing state, and the dual-drive electric machine (EM100) is not operated with the electric machinery function, the transmission relation between the rotation shaft (S101) and the rotation shaft (SI02) is in a connecting relation allowing for transmission;
--When the controllable brake device (BK101) is controlled to be in the brake locking state and the controllable brake device (BK102) is controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the rotation shaft (S102);
--When the controllable brake device (BK101) is controlled to be in the releasing state and the controllable brake device (BK102) is controlled to be in the brake locking state, and the dual-drive electric machine (EM100) is not operated with the electric machinery function, the transmission relation between the rotation shaft (S101) and the sleeve type rotation shaft (AS 101) is in a connecting relation allowing for transmission;
--When the controllable brake device (BK101) is controlled to be in the releasing state and the controllable brake device (BK102) is controlled to be in the brake locking state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK101) and the controllable brake device (BK102) are both controlled to be in the brake locking state, the relations between the rotation shaft (S101), the rotation shaft (SI02) and the sleeve type rotation shaft (AS101) are all in the brake locking state.

The interactive operations of corresponding function performed by the mentioned dual-drive electric machine (EM100) include receiving the driving control of externally inputted electric energy, operating as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 5 is a schematic structural view showing the controllable brake device (BK103) being further installed between the rotation shaft (S101) and the housing (H100) as shown in FIG. 2.

As shown in FIG. 5, the rotation shaft (S101) shared by the input wheel (W101) of the epicycle gear set (EG101) and the inner rotation part of electric machine (EM101) of the dual-drive electric machine (EM100) is served as an output/input end, and is connected to an action side of the controllable brake device (BK103), and the other action side of the controllable brake device (BK103) is fixed in the housing (H100), and the epicycle gear set (EG101) is also fixed in the housing (H100), and the epicycle wheel (W103) of the epicycle gear set (EG101) is provided for linking the rocker arm (A101) and combined with the outer rotation part of electric machine (EM102) and combined with the sleeve type rotation shaft (AS101), and the sleeve type rotation shaft (AS101) rotated and sleeved on the rotation shaft (S101) is served as an output/input end, and the output wheel (W102) of the epicycle gear set (EG101) is provided for driving the rotation shaft (S102) to be served as an output/input end, and the rotation shaft (SI02) is connected to an action side of the controllable brake device (BK102) while the other action side of the controllable brake device (BK102) is fixed in the housing (H100), which mainly consists of:
--Epicycle gear set (EG101): constituted by an input wheel (W101) and an output wheel (W102) and at least an epicycle wheel (W103), and including by means of the bevel gears engaging with each other or the bevel friction wheels mutually performing friction transmissions to form the epicycle gear set function, and also constituted by the rotation shaft (S101), the rotation shaft (SI02), the rocker arm (A101), the sleeve type rotation shaft (AS101) and a bearing, as well as installed with a shell for being combined in the housing (H100);
   The speed ratios of the input wheel (W101) and the output wheel (W102) of the mentioned epicycle gear set (EG101) are the same, and the speed ratios between the above two and the epicycle wheel (W103) can be the same or different; or
   The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102) while the other action side is fixed in the housing (H100);
--Controllable brake device (BK103): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101) while the other action side is fixed in the housing (H100);

--Dual-drive electric machine (EM100): constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
-- The rotation shaft (S101) shared by the input wheel (W101) of the epicycle gear set (EG101) and the inner rotation part of electric machine (EM101) of the dual-drive electric machine (EM100) is served as an output/input end, and is connected to an action side of the controllable brake device (BK103), and the other action side of the controllable brake device (BK103) is fixed in the housing (H100); the output wheel (W102) of the epicycle gear set (EG101) is combined with the rotation shaft (SI02) for being served as an output/input end, and is connected to an action side of the controllable brake device (BK102), and the other action side of the controllable brake device (BK102) is fixed in the housing (H100); the rocker arm (A101) linked by the epicycle wheel (W103) is combined with the outer rotation part of electric machine (EM102) and combined with the sleeve type rotation shaft (AS101), and the sleeve type rotation shaft (AS101) rotated and sleeved on the rotation shaft (S101) is served as an output/input end;
The operations of the dual-drive electric machine having controllable epicycle gear set as shown in FIG. 5 include one or more than one of following functions:
--When the controllable brake device (BK102) and the controllable brake device (BK103) are both controlled to be in the releasing state, and the dual-drive electric machine (EM100) is not operated with the electric machinery function, the transmission relations between the rotation shaft (S101) and the rotation shaft (S102) and the sleeve type rotation shaft (AS101) are in the releasing state allowing idle rotation;
-- When the controllable brake device (BK102) and the controllable brake device (BK103) are both controlled to be in the releasing state, and the dual-drive electric machine (EM100) is operated with the electric machinery function, the corresponding interactive operation of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK103) is controlled to be in the brake locking state and the controllable brake device (BK102) is controlled to be in the releasing state, and the dual-drive electric machine (EM100) is not operated with the electric machinery function, the transmission relation between the sleeve type rotation shaft (AS101) and the rotation shaft (S102) is in a connecting relation allowing for transmission;
--When the controllable brake device (BK103) is controlled to be in the brake locking state and the controllable brake device (BK102) is controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function performed, for performing corresponding interactive operations with the damping of external load or the externally inputted rotary kinetic energy sustained by the sleeve type rotation shaft (AS101) and the rotation shaft (S102);
--When the controllable brake device (BK103) is controlled to be in the releasing state and the controllable brake device (BK102) is controlled to be in the brake locking state, and the dual-drive electric machine (EM100) is not operated with the electric machinery function, the transmission relation between the rotation shaft (S101) and the sleeve type rotation shaft (AS 101) is in a connecting relation allowing for transmission;
--When the controllable brake device (BK103) is controlled to be in the releasing state and the controllable brake device (BK102) is controlled to be in the brake locking state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK101) and the controllable brake device (BK102) are both controlled to be in the brake locking state, the relations between the rotation shaft (S101), the rotation shaft (SI02) and the sleeve type rotation shaft (AS101) are all in the brake locking state;
The interactive operations of corresponding function performed by the mentioned dual-drive electric machine (EM100) include receiving the driving control of externally inputted electric energy, operating as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 6 is a schematic structural view showing the controllable brake device (BK101) being further installed between the sleeve type rotation shaft (AS101) and the housing (H100) as shown in FIG. 3.

As shown in FIG. 6, the rotation shaft (S101) shared by the input wheel (W101) of the epicycle gear set (EG101) and the inner rotation part of electric machine (EM101) of the dual-drive electric machine (EM100) is served as an output/input end for connecting with an action side of the controllable brake device (BK103), and the other action side of the controllable brake device (BK103) is fixed in the housing (H100); the epicycle wheel (W103) of the epicycle gear set (EG101) is provided for linking the rocker arm (A101) and combined to the outer rotation part of electric machine (EM102) and combined to the sleeve type rotation shaft (AS 101), and the sleeve type rotation shaft (AS 101) is rotated and combined on the rotation shaft (S101) for being served as an output/input end, and the sleeve type rotation shaft (AS101) is connected to an action side of the controllable brake device (BK101), and the other action side of the controllable brake device (BK101) is fixed in the housing (H100), and the shell of the epicycle gear set (EG101) is also fixed in the housing (H100), and the output wheel (W102) of the epicycle gear set (EG101) is provided for driving the rotation shaft (S102) to be served as an output/input end, which mainly consists of:
--Epicycle gear set (EG101): constituted by an input wheel (W101) and an output wheel (W102) and at least an epicycle wheel (W103), and including by means of the bevel gears engaging with each other or the bevel friction wheels mutually performing friction transmissions to form the epicycle gear set function, and also constituted by the rotation shaft (S101), the rotation shaft (SI02), the rocker arm (A101), the sleeve type rotation shaft (AS101) and a bearing, as well as installed with a shell for being combined in the housing (H100);
   The speed ratios of the input wheel (W101) and the output wheel (W102) of the mentioned epicycle gear set (EG101) are the same, and the speed ratios between the above two and the epicycle wheel (W103) can be the same or different; or
   The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK101): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS 101) or the rocker arm (A101) while the other action side is fixed in the housing (H100);
--Controllable brake device (BK103): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101) while the other action side is fixed in the housing (H100);
--Dual-drive electric machine (EM100): constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--The rotation shaft (S101) shared by the input wheel (W101) of the epicycle gear set (EG101) and the inner rotation part of electric machine (EM101) of the dual-drive electric machine (EM100) is served as an output/input end, and is served for connecting to an action side of the controllable brake device (BK103) while the other action side of the controllable brake device (BK103) is fixed in the housing (H100);
--The epicycle wheel (W103) of the epicycle gear set (EG101) is provided for linking the rocker arm (A101) and combined with the outer rotation part of electric machine (EM102) and combined with the sleeve type rotation shaft (AS101), and the sleeve type rotation shaft (AS101) is rotated and sleeved on the rotation shaft (S101) for being served as an output/input end, and the sleeve type rotation shaft (AS101) is connected to an action side of the controllable brake device (BK101) while the other action side of the controllable brake device (BK101) is fixed in the housing (H100), and the output wheel (W102) of the epicycle gear set (EG101) is provided for driving the rotation shaft (S102) to be served as an output/input end.

The operations of the dual-drive electric machine having controllable epicycle gear set as shown in FIG. 6 include one or more than one of following functions:
--When the controllable brake device (BK101) and the controllable brake device (BK103) are both controlled to be in the releasing state, and the dual-drive electric machine (EM100) is not operated with the electric machinery function, the transmission relations between the rotation shaft (S101) and the rotation shaft (S102) and the sleeve type rotation shaft (AS101) are in the releasing state allowing idle rotation;
-- When the controllable brake device (BK101) and the controllable brake device (BK103) are both controlled to be in the releasing state, and the dual-drive electric machine (EM100) is operated with the electric machinery function, the corresponding interactive operation of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state and the controllable brake device (BK103) is controlled to be in the releasing state, and the dual-drive electric machine (EM100) is not operated with the electric machinery function, the transmission relation between the rotation shaft (S101) and the rotation shaft (SI02) is in a connecting relation allowing for transmission;
--When the controllable brake device (BK101) is controlled to be in the brake locking state and the controllable brake device (BK103) is controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the rotation shaft (S102);
--When the controllable brake device (BK101) is controlled to be in the releasing state and the controllable brake device (BK103) is controlled to be in the brake locking state, and the dual-drive electric machine (EM 100) is not operated with the electric machinery function, the transmission relation between the rotation shaft (SI02) and the sleeve type rotation shaft (AS 101) is in a connecting relation allowing for transmission;
--When the controllable brake device (BK101) is controlled to be in the releasing state and the controllable brake device (BK103) is controlled to be in the brake locking state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S102) and the sleeve type rotation shaft (AS101);
--When the controllable brake device (BK101) and the controllable brake device (BK102) are both controlled to be in the brake locking state, the relations between the rotation shaft (S101), the rotation shaft (SI02) and the sleeve type rotation shaft (AS101) are all in the brake locking state.

The interactive operations of corresponding function performed by the mentioned dual-drive electric machine (EM100) include receiving the driving control of externally inputted electric energy, operating as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 7 is a schematic structural view showing the rotation shaft (S101) shared by the input wheel (W101) of the epicycle gear set (EG101) and the inner rotation part of electric machine (EM101) of the dual-drive electric machine (EM100) being served as an output/input end, and served for connecting with an action side of the controllable brake device (BK103) while the other action side of the controllable brake device (BK103) being fixed in the housing (H100), and the epicycle wheel (W103) of the epicycle gear set (EG101) is provided for linking the rocker arm (A101) and combined with the outer rotation part of electric machine (EM102) and combined with the sleeve type rotation shaft (AS101), and the sleeve type rotation shaft (AS101) being rotated and sleeved on the rotation shaft (S101) for being served as an output/input end, and the sleeve type rotation shaft (AS101) being connected to an action side of the controllable brake device (BK101), and the other action side of the controllable brake device (BK101) being fixed in the housing (H100), and the epicycle gear set (EG101) also being fixed in the housing (H100), and the output wheel (W102) of the epicycle gear set (EG101) being provided for driving the rotation shaft (S102) to be served as an output/input end, and served for connecting with an action side of the controllable brake device (BK102), and the other action side of the controllable brake device (BK102) being fixed in the housing (H100), according to one embodiment of the present invention.

As shown in FIG. 7, the rotation shaft (S101) shared by the input wheel (W101) of the epicycle gear set (EG101) and the inner rotation part of electric machine (EM101) of the dual-drive electric machine (EM100) is served as an output/input end, and served for connecting to an action side of the controllable brake device (BK103) while the other action side of the controllable brake device (BK103) is fixed in the housing (H100); the epicycle wheel (W103) of the epicycle gear set (EG101) is provided for linking the rocker arm (A101) and combined with the outer rotation part of electric machine (EM102) and combined with the sleeve type rotation shaft (AS101), and the sleeve type rotation shaft (AS101) is rotated and sleeved on the rotation shaft (S101) for being served as an output/input end, and the sleeve type rotation shaft (AS101) is connected to an action side of the controllable brake device (BK101) while the other action side of the controllable brake device (BK101) is fixed in the housing (H100); the epicycle gear set (EG101) is also fixed in the housing (H100), and the output wheel (W102) of the epicycle gear set (EG101) being provided for driving the rotation shaft (S102) to be served as an output/input end, and the rotation shaft (S102) is connected to an action side of the controllable brake device (BK102) while the other action side of the controllable brake device (BK102) is fixed in the housing (H100), which mainly consists of:
--Epicycle gear set (EG101): constituted by an input wheel (W101) and an output wheel (W102) and at least an epicycle wheel (W103), and including by means of the bevel gears engaging with each other or the bevel friction wheels mutually performing friction transmissions to form the epicycle gear set function, and also constituted by the rotation shaft (S101), the rotation shaft (SI02), the rocker arm (A101), the sleeve type rotation shaft (AS101) and a bearing, as well as installed with a shell for being combined in the housing (H100);
   The speed ratios of the input wheel (W101) and the output wheel (W102) of the mentioned epicycle gear set (EG101) are the same, and the speed ratios between the above two and the epicycle wheel (W103) can be the same or different; or
   The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK101): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS 101) or the rocker arm (A101) while the other action side is fixed in the housing (H100);
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102) while the other action side is fixed in the housing (H100);
--Controllable brake device (BK103): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101) while the other action side is fixed in the housing (H100);
--Dual-drive electric machine (EM100): constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--The rotation shaft (S101) shared by the input wheel (W101) of the epicycle gear set (EG101) and the inner rotation part of electric machine (EM101) of the dual-drive electric machine (EM100) is served as an output/input end, and is served for connecting to an action side of the controllable brake device (BK103) while the other action side of the controllable brake device (BK103) is fixed in the housing (H100);
--The epicycle wheel (W103) of the epicycle gear set (EG101) is provided for linking the rocker arm (A101) and combined with the outer rotation part of electric machine (EM102) and combined with the sleeve type rotation shaft (AS101), and the sleeve type rotation shaft (AS101) rotated and sleeved on the rotation shaft (S101) is served as an output/input end, and the sleeve type rotation shaft (AS101) is connected to an action side of the controllable brake device (BK101) while the other action side of the controllable brake device (BK101) is fixed in the housing (H100); the output wheel (W102) of the epicycle gear set (EG101) is provided for driving the rotation shaft (S102) to be served as an output/input end, and the rotation shaft (S102) is connected to an action side of the controllable brake device (BK102) while the other action side of the controllable brake device (BK102) is fixed in the housing (H100);
The operations of the dual-drive electric machine having controllable epicycle gear set as shown in FIG. 7 include one or more than one of following functions:
--When the controllable brake device (BK101) and the controllable brake device (BK102) and the controllable brake device (BK103) are all controlled to be in the releasing state, and the dual-drive electric machine (EM100) is not operated with the electric machinery function, the transmission relations between the rotation shaft (S101) and the rotation shaft (S102) and the sleeve type rotation shaft (AS101) are in the releasing state allowing idle rotation;
-- When the controllable brake device (BK101) and the controllable brake device (BK102) and the controllable brake device (BK103) are all controlled to be in the releasing state, and the dual-drive electric machine (EM100) is operated with the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state, the controllable brake device (BK102) and the controllable brake device (BK103) are controlled to be in the releasing state, and the dual-drive electric machine (EM100) is not operated with the electric machinery function, the transmission relation between the rotation shaft (S101) and the rotation shaft (SI02) is in a connecting relation allowing for transmission;
--When the controllable brake device (BK101) is controlled to be in the brake locking state, the controllable brake device (BK102) and the controllable brake device (BK103) are controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing correspondingly interactive operations with the damping of external load or the externally inputted rotary kinetic energy sustained by the rotation shaft (S101) and rotation shaft (S102);
--When the controllable brake device (BK102) is controlled to be in the brake locking state, the controllable brake device (BK101) and the controllable brake device (BK103) are controlled to be in the releasing state, and the dual-drive electric machine (EM100) is not operated with the electric machinery function, the transmission relation between the rotation shaft (S101) and the sleeve type rotation shaft (AS 101) is in a connecting relation allowing for transmission;
--When the controllable brake device (BK102) is controlled to be in the brake locking state, the controllable brake device (BK101) and the controllable brake device (BK103) are controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK103) is controlled to be in the brake locking state, the controllable brake device (BK101) and the controllable brake device (BK102) are controlled to be in the releasing state, and the dual-drive electric machine (EM100) is not operated with the electric machinery function, the transmission relation between the rotation shaft (S102) and the sleeve type rotation shaft (AS101) is in a connecting relation allowing for transmission;
--When the controllable brake device (BK103) is controlled to be in the brake locking state, the controllable brake device (BK101) and the controllable brake device (BK102) are controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S102) and the sleeve type rotation shaft (AS101);
--When two or all of the controllable brake device (BK101) and the controllable brake device (BK102) and the controllable brake device (BK103) are controlled to be in the brake locking state, the relations between the rotation shaft (S101), the rotation shaft (SI02) and the sleeve type rotation shaft (AS101) are all in the brake locking state.

The interactive operations of corresponding function performed by the mentioned dual-drive electric machine (EM100) include receiving the driving control of externally inputted electric energy, operating as the motor function for individually driving the load, or working with the externally inputted rotation kinetic energy for driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

The dual-drive electric machine having controllable epicycle gear set can be applied to various load devices which require mechanical output for driving, such as a ground vehicle, rail vehicle, agriculture machineries or agriculture vehicles, excavator, dozer, construction vehicles, transport vehicle, garbage truck, crane, hoisting machine, jack, forklift, water or underwater boat, aircraft, industrial machineries, tool machine, power device, hand-operated tool, robot or mechanical arm, gardening power tool, domestic electric equipment;

According to the dual-drive electric machine having controllable epicycle gear set of the present invention, the sources of externally inputted rotary kinetic energy include an inner combustion engine, an outer combustion engine, a Sterling engine, a steam engine, electric engine, hydraulic engine, pneumatic engine, wind-driven blade device, flow-driven blade device, vapor-driven blade device, human or animal forces.

An inner rotation part of electric machine (EM101) of the dual-drive electric machine (EM100) is combined with a rocker arm (A101) and an epicycle wheel (W103) of an epicycle gear set (EG101) installed in the inner rotation part of electric machine (EM101), and a rotation shaft (S101) connected to an input wheel (W101) is served as an output/input end; a rotation shaft (S102) connected to an output wheel (W102) is served as an output/input end; an outer rotation part of electric machine (EM102) is connected to a sleeve type rotation shaft (AS101), and the sleeve type rotation shaft (AS101) is rotated and sleeved on the rotation shaft (S101) for being served as an output/input end; thereby a part or all of the three output/input ends are respectively connected to an action side of a corresponding controllable brake device, and the other action side of the controllable brake device is connected to a housing (H100); through controlling the controllable brake device to perform brake locking or releasing, the operations of transmission function of connecting transmission or releasing between the rotation shaft (S101) at the output/input end, the rotation shaft (SI02) at the output/input end and the sleeve type rotation shaft (AS101) at the output/input end of the epicycle gear set (EG101) are enabled to be controlled, and the interactive operations between the dual-drive electric machine (EM100) and the output/input ends are also enabled to be controlled.

The structures and embodiments of the dual-drive electric machine having controllable epicycle gear set of the present invention are disclosed as followings:
FIG. 8 is a schematic structural view showing the rotation shaft (S101) being combined with the input wheel (W101) of the epicycle gear set (EG101) for being served as an output/input end, the rocker arm (A101) linked by the epicycle wheel (W103) being combined with the inner rotation part of electric machine (EM101), the outer rotation part of electric machine (EM102) being combined with the sleeve type rotation shaft (AS101), the sleeve type rotation shaft (AS101) rotated and sleeved on the rotation shaft (S101) being served as an output/input end and provided for connecting to an action side of the controllable brake device (BK101) while the other action side of the controllable brake device (BK101) being fixed in the housing (H100), the epicycle gear set (EG101) also being fixed in the housing (H100), and the output wheel (W102) of the epicycle gear set (EG101) being provided for driving the rotation shaft (S102) to be served as an output/input end, according to one embodiment of the present invention.

As show in FIG 8, it mainly consists of:
--Epicycle gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (SI02), the rocker arm (A101), the sleeve type rotation shaft (AS101) and a bearing, as well as installed with a shell for being combined in the housing (H100);
   The speed ratios of the input wheel (W101) and the output wheel (W102) of the mentioned epicycle gear set (EG101) are the same, and the speed ratios between the above two and the epicycle wheel (W103) can be the same or different; or
   The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end being combined with the inner rotation part of electric machine (EM101);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
--The rotation shaft (S101) combined with the input wheel (W101) of the epicycle gear set (EG101) is served as an output/input end, the rocker arm (A101) linked by the epicycle wheel (W103) is combined with the inner rotation part of electric machine (EM101), the outer rotation part of electric machine (EM102) is combined with the sleeve type rotation shaft (AS101), the sleeve type rotation shaft (AS101) rotated and sleeved on the rotation shaft (S101) is served as an output/input end, the sleeve type rotation shaft (AS101) is connected to an action side of the controllable brake device (BK101) while the other action side of the controllable brake device (BK101) is fixed in the housing (H100), the output wheel (W102) of the epicycle gear set (EG101) is provided for driving the rotation shaft (S102) to be served as an output/input end, and the rotation shaft (S101) combined with the input wheel (W101) is also served as an output/input end;

According to the embodiment shown in FIG. 8, the operations include one or more than one of following functions:
--When the controllable brake device (BK101) is controlled to be in the releasing state, and the dual-drive electric machine (EM100) is not operated as the electric machinery function, the transmission relations between the rotation shaft (S101) and the rotation shaft (S102) and the sleeve type rotation shaft (AS 101) are in the releasing state allowing idle rotation;
-- When the controllable brake device (BK101) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state, and the dual-drive electric machine (EM100) is not operated as the electric machinery function, the transmission relation between the rotation shaft (S101) and the rotation shaft (S102) is in a connecting relation allowing for transmission;
--When the controllable brake device (BK101) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the rotation shaft (S101) and the rotation shaft (S102);

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 9 is a schematic structural view showing the rotation shaft (S101) combined with the input wheel (W101) of the epicycle gear set (EG101) being served as an output/input end, the rocker arm (A101) linked by the epicycle wheel (W103) being combined with the inner rotation part of electric machine (EM101), the outer rotation part of electric machine (EM102) being combined with the sleeve type rotation shaft (AS 101), the sleeve type rotation shaft (AS101) rotated and sleeved on the rotation shaft (S101) being served as an output/input end, the output wheel (W102) of the epicycle gear set (EG101) being provided for driving the rotation shaft (SI02) to be served as an output/input end, and the rotation shaft (SI02) being connected to an action side of the controllable brake device (BK102) while the other action side of the controllable brake device (BK102) being fixed in the housing (H100), according to one embodiment of the present invention.

As show in FIG 9, it mainly consists of:
--Epicycle gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (SI02), the rocker arm (A101), the sleeve type rotation shaft (AS101) and a bearing, as well as installed with a shell for being combined in the housing (H100);
   The speed ratios of the input wheel (W101) and the output wheel (W102) of the mentioned epicycle gear set (EG101) are the same, and the speed ratios between the above two and the epicycle wheel (W103) can be the same or different; or
   The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end being combined with the inner rotation part of electric machine (EM101);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM 102) are coaxially rotated, wherein the inner rotation part of electric machine (EM101) is combined with the rocker arm (A101), and the outer rotation part of electric machine (EM102) is combined with the sleeve type rotation shaft (AS101);
--The rotation shaft (S101) combined with the input wheel (W101) of the epicycle gear set (EG101) is served as an output/input end, the rocker arm (A101) linked by the epicycle wheel (W103) is combined with the inner rotation part of electric machine (EM101), the outer rotation part of electric machine (EM102) is combined with the sleeve type rotation shaft (AS101), and the sleeve type rotation shaft (AS101) rotated and sleeved on the rotation shaft (S101) is served as an output/input end;
--The output wheel (W102) of the epicycle gear set (EG101) is provided for driving the rotation shaft (SI02) to be served as an output/input end, and the rotation shaft (SI02) is connected to an action side of the controllable brake device (BK102) while the other action side of the controllable brake device (BK102) is fixed in the housing (H100);
   According to the embodiment shown in FIG. 2, the operations include one or more than one of following functions:
--When the controllable brake device (BK102) is controlled to be in the releasing state, and the dual-drive electric machine (EM100) is not operated as the electric machinery function, the transmission relations between the rotation shaft (S101) and the sleeve type rotation shaft (AS 101) and the rotation shaft (S102) are in the releasing state allowing idle rotation;
-- When the controllable brake device (BK102) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S 101), the rotation shaft (S102) and the sleeve type rotation shaft (AS101);
--When the controllable brake device (BK102) is controlled to be in the brake locking state, and the dual-drive electric machine (EM100) is not operated as the electric machinery function, the transmission relation between the rotation shaft (S101) and the sleeve type rotation shaft (AS101) is in a connecting relation allowing for transmission;
--When the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the rotation shaft (S101) and the sleeve type rotation shaft (AS101);

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 10 is a schematic structural view showing the rotation shaft (S101) being combined with the input wheel (W101) of the epicycle gear set (EG101) and provided for connecting to an action side of the controllable brake device (BK103) while the other action side of the controllable brake device (BK103) being fixed in the housing (H100), the epicycle gear set (EG101) also being fixed in the housing (H100), the epicycle wheel (W103) of the epicycle gear set (EG101) being provided for linking the rocker arm (A101) and combined with the inner rotation part of electric machine (EM101), the outer rotation part of electric machine (EM102) being connected to the sleeve type rotation shaft (AS101), the sleeve type rotation shaft (AS101) rotated and sleeved on the rotation shaft (S101) being served as an output/input end, and the output wheel (W102) of the epicycle gear set (EG101) being provided for driving the rotation shaft (S102) to be served as an output/input end, according to one embodiment of the present invention.

As show in FIG 10, it mainly consists of:
--Epicycle gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (SI02), the rocker arm (A101), the sleeve type rotation shaft (AS101) and a bearing, as well as installed with a shell for being combined in the housing (H100);
   The speed ratios of the input wheel (W101) and the output wheel (W102) of the mentioned epicycle gear set (EG101) are the same, and the speed ratios between the above two and the epicycle wheel (W103) can be the same or different; or
   The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end being combined with the inner rotation part of electric machine (EM101);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
--The rotation shaft (S101) combined with the input wheel (W101) of the epicycle gear set (EG101) is served as an output/input end and provided for connecting to an action side of the controllable brake device (BK103) while the other action side of the controllable brake device (BK103) is fixed in the housing (H100);
--The epicycle wheel (W103) of the epicycle gear set (EG101) is provided for linking the rocker arm (A101) and combined with the inner rotation part of electric machine (EM101), the outer rotation part of electric machine (EM102) is connected to the sleeve type rotation shaft (AS101), the sleeve type rotation shaft (AS101) rotated and sleeved with the rotation shaft (S101) is served as an output/input end, the output wheel (W102) of the epicycle gear set (EG101) is provided for driving the rotation shaft (S102) to be served as an output/input end, and the rotation shaft (S101) combined with the input wheel (W101) is also served as an output/input end;
According to the embodiment shown in FIG. 10, the operations include one or more than one of following functions:
--When the controllable brake device (BK103) is controlled to be in the releasing state, and the dual-drive electric machine (EM100) is not operated as the electric machinery function, the transmission relation between the rotation shaft (S101) and the sleeve type rotation shaft (AS101) and the rotation shaft (S102) are in the releasing state allowing idle rotation;
-- When the controllable brake device (BK103) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK103) is controlled to be in the brake locking state, and the dual-drive electric machine (EM100) is not operated as the electric machinery function, the transmission relation between the sleeve type rotation shaft (AS101) and the rotation shaft (S102) is in a connecting relation allowing for transmission;
--When the controllable brake device (BK103) is controlled to be in the brake locking state, and the dual-drive electric machine (EM100) is operated as the electric machinery function, between the inner rotation part of electric machine (EM101) and the outer rotation part of electric machine (EM102) is operated as the power generator function or the motor function for performing interactive operations according to the damping of the external load or the externally inputted rotary kinetic energy sustained by the sleeve type rotation shaft (AS101) and the rotation shaft (S102);
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 11 is a schematic structural view showing the controllable brake device (BK102) being further installed between the rotation shaft (SI02) and the housing (H100) as shown in FIG. 8.

As shown in FIG. 11, the rotation shaft (S101) combined with the input wheel (W101) of the epicycle gear set (EG101) is served as an output/input end, the rocker arm (A101) linked by the epicycle wheel (W103) is combined with the inner rotation part of electric machine (EM101), the outer rotation part of electric machine (EM102) is combined with the sleeve type rotation shaft (AS 101), the sleeve type rotation shaft (AS101) rotated and sleeved on the rotation shaft (S101) is served as an output/input end, the sleeve type rotation shaft (AS101) is connected to an action side of the controllable brake device (BK101) while the other action side of the controllable brake device (BK101) is fixed in the housing (H100), the epicycle gear set (EG101) is also fixed in the housing (H100), the output wheel (W102) of the epicycle gear set (EG101) is provided for driving the rotation shaft (S102) to be served as an output/input end, and the rotation shaft (S102) is connected to an action side of the controllable brake device (BK102) while the other action side of the controllable brake device (BK102) is fixed in the housing (H100), which mainly consists of:
--Epicycle gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (SI02), the rocker arm (A101), the sleeve type rotation shaft (AS101) and a bearing, as well as installed with a shell for being combined in the housing (H100);
   The speed ratios of the input wheel (W101) and the output wheel (W102) of the mentioned epicycle gear set (EG101) are the same, and the speed ratios between the above two and the epicycle wheel (W103) can be the same or different; or
   The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end being combined with the inner rotation part of electric machine (EM101);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected the sleeve type rotation shaft (AS101) or the rocker arm (A101), and the other action side is fixed in the housing (H100);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
--The rotation shaft (S101) combined with the input wheel (W101) of the epicycle gear set (EG101) is served as an output/input end, the output wheel (W102) of the epicycle gear set (EG101) combined with the rotation shaft (SI02) is served as an output/input end, the rocker arm (A101) linked by the epicycle wheel (W103) is combined with the inner rotation part of electric machine (EM101), the outer rotation part of electric machine (EM102) is combined with the sleeve type rotation shaft (AS101), the sleeve type rotation shaft (AS101) rotated and sleeved on the rotation shaft (S101) is served as an output/input end, the sleeve type rotation shaft (AS101) is connected to an action side of the controllable brake device (BK101) while the other action side of the controllable brake device (BK101) is fixed in the housing (H100), the output wheel (W102) of the epicycle gear set (EG101) is provided for driving the rotation shaft (SI02) to be served as an output/input end, and the rotation shaft (SI02) is connected to an action side of the controllable brake device (BK102) while the other action side of the controllable brake device (BK102) is fixed in the housing (H100);
According to the embodiment shown in FIG. 11, the operations include one or more than one of following functions:
--When the controllable brake device (BK101) and the controllable brake device (BK102) are both controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
-- When the controllable brake device (BK101) and the controllable brake device (BK102) are both controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state and the controllable brake device (BK102) is controlled to be in the releasing state, and the dual-drive electric machine (EM100) is not operated as the electric machinery function, the transmission relation between the rotation shaft (S101) and the rotation shaft (SI02) is in a connecting relation allowing for transmission;
--When the controllable brake device (BK101) is controlled to be in the brake locking state and the controllable brake device (BK102) is controlled to be in the releasing state, and the dual-drive electric machine (EM100) is operated as the electric machinery function, between the inner rotation part of electric machine (EM101) and the outer rotation part of electric machine (EM102) is operated as the power generator function or the motor function for performing corresponding interactive operations with the damping of the external load or the externally inputted rotary kinetic energy sustained by the rotation shaft (S101) and the rotation shaft (S102);
--When the controllable brake device (BK101) is controlled to be in the releasing state and the controllable brake device (BK102) is controlled to be in the brake locking state, and the dual-drive electric machine (EM100) is not operated as the electric machinery function, the transmission relation between the rotation shaft (S101) and the sleeve type rotation shaft (AS 101) is in a connecting relation allowing for transmission;
--When the controllable brake device (BK101) is controlled to be in the releasing state and the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state;
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 12 is a schematic structural view showing the controllable brake device (BK103) being further installed between the rotation shaft (S101) and the housing (H100) as shown in FIG. 9.

As shown in FIG. 12, the rotation shaft (S101) combined with the input wheel (W101) of the epicycle gear set (EG101) is served as an output/input end and provided for connecting to an action side of the controllable brake device (BK103) while the other action side of the controllable brake device (BK103) is fixed in the housing (H100), the epicycle gear set (EG101) is also fixed in the housing (H100), the epicycle wheel (W103) of the epicycle gear set (EG101) is provided for linking the rocker arm (A101) and combined with the inner rotation part of electric machine (EM101), the outer rotation part of electric machine (EM102) is combined with the sleeve type rotation shaft (AS 101), the sleeve type rotation shaft (AS101) rotated and sleeved on the rotation shaft (S101) is served as an output/input end, the output wheel (W102) of the epicycle gear set (EG101) is provided for driving the rotation shaft (SI02) to be served as an output/input end, and the rotation shaft (SI02) is connected to an action side of the controllable brake device (BK102) while the other action side of the controllable brake device (BK102) is fixed in the housing (H100), which mainly consists of:
--Epicycle gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (SI02), the rocker arm (A101), the sleeve type rotation shaft (AS101) and a bearing, as well as installed with a shell for being combined in the housing (H100);
   The speed ratios of the input wheel (W101) and the output wheel (W102) of the mentioned epicycle gear set (EG101) are the same, and the speed ratios between the above two and the epicycle wheel (W103) can be the same or different; or
The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end being combined with the inner rotation part of electric machine (EM101);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
-- The rotation shaft (S101) combined with the input wheel (W101) of the epicycle gear set (EG101) is served as an output/input end and provided for connecting to an action side of the controllable brake device (BK103) while the other action side of the controllable brake device (BK103) is fixed in the housing (H100); the output wheel (W102) of the epicycle gear set (EG101) is combined with the rotation shaft (SI02) for being served as an output/input end and provided for connecting to an action side of the controllable brake device (BK102) while the other action side of the controllable brake device (BK102) is fixed in the housing (H100), the rocker arm (A101) linked by the epicycle wheel (W103) is combined with the inner rotation part of electric machine (EM101), the outer rotation part of electric machine (EM102) is combined with the sleeve type rotation shaft (AS101), and the sleeve type rotation shaft (AS101) rotated and sleeved on the rotation shaft (S101) is served as an output/input end;
According to the embodiment shown in FIG. 12, the operations include one or more than one of following functions:
--When the controllable brake device (BK102) and the controllable brake device (BK103) are both controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
-- When the controllable brake device (BK102) and the controllable brake device (BK103) are both controlled to be in the releasing state, and the dual-drive electric machine (EM100) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK103) is controlled to be in the brake locking state and the controllable brake device (BK102) is controlled to be in the releasing state, and the dual-drive electric machine (EM100) is not operated as the electric machinery function, the transmission relation between the sleeve type rotation shaft (AS101) and the rotation shaft (S102) is in a connecting relation allowing for transmission;
--When the controllable brake device (BK103) is controlled to be in the brake locking state and the controllable brake device (BK102) is controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the sleeve type rotation shaft (AS101) and the rotation shaft (S102);
--When the controllable brake device (BK103) is controlled to be in the releasing state and the controllable brake device (BK102) is controlled to be in the brake locking state, and the dual-drive electric machine (EM100) is not operated as the electric machinery function, the transmission relation between the rotation shaft (S101) and the sleeve type rotation shaft (AS 101) is in a connecting relation allowing for transmission;
--When the controllable brake device (BK103) is controlled to be in the releasing state and the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK101) and the controllable brake device (BK102) are both controlled to be in the brake locking state, the relations between the rotation shaft (S101), the rotation shaft (SI02) and the sleeve type rotation shaft (AS101) are all in the brake locking state;
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 13 is a schematic structural view showing the controllable brake device (BK101) being further installed between the sleeve type rotation shaft (AS101) and the housing (H100) as shown in FIG. 10.

As shown in FIG. 13, the rotation shaft (S101) combined with the input wheel (W101) of the epicycle gear set (EG101) is served as an output/input end and provided for connecting to an action side of the controllable brake device (BK103) while the other action side of the controllable brake device (BK103) is fixed in the housing (H100), the epicycle wheel (W103) of the epicycle gear set (EG101) is provided for linking the rocker arm (A101) and combined with the inner rotation part of electric machine (EM101), the outer rotation part of electric machine (EM102) is connected to the sleeve type rotation shaft (AS101), the sleeve type rotation shaft (AS101) is rotated and sleeved on the rotation shaft (S101) for being served as an output/input end, the sleeve type rotation shaft (AS 101) is connected to an action side of the controllable brake device (BK101) while the other action side of the controllable brake device (BK101) is fixed in the housing (H100), the epicycle gear set (EG101) also is fixed in the housing (H100), and the output wheel (W102) of the epicycle gear set (EG101) is provided for driving the rotation shaft (SI02) to be served as an output/input end, which mainly consists of:
--Epicycle gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (SI02), the rocker arm (A101), the sleeve type rotation shaft (AS101) and a bearing, as well as installed with a shell for being combined in the housing (H100);
   The speed ratios of the input wheel (W101) and the output wheel (W102) of the mentioned epicycle gear set (EG101) are the same, and the speed ratios between the above two and the epicycle wheel (W103) can be the same or different; or
   The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end being combined with the inner rotation part of electric machine (EM101);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
--The rotation shaft (S101) combined with the input wheel (W101) of the epicycle gear set (EG101) is served as an output/input end and provided for connecting to an action side of the controllable brake device (BK103) while the other action side of the controllable brake device (BK103) is fixed in the housing (H100);
--The epicycle wheel (W103) of the epicycle gear set (EG101) is provided for linking the rocker arm (A101) and combined with the inner rotation part of electric machine (EM101), the outer rotation part of electric machine (EM102) is connected to the sleeve type rotation shaft (AS101), the sleeve type rotation shaft (AS101) rotated and sleeved on the rotation shaft (S101) is served as an output/input end, the sleeve type rotation shaft (AS101) is connected to an action side of the controllable brake device (BK101) while the other action side of the controllable brake device (BK101) is fixed in the housing (H100), and the output wheel (W102) of the epicycle gear set (EG101) is provided for driving the rotation shaft (S102) to be served as an output/input end;
According to the embodiment shown in FIG. 13, the operations include one or more than one of following functions:
--When the controllable brake device (BK101) and the controllable brake device (BK103) are both controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
-- When the controllable brake device (BK101) and the controllable brake device (BK103) are both controlled to be in the releasing state, and the dual-drive electric machine (EM100) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state and the controllable brake device (BK103) is controlled to be in the releasing state, and the dual-drive electric machine (EM100) is not operated as the electric machinery function, the transmission relation between the rotation shaft (S101) and the rotation shaft (S102) is in a connecting relation allowing for transmission;
--When the controllable brake device (BK101) is controlled to be in the brake locking state and the controllable brake device (BK103) is controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and rotation shaft (S102);
--When the controllable brake device (BK101) is controlled to be in the releasing state and the controllable brake device (BK103) is controlled to be in the brake locking state, and the dual-drive electric machine (EM100) is not operated as the electric machinery function, the transmission relation between the rotation shaft (SI02) and the sleeve type rotation shaft (AS 101) is in a connecting relation allowing for transmission;
--When the controllable brake device (BK101) is controlled to be in the releasing state and the controllable brake device (BK103) is controlled to be in the brake locking state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S102) and the sleeve type rotation shaft (AS101);
--When the controllable brake device (BK101) and the controllable brake device (BK102) are both controlled to be in the brake locking state, the relations between the rotation shaft (S101), the rotation shaft (SI02) and the sleeve type rotation shaft (AS101) are all in the brake locking state.

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 14 is a schematic structural view showing the rotation shaft (S101) combined with the input wheel (W101) of the epicycle gear set (EG101) being served as an output/input end and provided for connecting to an action side of the controllable brake device (BK103) while the other action side of the controllable brake device (BK103) being fixed in the housing (H100), the epicycle wheel (W103) of the epicycle gear set (EG101) being provided for linking the rocker arm (A101) and combined with the inner rotation part of electric machine (EM101), the outer rotation part of electric machine (EM102) being connected to the sleeve type rotation shaft (AS101), the sleeve type rotation shaft (AS101) being rotated and sleeved on the rotation shaft (S101) for being served as an output/input end, the sleeve type rotation shaft (AS101) being connected to an action side of the controllable brake device (BK101) while the other action side of the controllable brake device (BK101) being fixed in the housing (H100), the epicycle gear set (EG101) also being fixed in the housing (H100), and the output wheel (W102) of the epicycle gear set (EG101) being provided for driving the rotation shaft (S102) to be served as an output/input end and provided for connecting to an action side of the controllable brake device (BK102) while the other action side of the controllable brake device (BK102) being fixed in the housing (H100), according to one embodiment of the present invention.

As shown in FIG. 14, the rotation shaft (S101) combined with the input wheel (W101) of the epicycle gear set (EG101) is served as an output/input end and provided for connecting to an action side of the controllable brake device (BK103) while the other action side of the controllable brake device (BK103) is fixed in the housing (H100), the epicycle wheel (W103) of the epicycle gear set (EG101) is provided for linking the rocker arm (A101) and combined with the inner rotation part of electric machine (EM101), the outer rotation part of electric machine (EM102) is connected to the sleeve type rotation shaft (AS101), the sleeve type rotation shaft (AS101) rotated and sleeved on the rotation shaft (S101) is served as an output/input end, the sleeve type rotation shaft (AS 101) is connected to an action side of the controllable brake device (BK101) while the other action side of the controllable brake device (BK101) is fixed in the housing (H100), the epicycle gear set (EG101) is also fixed in the housing (H100), the output wheel (W102) of the epicycle gear set (EG101) is provided for driving the rotation shaft (SI02) to be served as an output/input end, and the rotation shaft (S102) is connected to an action side of the controllable brake device (BK102) while the other action side of the controllable brake device (BK102) is fixed in the housing (H100), which mainly consists of:
--Epicycle gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (SI02), the rocker arm (A101), the sleeve type rotation shaft (AS101) and a bearing, as well as installed with a shell for being combined in the housing (H100);
   The speed ratios of the input wheel (W101) and the output wheel (W102) of the mentioned epicycle gear set (EG101) are the same, and the speed ratios between the above two and the epicycle wheel (W103) can be the same or different; or
   The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end being combined with the inner rotation part of electric machine (EM101);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
--The rotation shaft (S101) combined with the input wheel (W101) of the epicycle gear set (EG101) is served as an output/input end and provided for connecting to one action side of the controllable brake device (BK103) while an action side of the controllable brake device (BK103) is fixed in the housing (H100);
--The epicycle wheel (W103) of the epicycle gear set (EG101) is provided for linking the rocker arm (A101) and combined with the inner rotation part of electric machine (EM101), the outer rotation part of electric machine (EM102) is connected to the sleeve type rotation shaft (AS 101), the sleeve type rotation shaft (AS101) rotated and sleeved on the rotation shaft (S101) is served as an output/input end, the sleeve type rotation shaft (AS101) is connected to an action side of the controllable brake device (BK101) while the other action side of the controllable brake device (BK101) is fixed in the housing (H100), the output wheel (W102) of the epicycle gear set (EG101) is provided for driving the rotation shaft (S102) to be served as an output/input end, and the rotation shaft (S102) is connected to an action side of the controllable brake device (BK102) while the other action side of the controllable brake device (BK102) is fixed in the housing (H100);
According to the embodiment shown in FIG. 14, the operations include one or more than one of following functions:
--When the controllable brake device (BK101) and the controllable brake device (BK102) and the controllable brake device (BK103) are all controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
-- When the controllable brake device (BK101) and the controllable brake device (BK102) and the controllable brake device (BK103) are all controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S 101), the rotation shaft (S102) and the sleeve type rotation shaft (AS101);
--When the controllable brake device (BK101) is controlled to be in the brake locking state, the controllable brake device (BK102) and the controllable brake device (BK103) are controlled to be in the releasing state, and the dual-drive electric machine (EM100) is not operated as the electric machinery function, the transmission relation between the rotation shaft (S101) and the rotation shaft (S102) is in a connecting relation allowing for transmission;
--When the controllable brake device (BK101) is controlled to be in the brake locking state, the controllable brake device (BK102) and the controllable brake device (BK103) are controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and rotation shaft (S102);
--When the controllable brake device (BK102) is controlled to be in the brake locking state, the controllable brake device (BK101) and the controllable brake device (BK103) are controlled to be in the releasing state, and the dual-drive electric machine (EM100) is not operated as the electric machinery function, the transmission relation between the rotation shaft (S101) and the sleeve type rotation shaft (AS101) is in a connecting relation allowing for transmission;
--When the controllable brake device (BK102) is controlled to be in the brake locking state, the controllable brake device (BK101) and the controllable brake device (BK103) are controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK103) is controlled to be in the brake locking state, the controllable brake device (BK101) and the controllable brake device (BK102) are controlled to be in the releasing state, and the dual-drive electric machine (EM100) is not operated as the electric machinery function, the transmission relation between the rotation shaft (S102) and the sleeve type rotation shaft (AS101) is in a connecting relation allowing for transmission;
--When the controllable brake device (BK103) is controlled to be in the brake locking state, the controllable brake device (BK101) and the controllable brake device (BK102) are controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S102) and the sleeve type rotation shaft (AS101);
--When two or all of the controllable brake device (BK101) and the controllable brake device (BK102) and the controllable brake device (BK103) are controlled to be in the brake locking state, the relations between the rotation shaft (S101), the rotation shaft (S102) and the sleeve type rotation shaft (AS101) are all in the brake locking state;
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

The dual-drive electric machine installed with epicycle gear type clutch of the present invention can be applied to various load devices which require mechanical output for driving, such as a ground vehicle, rail vehicle, agriculture machineries or agriculture vehicles, excavator, dozer, construction vehicle, transportation vehicle, garbage truck, hoisting machinery, lifting machinery, forklift machinery, water or underwater boat, aircraft, industrial machineries, tool machine, power device, hand-operated tool, robot or mechanical arm, gardening power tool, domestic electric equipment;

According to the dual-drive electric machine installed with epicycle gear type clutch of the present invention, the sources of externally inputted rotary kinetic energy include an inner combustion engine, an outer combustion engine, a Sterling engine, a steam engine, electric engine, hydraulic engine, pneumatic engine, wind-driven blade device, flow-driven blade device, vapor-driven blade device, human or animal forces.

## Claims

1. A dual-drive electric machine in combination with a controllable bevel gear set, in which an inner rotation part (EM101) and an outer rotation part (EM102) of the dual-drive electric machine (EM100) are respectively combined with two of the three output/input ends of an input wheel (W101), an output wheel (W102) and a rocker arm (A101) linked to a wheel (W103) of the bevel gear set (EG101) to perform transmission, and one of three output/input ends unconnected with the dual-drive electric machine (EM100) is served for external output; the inner rotation part (EM101) of the dual-drive electric machine (EM100) is combined with the input wheel (W101) of the bevel gear set (EG101) and to a rotation shaft (S101) which is served as an output/input end, a rotation shaft (S102) combined with the output wheel (W102) is served as an output/input end, and the rocker arm (A101) linked to the wheel (W103) of the bevel gear set (EG101) combined with the outer rotation part of electric machine (EM102) and combined with a sleeve type rotation shaft (AS101) is served as an output/input end, a part of the three output/input ends are respectively connected to an action side of a controllable brake device, and the other action side of the controllable brake device is connected to a housing (H100); through controlling the controllable brake device to perform brake locking or releasing, the operations of transmission function of connecting transmission or releasing between the rotation shaft (S101) at the output/input end, the rotation shaft (S102) at the output/input end and the sleeve type rotation shaft (AS101) at the output/input end of the bevel gear set (EG101) are enabled to be controlled, and the interactive operations between the dual-drive electric machine (EM100) and the output/input ends are also enabled to be controlled.

2. A dual-drive electric machine having a controllable bevel gear set as claimed in claim 1, wherein the rocker arm (A101) linked by the wheel (W103) is combined with the outer rotation part of electric machine (EM102) and combined with the sleeve type rotation shaft (AS101), the sleeve type rotation shaft (AS101) is served as an output/input end and connected to an action side of the controllable brake device (BK101), and the other action side of the controllable brake device (BK101) is fixed in the housing (H100); the bevel gear set (EG101) is also fixed in the housing (H100), and the output wheel (W102) of the bevel gear set (EG101) is provided for driving the rotation shaft (S102) to be served as an output/input end, wherein the electric machine mainly consists of:
--Bevel gear set (EG101): constituted by an input wheel (W101) and an output wheel (W102) and at least an wheel (W103), and including by means of the bevel gears engaging with each other or the bevel friction wheels mutually performing friction transmissions to form the bevel gear set function, and also constituted by the rotation shaft (S101), the rotation shaft (S102), the rocker arm (A101), the sleeve type rotation shaft (AS101) and a bearing, as well as installed with a shell for being combined in the housing (H100);
--Rocker arm (A101): having one end provided for allowing the wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK101): having two controllable action sides for the operations of a brake locking state for engagement or a releasing state for separation;
--Dual-drive electric machine (EM100) installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--A rotation shaft (S101); The operations include one or more than one of following functions:
--When the controllable brake device (BK101) is controlled to be in the releasing state, and the dual-drive electric machine (EM100) is not operated with the electric machinery function, the transmission relations between the rotation shaft (S101) and the rotation shaft (S102) and the sleeve type rotation shaft (AS101) are in the releasing state allowing idle rotation;
-- When the controllable brake device (BK101) is controlled to be in the releasing state, and the dual-drive electric machine (EM100) is operated with the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state, and the dual-drive electric machine (EM100) is not operated with the electric machinery function, the transmission relation between the rotation shaft (S101) and the rotation shaft (S102) is in a connecting relation allowing for transmission;
--When the controllable brake device (BK101) is controlled to be in the brake locking state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the rotation shaft (S102);
The interactive operations of corresponding function performed by the mentioned dual-drive electric machine (EM100) include receiving the driving control of externally inputted electric energy, operating as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

3. A dual-drive electric machine having a controllable bevel gear set as claimed in claim 2, wherein the rotation shaft (S102) is connected to an action side of a controllable brake device (BK102) while the other action side of the controllable brake device (BK102) being fixed in the housing (H100), wherein the electric machine mainly consists of:
--Bevel gear set (EG101): constituted by an input wheel (W101) and an output wheel (W102) and at least a wheel (W103), and including by means of the bevel gears engaging with each other or the bevel friction wheels mutually performing friction transmissions to form the bevel gear set function, and also constituted by the rotation shaft (S101), the rotation shaft (S102), the rocker arm (A101), the sleeve type rotation shaft (AS101) and a bearing, as well as installed with a shell for being combined in the housing (H100);
--Rocker arm (A101): having one end provided for allowing the wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK102): having two controllable action sides for the operations of a brake locking state for engagement or a releasing state for separation;
--Dual-drive electric machine (EM100): installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
rotation shaft (S101) shared by the input wheel (W101) of the bevel gear set (EG101) and the inner rotation part of electric machine (EM101) of the dual-drive electric machine (EM100) is served as an output/input end, the rocker arm (A101) linked by the wheel (W103) is combined with the outer rotation part of electric machine (EM102) and combined with the sleeve type rotation shaft (AS101), and the sleeve type rotation shaft (AS101) is rotated and sleeved on the rotation shaft (S101) for being served as an output/input end;
--The output wheel (W102) of the bevel gear set (EG101) is provided for driving the rotation shaft (S102) to be served as an output/input end; The operations include one or more than one of following functions:
When the controllable brake device (BK102) is controlled to be in the releasing state, and the dual-drive electric machine (EM100) is not operated with the electric machinery function, the transmission relations between the rotation shaft (S101) and the sleeve type rotation shaft (AS101) and the rotation shaft (S102) are in the releasing state allowing idle rotation;
When the controllable brake device (BK102) is controlled to be in the releasing state, and the dual-drive electric machine (EM100) is operated with the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS101);
When the controllable brake device (BK102) is controlled to be in the brake locking state, and the dual-drive electric machine (EM100) is not operated with the electric machinery function, the transmission relation between the rotation shaft (S101) and the sleeve type rotation shaft (AS101) is in a connecting relation allowing for transmission;
When the controllable brake device (BK102) is controlled to be in the brake locking state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
The interactive operations of corresponding function performed by the mentioned dual-drive electric machine (EM100) include:
receiving the driving control of externally inputted electric energy;
operating as the motor function for individually driving the load;
working with the externally inputted rotary kinetic energy for commonly driving the load;
receiving the driving of the externally inputted rotary kinetic energy or the driving of the load inertia kinetic energy for being operated as the power generator function, so as to output the electric energy to drive the external electric load or charge the external electric energy storing device.

4. A dual-drive electric machine having a controllable bevel gear set as claimed in claim 1, wherein the rotation shaft (S101) shared by the input wheel (W101) of the bevel gear set (EG101) and the inner rotation part of electric machine (EM101) of the dual-drive electric machine (EM100) is served as an output/input end for connecting with an action side of the controllable brake device (BK103), and the other action side of the controllable brake device (BK103) being fixed in the housing (H100); the bevel gear set (EG101) is also fixed in the housing (H100), and the wheel (W103) of the bevel gear set (EG101) is provided for linking the rocker arm (A101) and combined with the outer rotation part of electric machine (EM102) and the sleeve type rotation shaft (AS101), and the sleeve type rotation shaft (AS101) is served as an output/input end; the output wheel (W102) of the bevel gear set (EG101) is provided for driving the rotation shaft (S102) to be served as an output/input end, which mainly consists of:
--Bevel gear set (EG101): constituted by an input wheel (W101) and an output wheel (W102) and at least an wheel (W103), and including by means of the bevel gears engaging with each other or the bevel friction wheels mutually performing friction transmissions to form the bevel gear set function, and also constituted by the rotation shaft (S101), the rotation shaft (S102), the rocker arm (A101), the sleeve type rotation shaft (AS101) and a bearing, as well as installed with a shell for being combined in the housing (H100);
--Rocker arm (A101): having one end provided for allowing the wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK103): having two controllable action sides for the operations of a brake locking state for engagement or a releasing state for separation, wherein one of the action sides is connected to the rotation shaft (S101) while the other action side is fixed in the housing (H100);
--Dual-drive electric machine (EM100): having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--The rotation shaft (S101) shared by the input wheel (W101) of the bevel gear set (EG101) and the inner rotation part of electric machine (EM101) of the dual-drive electric machine (EM100) is served as an output/input end for connecting with an action side of the controllable brake device (BK103) while the other action side of the controllable brake device (BK103) is fixed in the housing (H100);
--The wheel (W103) of the bevel gear set (EG101) is provided for linking the rocker arm (A101) and combined with the outer rotation part of electric machine (EM102) and combined with the sleeve type rotation shaft (AS101), and the sleeve type rotation shaft (AS101) is rotated and sleeved on the rotation shaft (S101) for being served as an output/input end, the output wheel (W102) of the bevel gear set (EG101) is provided for driving the rotation shaft (S102) to be served as an output/input end, and the rotation shaft (S101) connected with the input wheel (W101) is also served as an output/input end; The operations include one or more than one of following functions:
--When the controllable brake device (BK103) is controlled to be in the releasing state, and the dual-drive electric machine (EM100) is not operated with the electric machinery function, the transmission relations between the rotation shaft (S101) and the sleeve type rotation shaft (AS101) and the rotation shaft (S102) are in the releasing state allowing idle rotation;
-- When the controllable brake device (BK103) is controlled to be in the releasing state, and the dual-drive electric machine (EM100) is operated with the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK103) is controlled to be in the brake locking state, and the dual-drive electric machine (EM100) is not operated with the electric machinery function, the transmission relation between the sleeve type rotation shaft (AS101) and the rotation shaft (S102) is in a connecting relation allowing for transmission;
--When the controllable brake device (BK103) is controlled to be in the brake locking state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the sleeve type rotation shaft (AS101) and the rotation shaft (S102);
The interactive operations of corresponding function performed by the mentioned dual-drive electric machine (EM100) include receiving the driving control of externally inputted electric energy, operating as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

5. A dual-drive electric machine having a controllable bevel gear set as claimed in claim 1, the rocker arm (A101) linked by the wheel (W103) is combined with the outer rotation part of electric machine (EM102) and combined with the sleeve type rotation shaft (AS101), and the sleeve type rotation shaft (AS101) rotated and sleeved on the rotation shaft (S101) is served as an output/input end, the sleeve type rotation shaft (AS101) is connected with an action side of the controllable brake device (BK101), and the other action side of the controllable brake device (BK101) is fixed in the housing (H100), the bevel gear set (EG101) is also fixed in the housing (H100), the output wheel (W102) of the bevel gear set (EG101) is provided for driving the rotation shaft (S102) to be served as an output/input end, and the rotation shaft (S102) is connected to an action side of the controllable brake device (BK102), and the other action side of the controllable brake device (BK102) is fixed in the housing (H100), which mainly consists of:
--Bevel gear set (EG101): constituted by an input wheel (W101) and an output wheel (W102) and at least a wheel (W103), and including by means of the bevel gears engaging with each other or the bevel friction wheels mutually performing friction transmissions to form the bevel gear set function, and also constituted by the rotation shaft (S101), the rotation shaft (S102), the rocker arm (A101), the sleeve type rotation shaft (AS101) and a bearing, as well as installed with a shell for being combined in the housing (H100);
--Rocker arm (A101): having one end provided for allowing the wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK101): having two controllable action sides for the operations of a brake locking state for engagement or a releasing state for separation, wherein one of the action sides is connected to the sleeve type rotation shaft (AS101) or the rocker arm (A101) while the other action side is fixed in the housing (H100);
--Controllable brake device (BK102): having two controllable action sides for the operations of a brake locking state for engagement or a releasing state for separation, wherein one of the action sides is connected to the rotation shaft (S102) while the other action side is fixed in the housing (H100);
--Dual-drive electric machine (EM100): having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--The rotation shaft (S101) shared by the input wheel (W101) of the bevel gear set (EG101) and the inner rotation part of electric machine (EM101) of the dual-drive electric machine (EM100) is served as an output/input end, the output wheel (W102) of the bevel gear set (EG101) combined with the rotation shaft (S102) is served as an output/input end, the rocker arm (A101) linked by the wheel (W103) is combined with the outer rotation part of electric machine (EM102) and combined with the sleeve type rotation shaft (AS101), and the sleeve type rotation shaft (AS101) rotated and sleeved on the rotation shaft (S101) is served as an output/input end, and the sleeve type rotation shaft (AS101) is connected to an action side of the controllable brake device (BK101), and the other action side of the controllable brake device (BK101) is fixed in the housing (H100), and the output wheel (W102) of the bevel gear set (EG101) is provided for driving the rotation shaft (S102) to be served as an output/input end, and the rotation shaft (S102) is connected to an action side of the controllable brake device (BK102) while the other action side of the controllable brake device (BK102) is fixed in the housing (H100);
The operations include one or more than one of following functions:
--When the controllable brake device (BK101) and the controllable brake device (BK102) are both controlled to be in the releasing state, and the dual-drive electric machine (EM100) is not operated with the electric machinery function, the transmission relations between the rotation shaft (S101) and the rotation shaft (S102) and the sleeve type rotation shaft (AS101) are in the releasing state allowing idle rotation;
-- When the controllable brake device (BK101) and the controllable brake device (BK102) are both controlled to be in the releasing state, and the dual-drive electric machine (EM100) is operated with the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state and the controllable brake device (BK102) is controlled to be in the releasing state, and the dual-drive electric machine (EM100) is not operated with the electric machinery function, the transmission relation between the rotation shaft (S101) and the rotation shaft (S102) is in a connecting relation allowing for transmission;
--When the controllable brake device (BK101) is controlled to be in the brake locking state and the controllable brake device (BK102) is controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the rotation shaft (S102);
--When the controllable brake device (BK101) is controlled to be in the releasing state and the controllable brake device (BK102) is controlled to be in the brake locking state, and the dual-drive electric machine (EM100) is not operated with the electric machinery function, the transmission relation between the rotation shaft (S101) and the sleeve type rotation shaft (AS101) is in a connecting relation allowing for transmission;
--When the controllable brake device (BK101) is controlled to be in the releasing state and the controllable brake device (BK102) is controlled to be in the brake locking state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state;
The interactive operations of corresponding function performed by the mentioned dual-drive electric machine (EM100) include receiving the driving control of externally inputted electric energy, operating as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

6. A dual-drive electric machine having a controllable bevel gear set as claimed in claim 1, wherein the rotation shaft (S101) shared by the input wheel (W101) of the bevel gear set (EG101) and the inner rotation part of electric machine (EM101) of the dual-drive electric machine (EM100) is served as an output/input end, and is connected to an action side of the controllable brake device (BK103), and the other action side of the controllable brake device (BK103) is fixed in the housing (H100), and the bevel gear set (EG101) is also fixed in the housing (H100), and the wheel (W103) of the bevel gear set (EG101) is provided for linking the rocker arm (A101) and combined with the outer rotation part of electric machine (EM102) and combined with the sleeve type rotation shaft (AS101), and the sleeve type rotation shaft (AS101) rotated and sleeved on the rotation shaft (S101) is served as an output/input end, and the output wheel (W102) of the bevel gear set (EG101) is provided for driving the rotation shaft (S102) to be served as an output/input end, and the rotation shaft (S102) is connected to an action side of the controllable brake device (BK102) while the other action side of the controllable brake device (BK102) is fixed in the housing (H100), which mainly consists of:
--Bevel gear set (EG101): constituted by an input wheel (W101) and an output wheel (W102) and at least an wheel (W103), and including by means of the bevel gears engaging with each other or the bevel friction wheels mutually performing friction transmissions to form the bevel gear set function, and also constituted by the rotation shaft (S101), the rotation shaft (S102), the rocker arm (A101), the sleeve type rotation shaft (AS101) and a bearing, as well as installed with a shell for being combined in the housing (H100);
--Rocker arm (A101): having one end provided for allowing the wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK102): having two controllable action sides for the operations of a brake locking state for engagement or a releasing state for separation, wherein one of the action sides is connected to the rotation shaft (S102) while the other action side is fixed in the housing (H100);
--Controllable brake device (BK103): having two controllable action sides for the operations of a brake locking state for engagement or a releasing state for separation, wherein one of the action sides is connected to the rotation shaft (S101) while the other action side is fixed in the housing (H100);
--Dual-drive electric machine (EM100): having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
-- The rotation shaft (S101) shared by the input wheel (W101) of the bevel gear set (EG101) and the inner rotation part of electric machine (EM101) of the dual-drive electric machine (EM100) is served as an output/input end, and is connected to an action side of the controllable brake device (BK103), and the other action side of the controllable brake device (BK103) is fixed in the housing (H100); the output wheel (W102) of the bevel gear set (EG101) is combined with the rotation shaft (S102) for being served as an output/input end, and is connected to an action side of the controllable brake device (BK102), and the other action side of the controllable brake device (BK102) is fixed in the housing (H100); the rocker arm (A101) linked by the wheel (W103) is combined with the outer rotation part of electric machine (EM102) and combined with the sleeve type rotation shaft (AS101), and the sleeve type rotation shaft (AS101) rotated and sleeved on the rotation shaft (S101) is served as an output/input end;
The operations include one or more than one of following functions:
--When the controllable brake device (BK102) and the controllable brake device (BK103) are both controlled to be in the releasing state, and the dual-drive electric machine (EM100) is not operated with the electric machinery function, the transmission relations between the rotation shaft (S101) and the rotation shaft (S102) and the sleeve type rotation shaft (AS101) are in the releasing state allowing idle rotation;
-- When the controllable brake device (BK102) and the controllable brake device (BK103) are both controlled to be in the releasing state, and the dual-drive electric machine (EM100) is operated with the electric machinery function, the corresponding interactive operation of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK103) is controlled to be in the brake locking state and the controllable brake device (BK102) is controlled to be in the releasing state, and the dual-drive electric machine (EM100) is not operated with the electric machinery function, the transmission relation between the sleeve type rotation shaft (AS101) and the rotation shaft (S102) is in a connecting relation allowing for transmission;
--When the controllable brake device (BK103) is controlled to be in the brake locking state and the controllable brake device (BK102) is controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function performed, for performing corresponding interactive operations with the damping of external load or the externally inputted rotary kinetic energy sustained by the sleeve type rotation shaft (AS101) and the rotation shaft (S102);
--When the controllable brake device (BK103) is controlled to be in the releasing state and the controllable brake device (BK102) is controlled to be in the brake locking state, and the dual-drive electric machine (EM100) is not operated with the electric machinery function, the transmission relation between the rotation shaft (S101) and the sleeve type rotation shaft (AS101) is in a connecting relation allowing for transmission;
--When the controllable brake device (BK103) is controlled to be in the releasing state and the controllable brake device (BK102) is controlled to be in the brake locking state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state;
The interactive operations of corresponding function performed by the mentioned dual-drive electric machine (EM100) include receiving the driving control of externally inputted electric energy, operating as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

7. A dual-drive electric machine having a controllable bevel gear set as claimed in claim 1, wherein the rotation shaft (S101) shared by the input wheel (W101) of the bevel gear set (EG101) and the inner rotation part of electric machine (EM101) of the dual-drive electric machine (EM100) is served as an output/input end for connecting with an action side of the controllable brake device (BK103), and the other action side of the controllable brake device (BK103) is fixed in the housing (H100); the wheel (W103) of the bevel gear set (EG101) is provided for linking the rocker arm (A101) and combined to the outer rotation part of electric machine (EM102) and combined to the sleeve type rotation shaft (AS101), and the sleeve type rotation shaft (AS101) is rotated and combined on the rotation shaft (S101) for being served as an output/input end, and the sleeve type rotation shaft (AS101) is connected to an action side of the controllable brake device (BK101), and the other action side of the controllable brake device (BK101) is fixed in the housing (H100), and the shell of the bevel gear set (EG101) is also fixed in the housing (H100), and the output wheel (W102) of the bevel gear set (EG101) is provided for driving the rotation shaft (S102) to be served as an output/input end, which mainly consists of:
--Bevel gear set (EG101): constituted by an input wheel (W101) and an output wheel (W102) and at least a wheel (W103), and including by means of the bevel gears engaging with each other or the bevel friction wheels mutually performing friction transmissions to form the bevel gear set function, and also constituted by the rotation shaft (S101), the rotation shaft (S102), the rocker arm (A101), the sleeve type rotation shaft (AS101) and a bearing, as well as installed with a shell for being combined in the housing (H100);
--Rocker arm (A101): having one end provided for allowing the wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK101): having two controllable action sides for the operations of a brake locking state for engagement or a releasing state for separation, wherein one of the action sides is connected to the sleeve type rotation shaft (AS101) or the rocker arm (A101) while the other action side is fixed in the housing (H100);
--Controllable brake device (BK103): having two controllable action sides for the operations of a brake locking state for engagement or a releasing state for separation, wherein one of the action sides is connected to the rotation shaft (S101) while the other action side is fixed in the housing (H100);
--Dual-drive electric machine (EM100): having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--The rotation shaft (S101) shared by the input wheel (W101) of the bevel gear set (EG101) and the inner rotation part of electric machine (EM101) of the dual-drive electric machine (EM100) is served as an output/input end, and is served for connecting to an action side of the controllable brake device (BK103) while the other action side of the controllable brake device (BK103) is fixed in the housing (H100);
--The wheel (W103) of the bevel gear set (EG101) is provided for linking the rocker arm (A101) and combined with the outer rotation part of electric machine (EM102) and combined with the sleeve type rotation shaft (AS101), and the sleeve type rotation shaft (AS101) is rotated and sleeved on the rotation shaft (S101) for being served as an output/input end, and the sleeve type rotation shaft (AS101) is connected to an action side of the controllable brake device (BK101) while the other action side of the controllable brake device (BK101) is fixed in the housing (H100), and the output wheel (W102) of the bevel gear set (EG101) is provided for driving the rotation shaft (S102) to be served as an output/input end;
The operations include one or more than one of following functions:
--When the controllable brake device (BK101) and the controllable brake device (BK103) are both controlled to be in the releasing state, and the dual-drive electric machine (EM100) is not operated with the electric machinery function, the transmission relations between the rotation shaft (S101) and the rotation shaft (S102) and the sleeve type rotation shaft (AS101) are in the releasing state allowing idle rotation;
-- When the controllable brake device (BK101) and the controllable brake device (BK103) are both controlled to be in the releasing state, and the dual-drive electric machine (EM100) is operated with the electric machinery function, the corresponding interactive operation of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state and the controllable brake device (BK103) is controlled to be in the releasing state, and the dual-drive electric machine (EM100) is not operated with the electric machinery function, the transmission relation between the rotation shaft (S101) and the rotation shaft (S102) is in a connecting relation allowing for transmission;
--When the controllable brake device (BK101) is controlled to be in the brake locking state and the controllable brake device (BK103) is controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and rotation shaft (S102);
--When the controllable brake device (BK101) is controlled to be in the releasing state and the controllable brake device (BK103) is controlled to be in the brake locking state, and the dual-drive electric machine (EM100) is not operated with the electric machinery function, the transmission relation between the rotation shaft (S102) and the sleeve type rotation shaft (AS101) is in a connecting relation allowing for transmission;
--When the controllable brake device (BK101) is controlled to be in the releasing state and the controllable brake device (BK103) is controlled to be in the brake locking state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S102) and the sleeve type rotation shaft (AS101);
--When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state;
The interactive operations of corresponding function performed by the mentioned dual-drive electric machine (EM100) include receiving the driving control of externally inputted electric energy, operating as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

8. A dual-drive electric machine having a controllable bevel gear set as claimed in claim 2, wherein the rotation shaft (S101) shared by the input wheel (W101) of the bevel gear set (EG101) and the inner rotation part of electric machine (EM101) of the dual-drive electric machine (EM100) is served as an output/input end, and served for connecting to an action side of the controllable brake device (BK103) while the other action side of the controllable brake device (BK103) is fixed in the housing (H100); the wheel (W103) of the bevel gear set (EG101) is provided for linking the rocker arm (A101) and combined with the outer rotation part of electric machine (EM102) and combined with the sleeve type rotation shaft (AS101), and the sleeve type rotation shaft (AS101) is rotated and sleeved on the rotation shaft (S101) for being served as an output/input end, and the sleeve type rotation shaft (AS101) is connected to an action side of the controllable brake device (BK101) while the other action side of the controllable brake device (BK101) is fixed in the housing (H100); the bevel gear set (EG101) is also fixed in the housing (H100), and the output wheel (W102) of the bevel gear set (EG101) being provided for driving the rotation shaft (S102) to be served as an output/input end, and the rotation shaft (S102) is connected to an action side of the controllable brake device (BK102) while the other action side of the controllable brake device (BK102) is fixed in the housing (H100), which mainly consists of:
--Bevel gear set (EG101): constituted by an input wheel (W101) and an output wheel (W102) and at least a wheel (W103), and including by means of the bevel gears engaging with each other or the bevel friction wheels mutually performing friction transmissions to form the bevel gear set function, and also constituted by the rotation shaft (S101), the rotation shaft (S102), the rocker arm (A101), the sleeve type rotation shaft (AS101) and a bearing, as well as installed with a shell for being combined in the housing (H100);
--Rocker arm (A101): having one end provided for allowing the wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK101): having two controllable action sides for the operations of a brake locking state for engagement or a releasing state for separation, wherein one of the action sides is connected to the sleeve type rotation shaft (AS101) or the rocker arm (A101) while the other action side is fixed in the housing (H100);
--Controllable brake device (BK102): having two controllable action sides for the operations of a brake locking state for engagement or a releasing state for separation, wherein one of the action sides is connected to the rotation shaft (S102) while the other action side is fixed in the housing (H100);
--Controllable brake device (BK103): having two controllable action sides for the operations of a brake locking state for engagement or a releasing state for separation, wherein one of the action sides is connected to the rotation shaft (S101) while the other action side is fixed in the housing (H100);
--Dual-drive electric machine (EM100): constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--The rotation shaft (S101) shared by the input wheel (W101) of the bevel gear set (EG101) and the inner rotation part of electric machine (EM101) of the dual-drive electric machine (EM100) is served as an output/input end, and is served for connecting to an action side of the controllable brake device (BK103) while the other action side of the controllable brake device (BK103) is fixed in the housing (H100);
--The wheel (W103) of the bevel gear set (EG101) is provided for linking the rocker arm (A101) and combined with the outer rotation part of electric machine (EM102) and combined with the sleeve type rotation shaft (AS101), and the sleeve type rotation shaft (AS101) rotated and sleeved on the rotation shaft (S101) is served as an output/input end, and the sleeve type rotation shaft (AS101) is connected to an action side of the controllable brake device (BK101) while the other action side of the controllable brake device (BK101) is fixed in the housing (H100); the output wheel (W102) of the bevel gear set (EG101) is provided for driving the rotation shaft (S102) to be served as an output/input end, and the rotation shaft (S102) is connected to an action side of the controllable brake device (BK102) while the other action side of the controllable brake device (BK102) is fixed in the housing (H100)
The operations include one or more than one of following functions:
--When the controllable brake device (BK101) and the controllable brake device (BK102) and the controllable brake device (BK103) are all controlled to be in the releasing state, and the dual-drive electric machine (EM100) is not operated with the electric machinery function, the transmission relations between the rotation shaft (S101) and the rotation shaft (S102) and the sleeve type rotation shaft (AS101) are in the releasing state allowing idle rotation;
-- When the controllable brake device (BK101) and the controllable brake device (BK102) and the controllable brake device (BK103) are all controlled to be in the releasing state, and the dual-drive electric machine (EM100) is operated with the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state, the controllable brake device (BK102) and the controllable brake device (BK103) are controlled to be in the releasing state, and the dual-drive electric machine (EM100) is not operated with the electric machinery function, the transmission relation between the rotation shaft (S101) and the rotation shaft (S102) is in a connecting relation allowing for transmission;
--When the controllable brake device (BK101) is controlled to be in the brake locking state, the controllable brake device (BK102) and the controllable brake device (BK103) are controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing correspondingly interactive operations with the damping of external load or the externally inputted rotary kinetic energy sustained by the rotation shaft (S101) and the rotation shaft (S102);
--When the controllable brake device (BK102) is controlled to be in the brake locking state, the controllable brake device (BK101) and the controllable brake device (BK103) are controlled to be in the releasing state, and the dual-drive electric machine (EM100) is not operated with the electric machinery function, the transmission relation between the rotation shaft (S101) and the sleeve type rotation shaft (AS101) is in a connecting relation allowing for transmission;
--When the controllable brake device (BK102) is controlled to be in the brake locking state, the controllable brake device (BK101) and the controllable brake device (BK103) are controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK103) is controlled to be in the brake locking state, the controllable brake device (BK101) and the controllable brake device (BK102) are controlled to be in the releasing state, and the dual-drive electric machine (EM100) is not operated with the electric machinery function, the transmission relation between the rotation shaft (S102) and the sleeve type rotation shaft (AS101) is in a connecting relation allowing for transmission;
--When the controllable brake device (BK103) is controlled to be in the brake locking state, the controllable brake device (BK101) and the controllable brake device (BK102) are controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S102) and the sleeve type rotation shaft (AS101);
--When two or all of the controllable brake device (BK101) and the controllable brake device (BK102) and the controllable brake device (BK103) are controlled to be in the brake locking state, the relations between the rotation shaft (S101), the rotation shaft (S102) and the sleeve type rotation shaft (AS101) are all in the brake locking state;
The interactive operations of corresponding function performed by the mentioned dual-drive electric machine (EM100) include receiving the driving control of externally inputted electric energy, operating as the motor function for individually driving the load, or working with the externally inputted rotation kinetic energy for driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

## Patentansprüche

1. Elektrische Maschine mit Doppelantrieb in Verbindung mit steuerbarem Kegelradsatz, in dem ein inneres Drehbauteil (EM101) und ein äußeres Drehbauteil (EM102) der elektrischen Maschine (EM100) mit Doppelantrieb jeweils mit zwei der drei Ausgabe-/Eingabeenden von einem Eingaberad (W101), einem Ausgaberad (W102) und einem Kipphebel (A101), der mit einem Rad (W103) des Kegelradsatzes (EG101) zum Ausführen einer Übersetzung verknüpft ist, verbunden sind, und wobei eines von drei Ausgabe-/Eingabeenden nicht an die elektrische Maschine (EM100) mit Doppelantrieb angeschlossenen ist und einer externen Ausgabe dient; wobei das innere Drehbauteil (EM101) der elektrischen Maschine (EM100) mit Doppelantrieb mit dem Eingaberad (W101) des Kegelradsatzes (EG101) und mit einer Welle (S101), die als Ausgabe-/Eingabeende dient, verbunden ist, wobei eine Welle (S102), die mit dem Ausgaberad (W102) verbunden ist, als Ausgabe-/Eingabeende dient, und wobei der mit dem Rad (W103) des Kegelradsatzes (EG101) verbundene Kipphebel (A101) in Verbindung mit dem äußeren Drehbauteil der elektrischen Maschine (EM102) und in Verbindung mit einer Hohlwelle (AS101) als Ausgabe-/Eingabeende dient, wobei ein Teil der drei Ausgabe-/Eingabeenden jeweils an eine aktive Seite einer steuerbaren Bremsvorrichtung angeschlossen ist, und wobei die andere aktive Seite der steuerbaren Bremsvorrichtung an ein Gehäuse (H100) angeschlossen ist; wobei mittels Steuern der steuerbaren Bremsvorrichtung zum Ausführen eines Einrastens oder Lösens einer Bremse ein Steuern der Betätigung der Übersetzungsfunktion des Einkoppelns oder Lösens der Übersetzung zwischen der Welle (S101) am Ausgabe-/Eingabeende, der Welle (S102) am Ausgabe-/Eingabeende und der Hohlwelle (AS101) am Ausgabe-/Eingabeende des Kegelradsatzes (EG101) ermöglicht wird, und wobei ein Steuern der interaktiven Betätigung der elektrischen Maschine (EM100) mit Doppelantrieb und den Ausgabe-/Eingabeenden ebenfalls ermöglicht wird.

2. Elektrische Maschine mit Doppelantrieb mit einem steuerbaren Kegelradsatz gemäß Anspruch 1, wobei der mittels des Rades (W103) verbundene Kipphebel (A101) mit dem äußeren Drehbauteil der elektrischen Maschine (EM102) und mit der Hohlwelle (AS101) verbunden ist, wobei die Hohlwelle (AS101) als Ausgabe-/Eingabeende dient und an eine aktive Seite der steuerbaren Bremsvorrichtung (BK101) angeschlossen ist und wobei die andere aktive Seite der steuerbaren Bremsvorrichtung (BK101) im Gehäuse (H100) befestigt ist; wobei der Kegelradsatz (EG101) ebenfalls im Gehäuse (H100) befestigt ist, und wobei das Ausgaberad (W102) des Kegelradsatzes (EG101) dazu vorgesehen ist, die als Ausgabe-/Eingabeende dienende Welle (S102) anzutreiben, wobei die elektrische Maschine hauptsächlich aus Folgendem besteht:
- Kegelradsatz (EG101): gebildet durch ein Eingaberad (W101) und ein Ausgaberad (W102) und mindestens ein Rad (W103), und beinhaltend, in Form der ineinandergreifenden Kegelräder oder der Ritzelreibungsräder, ein gegenseitiges Erzeugen von Reibungsübersetzungen, um die Kegelradsatzfunktion zu bilden, und ebenfalls gebildet durch die Welle (S101), die Welle (S102), den Kipphebel (A101), die Hohlwelle (AS101) und ein Lager, sowie zusammen eingebaut mit einer Hülle, um sie im Gehäuse (H100) zu verbinden;
- Kipphebel (A101): mit einem Ende, das dazu vorgesehen ist, dem Rad (W103) ein Drehen und Verbinden zu ermöglichen, und wobei das sich axial in Richtung der Welle (S101) erstreckende andere Ende für ein Verbinden mit dem äußeren Drehbauteil der elektrischen Maschine (EM102) und mit der Hohlwelle (AS101) vorgesehen ist, und wobei die Hohlwelle (AS101) auf die Welle (S101) und/oder die Welle (S102) aufgesteckt ist und sich darauf drehen kann;
- steuerbarer Bremsvorrichtung (BK101): mit zwei steuerbaren aktiven Seiten zum Betätigen eines Bremseneinrastzustands zum Ineinandergreifen oder eines Lösezustands zum Trennen;
- elektrischer Maschine (EM100) mit Doppelantrieb, bei der Endabdeckungen, Lager und zugehörige elektrische Leitungsvorrichtungen angebracht sind, um elektrische Energie zuzuführen, wobei das innere Drehbauteil der elektrischen Maschine (EM101) und das äußere Drehbauteil der elektrischen Maschine (EM102) koaxial gedreht werden, wobei das innere Drehbauteil der elektrischen Maschine (EM101) mit der Welle (S101) verbunden ist, und wobei das äußere Drehbauteil der elektrischen Maschine (EM102) mit dem Kipphebel (A101) verbunden ist;
- Welle (S101); Der Betrieb umfasst eine oder mehrere der folgenden Funktionen:
- wenn die steuerbare Bremsvorrichtung (BK101) so gesteuert wird, dass sie sich im Lösezustand befindet, und die elektrische Maschine (EM100) mit Doppelantrieb nicht in der Funktion als elektrische Maschine betrieben wird, befindet sich die Übersetzungsbeziehung zwischen der Welle (S101) und der Welle (S102) und der Hohlwelle (AS101) im Lösezustand und ermöglicht ein Drehen im Leerlauf;
- wenn die steuerbare Bremsvorrichtung (BK101) so gesteuert wird, dass sie sich im Lösezustand befindet, und die elektrische Maschine (EM100) in der Funktion als elektrische Maschine betrieben wird, werden die entsprechenden interaktiven Betriebe der Stromerzeugungsfunktion oder der Motorfunktion entsprechend zwischen dem inneren Drehbauteil der elektrischen Maschine (EM101) und dem äußeren Drehbauteil der elektrischen Maschine (EM102) ausgeführt, gemäß dem Dämpfen einer externen Last oder des Drehmoments, der Drehgeschwindigkeit und der Drehrichtung der von der Welle (S101) aufgenommenen extern hinzugefügten kinetischen Drehenergie, der Welle (S102) und der Hohlwelle (AS101);
- wenn die steuerbare Bremsvorrichtung (BK101) so gesteuert wird, dass sie sich im Bremseneinrastzustand befindet, und die elektrische Maschine (EM100) mit Doppelantrieb nicht in der Funktion als elektrische Maschine betrieben wird, ist die Übersetzungsbeziehung zwischen der Welle (S101) und der Welle (S102) eine Kontaktbeziehung und ermöglicht eine Übersetzung;
- wenn die steuerbare Bremsvorrichtung (BK101) so gesteuert wird, dass sie sich im Bremseneinrastzustand befindet, und die elektrische Maschine (EM100) mit Doppelantrieb in der Funktion als elektrische Maschine betrieben wird, wird zwischen dem inneren Drehbauteil der elektrischen Maschine (EM101) und dem äußeren Drehbauteil der elektrischen Maschine (EM102) die Stromerzeugungsfunktion oder Motorfunktion betrieben, um entsprechenden interaktiven Betrieb mit der Dämpfung externer Last oder der von der Welle (S101) und der Welle (S102) aufgenommenen extern hinzugefügten kinetischen Drehenergie zu leisten.
Der interaktive Betrieb der von der elektrischen Maschine (EM100) mit Doppelantrieb ausgeführten entsprechenden Funktionen umfasst das Aufnehmen der Antriebssteuerung durch extern hinzugefügte elektrische Energie, und den Betrieb in der Motorfunktion für individuellen Antrieb der Last oder das Arbeiten mit der extern hinzugefügten kinetischen Drehenergie für das allgemeine Antreiben der Last.
Der interaktive Betrieb der von der elektrischen Maschine (EM100) mit Doppelantrieb ausgeführten entsprechenden Funktionen umfasst das Aufnehmen des Antriebs der extern hinzugefügten kinetischen Drehenergie oder des Antriebs der kinetischen Lastträgheitsenergie für einen Betrieb in der Stromerzeugungsfunktion, um die elektrische Energie für ein Antreiben der externen elektrischen Last auszugeben oder um die externe elektrische Energiespeichervorrichtung aufzuladen.

3. Elektrische Maschine mit Doppelantrieb mit einem steuerbaren Kegelradsatz gemäß Anspruch 2, wobei die Welle (S102) an eine aktive Seite einer steuerbaren Bremsvorrichtung (BK102) angeschlossen ist, während die andere aktive Seite der steuerbaren Bremsvorrichtung (BK102) im Gehäuse (H100) befestigt ist, wobei die elektrische Maschine hauptsächlich aus Folgendem besteht:
- Kegelradsatz (EG101): gebildet durch ein Eingaberad (W101) und ein Ausgaberad (W102) und mindestens ein Rad (W103), und beinhaltend, in Form der ineinandergreifenden Kegelräder oder der Ritzelreibungsräder, ein gemeinsames Erzeugen von Reibungsübersetzung, um die Kegelradsatzfunktion zu bilden, und ebenfalls gebildet durch die Welle (S101), die Welle (S102), den Kipphebel (A101), die Hohlwelle (AS101) und ein Lager, sowie zusammen eingebaut mit einer Hülle, um sie im Gehäuse (H100) zu verbinden;
- Kipphebel (A101): mit einem Ende, das dazu vorgesehen ist, dem Rad (W103) ein Drehen und Verbinden zu ermöglichen, und wobei das sich axial in Richtung der Welle (S101) erstreckende andere Ende für ein Verbinden mit dem äußeren Drehbauteil der elektrischen Maschine (EM102) und mit der Hohlwelle (AS101) vorgesehen ist, und wobei die Hohlwelle (AS101) auf die Welle (S101) und/oder die Welle (S102) aufgesteckt ist und sich darauf drehen kann;
- steuerbarer Bremsvorrichtung (BK102): mit zwei steuerbaren aktiven Seiten zum Betätigen eines Bremseneinrastzustands zum Ineinandergreifen oder eines Lösezustands zum Trennen;
- elektrischer Maschine (EM100) mit Doppelantrieb: bei der Endabdeckungen, Lager und zugehörige elektrische Leitungsvorrichtungen angebracht sind, um elektrische Energie zuzuführen, wobei das innere Drehbauteil der elektrischen Maschine (EM101) und das äußere Drehbauteil der elektrischen Maschine (EM102) koaxial gedreht werden, wobei das innere Drehbauteil der elektrischen Maschine (EM101) mit der Welle (S101) verbunden ist, und wobei das äußere Drehbauteil der elektrischen Maschine (EM102) mit dem Kipphebel (A101) verbunden ist;
wobei die gemeinsam vom Eingaberad (W101) des Kegelradsatzes (EG101) und dem inneren Drehbauteil der elektrischen Maschine (EM101) der elektrischen Maschine (EM100) mit Doppelantrieb verwendete Welle (S101) als Ausgabe-/Eingabeende dient, wobei der mittels des Rades (W103) verbundene Kipphebel (A101) mit dem äußeren Drehbauteil der elektrischen Maschine (EM102) und mit der Hohlwelle (AS101) verbunden ist und wobei die Hohlwelle (AS101) auf die Welle (S101) aufgesteckt ist und sich darauf dreht, um als Ausgabe-/Eingabeende zu dienen;
wobei das Ausgaberad (W102) des Kegelradsatzes (EG101) dazu vorgesehen ist, die als Ausgabe-/Eingabeende dienende Welle (S102) anzutreiben; Der Betrieb umfasst eine oder mehrere der folgenden Funktionen:
wenn die steuerbare Bremsvorrichtung (BK102) so gesteuert wird, dass sie sich im Lösezustand befindet, und die elektrische Maschine (EM100) mit Doppelantrieb nicht in der Funktion als elektrische Maschine betrieben wird, befindet sich die Übersetzungsbeziehung zwischen der Welle (S101) und der Hohlwelle (AS101) und der Welle (S102) im Lösezustand und ermöglicht ein Drehen im Leerlauf;
wenn die steuerbare Bremsvorrichtung (BK102) so gesteuert wird, dass sie sich im Lösezustand befindet, und die elektrische Maschine (EM100) in der Funktion als elektrische Maschine betrieben wird, werden die entsprechenden interaktiven Betriebe in der Stromerzeugungsfunktion oder der Motorfunktion entsprechend zwischen dem inneren Drehbauteil der elektrischen Maschine (EM101) und dem äußeren Drehbauteil der elektrischen Maschine (EM102) ausgeführt, gemäß dem Dämpfen einer externen Last oder des Drehmoments, der Drehgeschwindigkeit und der Drehrichtung der von der Welle (S101) aufgenommenen extern hinzugefügten kinetischen Drehenergie, der Welle (S102) und der Hohlwelle (AS101);
wenn die steuerbare Bremsvorrichtung (BK102) so gesteuert wird, dass sie sich im Bremseneinrastzustand befindet, und die elektrische Maschine (EM100) mit Doppelantrieb nicht in der Funktion als elektrische Maschine betrieben wird, ist die Übersetzungsbeziehung zwischen der Welle (S101) und der Hohlwelle (AS101) eine Kontaktbeziehung und ermöglicht eine Übersetzung;
wenn die steuerbare Bremsvorrichtung (BK102) so gesteuert wird, dass sie sich im Bremseneinrastzustand befindet, und die elektrische Maschine (EM100) mit Doppelantrieb in der Funktion als elektrische Maschine betrieben wird, wird zwischen dem inneren Drehbauteil der elektrischen Maschine (EM101) und dem äußeren Drehbauteil der elektrischen Maschine (EM102) die Stromerzeugungsfunktion oder Motorfunktion betrieben, um entsprechenden interaktiven Betrieb mit der Dämpfung externer Last oder der von der Welle (S101) und der Hohlwelle (AS101) aufgenommenen extern hinzugefügten kinetischen Drehenergie zu leisten. Der interaktive Betrieb entsprechender durch die elektrische Maschine (EM100) mit Doppelantrieb ausgeübter Funktionen umfasst:
Aufnehmen der Antriebssteuerung aus extern hinzugefügter elektrischer Energie;
Betreiben als Motorfunktion für das individuelle Antreiben der Last;
Arbeiten mit der extern hinzugefügten kinetischen Drehenergie für allgemeinen Antrieb der Last; Aufnehmen des Antriebs aus der extern hinzugefügten kinetischen Drehenergie oder des Antriebs aus der kinetischen Lastträgheitsenergie für einen Betrieb in der Stromerzeugungsfunktion, um die elektrische Energie für ein Antreiben der externen elektrischen Last auszugeben oder um die externe elektrische Energiespeichervorrichtung aufzuladen.

4. Elektrische Maschine mit Doppelantrieb mit einem steuerbaren Kegelradsatz gemäß Anspruch 1, wobei die gemeinsam vom Eingaberad (W101) des Kegelradsatzes (EG101) und dem inneren Drehbauteil der elektrischen Maschine (EM101) der elektrischen Maschine (EM100) mit Doppelantrieb verwendete Welle (S101) als Ausgabe-/Eingabeende für ein Anschließen an eine aktive Seite der steuerbaren Bremsvorrichtung (BK103) dient und die andere aktive Seite der steuerbaren Bremsvorrichtung (BK103) im Gehäuse (H100) befestigt ist; wobei der Kegelradsatz (EG101) ebenfalls im Gehäuse (H100) befestigt ist, wobei das Rad (W103) des Kegelradsatzes (EG101) dazu vorgesehen ist, den Kipphebel (A101) zu verbinden und zusammen mit dem äußeren Drehbauteil der elektrischen Maschine (EM102) und der Hohlwelle (AS101) verbunden ist, und wobei die Hohlwelle (AS101) als Ausgabe-/Eingabeende dient; wobei das Ausgaberad (W102) des Kegelradsatzes (EG101) dazu vorgesehen ist, die als Ausgabe-/Eingabeende dienende Welle (S102) anzutreiben, die hauptsächlich aus Folgenden besteht:
- Kegelradsatz (EG101): gebildet durch ein Eingaberad (W101) und ein Ausgaberad (W102) und mindestens ein Rad (W103), und beinhaltend, in Form der ineinandergreifenden Kegelräder oder der Ritzelreibungsräder, ein gemeinsames Erzeugen von Reibungsübersetzung, um die Kegelradsatzfunktion zu bilden, und ebenfalls gebildet durch die Welle (S101), die Welle (S102), den Kipphebel (A101), die Hohlwelle (AS101) und ein Lager, sowie zusammen eingebaut mit einer Hülle, um sie im Gehäuse (H100) zu verbinden;
- Kipphebel (A101): mit einem Ende, das dazu vorgesehen ist, dem Rad (W103) ein Drehen und ein Verbinden zu ermöglichen, und wobei das sich axial in Richtung der Welle (S101) erstreckende andere Ende für ein Verbinden mit dem äußeren Drehbauteil der elektrischen Maschine (EM102) und mit der Hohlwelle (AS101) vorgesehen ist, und wobei die Hohlwelle (AS101) auf die Welle (S101) und/oder die Welle (S102) aufgesteckt ist und sich darauf drehen kann;
- steuerbarer Bremsvorrichtung (BK103): mit zwei steuerbaren aktiven Seiten zum Betätigen eines Bremseneinrastzustands zum Ineinandergreifen oder eines Lösezustands zum Trennen, wobei eine der aktiven Seiten an die Welle (S101) angeschlossen ist, während die andere aktive Seite im Gehäuse (H100) befestigt ist;
- elektrischer Maschine (EM100) mit Doppelantrieb: mit einem inneren Drehbauteil der elektrischen Maschine (EM101) und einem äußeren Drehbauteil der elektrischen Maschine (EM102), bei der Endabdeckungen, Lager und zugehörige elektrische Leitungsvorrichtungen angebracht sind, um elektrische Energie zuzuführen, wobei das innere Drehbauteil der elektrischen Maschine (EM101) und das äußere Drehbauteil der elektrischen Maschine (EM102) koaxial gedreht werden, wobei das innere Drehbauteil der elektrischen Maschine (EM101) mit einer Welle (S101) verbunden ist, und das äußere Drehbauteil der elektrischen Maschine (EM102) mit dem Kipphebel (A101) verbunden ist;
- wobei die gemeinsam vom Eingaberad (W101) des Kegelradsatzes (EG101) und dem inneren Drehbauteil der elektrischen Maschine (EM101) der elektrischen Maschine (EM100) mit Doppelantrieb verwendete Welle (S101) als Ausgabe-/Eingabeende zum Verbinden mit einer aktiven Seite der steuerbaren Bremsvorrichtung (BK103) dient, während die andere aktive Seite der steuerbaren Bremsvorrichtung (BK103) im Gehäuse (H100) befestigt ist;
- wobei das Rad (W103) des Kegelradsatzes (EG101) dazu vorgesehen ist, den Kipphebel (A101) zu verbinden und mit dem äußeren Drehbauteil der elektrischen Maschine (EM102) und der Hohlwelle (AS101) verbunden ist, wobei die Hohlwelle (AS101) auf die Welle (S101) aufgesteckt ist und sich darauf dreht, um als Ausgabe-/Eingabeende zu dienen, wobei das Ausgaberad (W102) des Kegelradsatzes (EG101) dazu vorgesehen ist, die als Ausgabe-/Eingabeende dienende Welle (S102) anzutreiben, und wobei die mit dem Eingaberad (W101) verbundene Welle (S101) ebenfalls als Ausgabe-/Eingabeende dient.
Der Betrieb umfasst eine oder mehrere der folgenden Funktionen:
- wenn die steuerbare Bremsvorrichtung (BK103) so gesteuert wird, dass sie sich im Lösezustand befindet, und die elektrische Maschine (EM100) mit Doppelantrieb nicht in der Funktion als elektrische Maschine betrieben wird, befindet sich die Übersetzungsbeziehung zwischen der Welle (S101) und der Hohlwelle (AS101) und der Welle (S102) im Lösezustand und ermöglicht ein Drehen im Leerlauf;
- wenn die steuerbare Bremsvorrichtung (BK103) so gesteuert wird, dass sie sich im Lösezustand befindet, und die elektrische Maschine (EM100) in der Funktion als elektrische Maschine betrieben wird, werden die entsprechenden interaktiven Betriebe in der Stromerzeugungsfunktion oder der Motorfunktion entsprechend zwischen dem inneren Drehbauteil der elektrischen Maschine (EM101) und dem äußeren Drehbauteil der elektrischen Maschine (EM102) ausgeführt, gemäß dem Dämpfen einer externen Last oder des Drehmoments, der Drehgeschwindigkeit und der Drehrichtung der von der Welle (S101) aufgenommenen extern hinzugefügten kinetischen Drehenergie, der Welle (S102) und der Hohlwelle (AS101);
- wenn die steuerbare Bremsvorrichtung (BK103) so gesteuert wird, dass sie sich im Bremseneinrastzustand befindet, und die elektrische Maschine (EM100) mit Doppelantrieb nicht in der Funktion als elektrische Maschine betrieben wird, ist die Übersetzungsbeziehung zwischen der Hohlwelle (AS101) und der Welle (S102) eine Kontaktbeziehung und ermöglicht eine Übersetzung;
- wenn die steuerbare Bremsvorrichtung (BK103) so gesteuert wird, dass sie sich im Bremseneinrastzustand befindet, und die elektrische Maschine (EM100) mit Doppelantrieb in der Funktion als elektrische Maschine betrieben wird, wird zwischen dem inneren Drehbauteil der elektrischen Maschine (EM101) und dem äußeren Drehbauteil der elektrischen Maschine (EM102) die Stromerzeugungsfunktion oder Motorfunktion betrieben, um entsprechenden interaktiven Betrieb mit der Dämpfung externer Last oder der von der Hohlwelle (AS101) und der Welle (S102) aufgenommenen extern hinzugefügten kinetischen Drehenergie zu leisten.
Der interaktive Betrieb der von der elektrischen Maschine (EM100) mit Doppelantrieb ausgeführten entsprechenden Funktionen umfasst das Aufnehmen der Antriebssteuerung durch extern hinzugefügte elektrische Energie, und den Betrieb in der Motorfunktion für individuellen Antrieb der Last oder das Arbeiten mit der extern hinzugefügten kinetischen Drehenergie für das allgemeine Antreiben der Last.
Der interaktive Betrieb der von der elektrischen Maschine (EM100) mit Doppelantrieb ausgeführten entsprechenden Funktionen umfasst das Aufnehmen des Antriebs der extern hinzugefügten kinetischen Drehenergie oder des Antriebs der kinetischen Lastträgheitsenergie für einen Betrieb in der Stromerzeugungsfunktion, um die elektrische Energie für ein Antreiben der externen elektrischen Last auszugeben oder um die externe elektrische Energiespeichervorrichtung aufzuladen.

5. Elektrische Maschine mit Doppelantrieb mit einem steuerbaren Kegelradsatz gemäß Anspruch 1, wobei der mittels des Rades (W103) verbundene Kipphebel (A101) mit dem äußeren Drehbauteil der elektrischen Maschine (EM102) und mit der Hohlwelle (AS101) verbunden ist, und wobei die auf die Welle (S101) aufgesteckte und sich darauf drehende Hohlwelle (AS101) als Ausgabe-/Eingabeende dient, und wobei die Hohlwelle (AS101) an eine aktive Seite der steuerbaren Bremsvorrichtung (BK101) angeschlossen ist und die andere aktive Seite der steuerbaren Bremsvorrichtung (BK101) im Gehäuse (H100) befestigt ist, und wobei der Kegelradsatz (EG101) ebenfalls im Gehäuse (H100) befestigt ist, und wobei das Ausgaberad (W102) des Kegelradsatzes (EG101) für das Antreiben der als Ausgabe-/Eingabeende dienenden Welle (S102) vorgesehen ist, und wobei die Welle (S102) an eine aktive Seite der steuerbaren Bremsvorrichtung (BK102) angeschlossen ist, und wobei die andere Seite der steuerbaren Bremsvorrichtung (BK102) im Gehäuse (H100) befestigt ist, das hauptsächlich aus Folgendem besteht:
- Kegelradsatz (EG101): gebildet durch ein Eingaberad (W101) und ein Ausgaberad (W102) und mindestens ein Rad (W103), und beinhaltend, in Form der ineinandergreifenden Kegelräder oder der Ritzelreibungsräder, ein gemeinsames Erzeugen von Reibungsübersetzung, um die Kegelradsatzfunktion zu bilden, und ebenfalls gebildet durch die Welle (S101), die Welle (S102), den Kipphebel (A101), die Hohlwelle (AS101) und ein Lager, sowie zusammen eingebaut mit einer Hülle, um sie im Gehäuse (H100) zu verbinden;
- Kipphebel (A101): mit einem Ende, das dazu vorgesehen ist, dem Rad (W103) ein Drehen und Verbinden zu ermöglichen, und wobei das sich axial in Richtung der Welle (S101) erstreckende andere Ende für ein Verbinden mit dem äußeren Drehbauteil der elektrischen Maschine (EM102) und mit der Hohlwelle (AS101) vorgesehen ist, und wobei die Hohlwelle (AS101) auf die Welle (S101) und/oder die Welle (S102) aufgesteckt ist und sich darauf drehen kann;
- steuerbarer Bremsvorrichtung (BK101): mit zwei steuerbaren aktiven Seiten zum Betätigen eines Bremseneinrastzustands zum Ineinandergreifen oder eines Lösezustands zum Trennen, wobei eine der aktiven Seiten an die Hohlwelle (AS101) oder den Kipphebel (A101) angeschlossen ist, während die andere aktive Seite im Gehäuse (H100) befestigt ist;
- steuerbarer Bremsvorrichtung (BK102): mit zwei steuerbaren aktiven Seiten zum Betätigen eines Bremseneinrastzustands zum Ineinandergreifen oder eines Lösezustands zum Trennen, wobei eine der aktiven Seiten an die Welle (S102) angeschlossen ist, während die andere aktive Seite im Gehäuse (H100) befestigt ist;
- elektrischer Maschine (EM100) mit Doppelantrieb: mit einem inneren Drehbauteil der elektrischen Maschine (EM101) und einem äußeren Drehbauteil der elektrischen Maschine (EM102), wobei daran Endabdeckungen, Lager und zugehörige elektrische Leitungsvorrichtungen angebracht sind, um elektrische Energie zuzuführen, wobei das innere Drehbauteil der elektrischen Maschine (EM101) und das äußere Drehbauteil der elektrischen Maschine (EM102) koaxial gedreht werden, und wobei das innere Drehbauteil der elektrischen Maschine (EM101) mit einer Welle (S101) verbunden ist, und das äußere Drehbauteil der elektrischen Maschine (EM102) mit dem Kipphebel (A101) verbunden ist;
- wobei die gemeinsam vom Eingaberad (W101) des Kegelradsatzes (EG101) und dem inneren Drehbauteil der elektrischen Maschine (EM101) der elektrischen Maschine (EM100) mit Doppelantrieb verwendete Welle (S101) als Ausgabe-/Eingabeende dient, wobei das Ausgaberad (W102) des Kegelradsatzes (EG101) zusammen mit der Welle (S102) als Ausgabe-/Eingabeende dient, wobei der mittels des Rades (W103) verbundene Kipphebel (A101) mit dem äußeren Drehbauteil der elektrischen Maschine (EM102) und der Hohlwelle (AS101) verbunden ist, wobei die auf die Welle (S101) aufgesteckte und sich darauf drehende Hohlwelle (AS101) als Ausgabe-/Eingabeende dient, und wobei die Hohlwelle (AS101) an eine aktive Seite der steuerbaren Bremsvorrichtung (BK101) angeschlossen ist und die andere aktive Seite der steuerbaren Bremsvorrichtung (BK101) im Gehäuse (H100) befestigt ist, und wobei das Ausgaberad (W102) des Kegelradsatzes (EG101) zum Antreiben der als Ausgabe-/Eingabeende dienenden Welle (S102) vorgesehen ist, und wobei die Welle (S102) an eine aktive Seite der steuerbaren Bremsvorrichtung (BK102) angeschlossen ist, während die andere aktive Seite der steuerbaren Bremsvorrichtung (BK102) im Gehäuse (H100) befestigt ist;
Der Betrieb umfasst eine oder mehrere der folgenden Funktionen:
- wenn die steuerbare Bremsvorrichtung (BK101) und die steuerbare Bremsvorrichtung (BK102) so gesteuert werden, dass sie sich im Lösezustand befinden, und die elektrische Maschine (EM100) mit Doppelantrieb nicht in der Funktion als elektrische Maschine betrieben wird, befindet sich die Übersetzungsbeziehung zwischen der Welle (S101) und der Welle (S102) und der Hohlwelle (AS101) im Lösezustand und ermöglicht ein Drehen im Leerlauf;
- wenn die steuerbare Bremsvorrichtung (BK101) und die steuerbare Bremsvorrichtung (BK102) so gesteuert werden, dass sie sich im Lösezustand befinden, und die elektrische Maschine (EM100) in der Funktion als elektrische Maschine betrieben wird, werden die entsprechenden interaktiven Betriebe in der Stromerzeugungsfunktion oder der Motorfunktion entsprechend zwischen dem inneren Drehbauteil der elektrischen Maschine (EM101) und dem äußeren Drehbauteil der elektrischen Maschine (EM102) ausgeführt, gemäß dem Dämpfen einer externen Last oder des Drehmoments, der Drehgeschwindigkeit und der Drehrichtung der von der Welle (S101) aufgenommenen extern hinzugefügten kinetischen Drehenergie, der Welle (S102) und der Hohlwelle (AS101);
- wenn die steuerbare Bremsvorrichtung (BK101) so gesteuert wird, dass sie sich im Bremseneinrastzustand befindet, und die steuerbare Bremsvorrichtung (BK102) so gesteuert wird, dass sie sich im Lösezustand befindet, und die elektrische Maschine (EM100) mit Doppelantrieb nicht in der Funktion als elektrische Maschine betrieben wird, ist die Übersetzungsbeziehung zwischen der Welle (S101) und der Welle (S102) eine Kontaktbeziehung und ermöglicht eine Übersetzung;
- wenn die steuerbare Bremsvorrichtung (BK101) so gesteuert wird, dass sie sich im Bremseneinrastzustand befindet, und die steuerbare Bremsvorrichtung (BK102) so gesteuert wird, dass sie sich im Lösezustand befindet, und die elektrische Maschine (EM100) mit Doppelantrieb in der Funktion als elektrische Maschine betrieben wird, wird zwischen dem inneren Drehbauteil der elektrischen Maschine (EM101) und dem äußeren Drehbauteil der elektrischen Maschine (EM102) die Stromerzeugungsfunktion oder Motorfunktion betrieben, um entsprechenden interaktiven Betrieb mit der Dämpfung externer Last oder der von der Welle (S101) und der Welle (S102) aufgenommenen extern hinzugefügten kinetischen Drehenergie zu leisten;
- wenn die steuerbare Bremsvorrichtung (BK101) so gesteuert wird, dass sie sich im Lösezustand befindet, und die steuerbare Bremsvorrichtung (BK102) so gesteuert wird, dass sie sich im Bremseneinrastzustand befindet, und die elektrische Maschine (EM100) mit Doppelantrieb nicht in der Funktion als elektrische Maschine betrieben wird, ist die Übersetzungsbeziehung zwischen der Welle (S101) und der Hohlwelle (AS101) eine Kontaktbeziehung und ermöglicht eine Übersetzung;
- wenn die steuerbare Bremsvorrichtung (BK101) so gesteuert wird, dass sie sich im Lösezustand befindet, und die steuerbare Bremsvorrichtung (BK102) so gesteuert wird, dass sie sich im Bremseneinrastzustand befindet, und die elektrische Maschine (EM100) mit Doppelantrieb in der Funktion als elektrische Maschine betrieben wird, wird zwischen dem inneren Drehbauteil der elektrischen Maschine (EM101) und dem äußeren Drehbauteil der elektrischen Maschine (EM102) die Stromerzeugungsfunktion oder Motorfunktion betrieben, um entsprechenden interaktiven Betrieb mit der Dämpfung externer Last oder der von der Welle (S101) und der Hohlwelle (AS101) aufgenommenen extern hinzugefügten kinetischen Drehenergie zu leisten;
- wenn die steuerbare Bremsvorrichtung (BK101) und die steuerbare Bremsvorrichtung (BK102) beide so gesteuert werden, dass sie sich im Bremseneinrastzustand befinden, ist die Beziehung zwischen der Welle (S101), der Welle (S102) und der Hohlwelle (AS101) insgesamt ein Bremseneinrastzustand.
Der interaktive Betrieb der von der elektrischen Maschine (EM100) mit Doppelantrieb ausgeführten entsprechenden Funktionen umfasst das Aufnehmen der Antriebssteuerung durch extern hinzugefügte elektrische Energie, und den Betrieb in der Motorfunktion für individuellen Antrieb der Last oder das Arbeiten mit der extern hinzugefügten kinetischen Drehenergie für das allgemeine Antreiben der Last.
Der interaktive Betrieb der von der elektrischen Maschine (EM100) mit Doppelantrieb ausgeführten entsprechenden Funktionen umfasst das Aufnehmen des Antriebs der extern hinzugefügten kinetischen Drehenergie oder des Antriebs der kinetischen Lastträgheitsenergie für einen Betrieb in der Stromerzeugungsfunktion, um die elektrische Energie für ein Antreiben der externen elektrischen Last auszugeben oder um die externe elektrische Energiespeichervorrichtung aufzuladen.

6. Elektrische Maschine mit Doppelantrieb mit einem steuerbaren Kegelradsatz gemäß Anspruch 1, wobei die vom Eingaberad (W101) des Kegelradsatzes (EG101) und dem inneren Drehbauteil der elektrischen Maschine (EM101) der elektrischen Maschine (EM100) mit Doppelantrieb gemeinsam verwendete Welle (S101) als Ausgabe-/Eingabeende dient und an eine aktive Seite der steuerbaren Bremsvorrichtung (BK103) angeschlossen ist, und wobei die andere aktive Seite der steuerbaren Bremsvorrichtung (BK103) im Gehäuse (H100) befestigt ist, und wobei der Kegelradsatz (EG101) ebenfalls im Gehäuse (H100) befestigt ist, und wobei das Rad (W103) des Kegelradsatzes (EG101) dazu vorgesehen ist, den Kipphebel (A101) zu verbinden und mit dem äußeren Drehbauteil der elektrischen Maschine (EM102) und mit der Hohlwelle (AS101) verbunden ist, und wobei die auf die Welle (S101) aufgesteckte und sich darauf drehende Hohlwelle (AS101) als Ausgabe-/Eingabeende dient, und wobei das Ausgaberad (W102) des Kegelradsatzes (EG101) zum Antreiben der als Ausgabe-/Eingabeende dienenden Welle (S102) vorgesehen ist, und wobei die Welle (S102) an eine aktive Seite der steuerbaren Bremsvorrichtung (BK102) angeschlossen ist, während die andere aktive Seite der steuerbaren Bremsvorrichtung (BK102) im Gehäuse (H100) befestigt ist, das hauptsächlich aus Folgendem besteht:
- Kegelradsatz (EG101): gebildet durch ein Eingaberad (W101) und ein Ausgaberad (W102) und mindestens ein Rad (W103), und beinhaltend, in Form der ineinandergreifenden Kegelräder oder der Ritzelreibungsräder, ein gemeinsames Erzeugen von Reibungsübersetzung, um die Kegelradsatzfunktion zu bilden, und ebenfalls gebildet durch die Welle (S101), die Welle (S102), den Kipphebel (A101), die Hohlwelle (AS101) und ein Lager, sowie zusammen eingebaut mit einer Hülle, um sie im Gehäuse (H100) zu verbinden;
- Kipphebel (A101): mit einem Ende, das dazu vorgesehen ist, dem Rad (W103) ein Drehen und Verbinden zu ermöglichen, und wobei das sich axial in Richtung der Welle (S101) erstreckende andere Ende für ein Verbinden mit dem äußeren Drehbauteil der elektrischen Maschine (EM102) und mit der Hohlwelle (AS101) vorgesehen ist, und wobei die Hohlwelle (AS101) auf die Welle (S101) und/oder die Welle (S102) aufgesteckt ist und sich darauf drehen kann;
- steuerbarer Bremsvorrichtung (BK102): mit zwei steuerbaren aktiven Seiten zum Betätigen eines Bremseneinrastzustands zum Ineinandergreifen oder eines Lösezustands zum Trennen, wobei eine der aktiven Seiten an die Welle (S102) angeschlossen ist, während die andere aktive Seite im Gehäuse (H100) befestigt ist;
- steuerbarer Bremsvorrichtung (BK103): mit zwei steuerbaren aktiven Seiten zum Betätigen eines Bremseneinrastzustands zum Ineinandergreifen oder eines Lösezustands zum Trennen, wobei eine der aktiven Seiten an die Welle (S101) angeschlossen ist, während die andere aktive Seite im Gehäuse (H100) befestigt ist;
- elektrischer Maschine (EM100) mit Doppelantrieb: mit einem inneren Drehbauteil der elektrischen Maschine (EM101) und einem äußeren Drehbauteil der elektrischen Maschine (EM102), wobei daran Endabdeckungen, Lager und zugehörige elektrische Leitungsvorrichtungen angebracht sind, um elektrische Energie zuzuführen, wobei das innere Drehbauteil der elektrischen Maschine (EM101) und das äußere Drehbauteil der elektrischen Maschine (EM102) koaxial gedreht werden, und wobei das innere Drehbauteil der elektrischen Maschine (EM101) mit einer Welle (S101) verbunden ist, und das äußere Drehbauteil der elektrischen Maschine (EM102) mit dem Kipphebel (A101) verbunden ist;
- wobei die gemeinsam vom Eingaberad (W101) des Kegelradsatzes (EG101) und dem inneren Drehbauteil der elektrischen Maschine (EM101) der elektrischen Maschine (EM100) mit Doppelantrieb verwendete Welle (S101) als Ausgabe-/Eingabeende dient und an eine aktive Seite der steuerbaren Bremsvorrichtung (BK103) angeschlossen ist, während die andere aktive Seite der steuerbaren Bremsvorrichtung (BK103) im Gehäuse (H100) befestigt ist; das Ausgaberad (W102) des Kegelradsatzes (EG101) mit der Welle (S102) verbunden ist, um als Ausgabe-/Eingabeende zu dienen, und an eine aktive Seite der steuerbaren Bremsvorrichtung (BK102) angeschlossen ist, und die andere aktive Seite der steuerbaren Bremsvorrichtung (BK102) im Gehäuse (H100) befestigt ist; der mittels des Rades (W103) verbundene Kipphebel (A101) ist mit dem äußeren Drehbauteil der elektrischen Maschine (EM102) und mit der Hohlwelle (AS101) verbunden, wobei die auf die Welle (S101) aufgesteckte und sich darauf drehende Hohlwelle (AS101) als Ausgabe-/Eingabeende dient.
Der Betrieb umfasst eine oder mehrere der folgenden Funktionen:
- wenn die steuerbare Bremsvorrichtung (BK102) und die steuerbare Bremsvorrichtung (BK103) so gesteuert werden, dass sie sich im Lösezustand befinden, und die elektrische Maschine (EM100) mit Doppelantrieb nicht in der Funktion als elektrische Maschine betrieben wird, befindet sich die Übersetzungsbeziehung zwischen der Welle (S101) und der Welle (S102) und der Hohlwelle (AS101) im Lösezustand und ermöglicht ein Drehen im Leerlauf;
- wenn die steuerbare Bremsvorrichtung (BK102) und die steuerbare Bremsvorrichtung (BK103) so gesteuert werden, dass sie sich im Lösezustand befinden, und die elektrische Maschine (EM100) in der Funktion als elektrische Maschine betrieben wird, wird der entsprechende interaktive Betrieb in der Stromerzeugungsfunktion oder der Motorfunktion entsprechend zwischen dem inneren Drehbauteil der elektrischen Maschine (EM101) und dem äußeren Drehbauteil der elektrischen Maschine (EM102) ausgeführt, gemäß dem Dämpfen einer externen Last oder des Drehmoments, der Drehgeschwindigkeit und der Drehrichtung der von der Welle (S101) aufgenommenen extern hinzugefügten kinetischen Drehenergie, der Welle (S102) und der Hohlwelle (AS101);
- wenn die steuerbare Bremsvorrichtung (BK103) so gesteuert wird, dass sie sich im Bremseneinrastzustand befindet, und die steuerbare Bremsvorrichtung (BK102) so gesteuert wird, dass sie sich im Lösezustand befindet, und die elektrische Maschine (EM100) mit Doppelantrieb nicht in der Funktion als elektrische Maschine betrieben wird, ist die Übersetzungsbeziehung zwischen der Hohlwelle (AS101) und der Welle (S102) eine Kontaktbeziehung und ermöglicht eine Übersetzung;
- wenn die steuerbare Bremsvorrichtung (BK103) so gesteuert wird, dass sie sich im Bremseneinrastzustand befindet, und die steuerbare Bremsvorrichtung (BK102) so gesteuert wird, dass sie sich im Lösezustand befindet, und die elektrische Maschine (EM100) mit Doppelantrieb in der Funktion als elektrische Maschine betrieben wird, wird zwischen dem inneren Drehbauteil der elektrischen Maschine (EM101) und dem äußeren Drehbauteil der elektrischen Maschine (EM102) die Stromerzeugungsfunktion oder Motorfunktion betrieben, um entsprechenden interaktiven Betrieb mit der Dämpfung externer Last oder der von der Hohlwelle (AS101) und der Welle (S102) aufgenommenen extern hinzugefügten kinetischen Drehenergie zu leisten;
- wenn die steuerbare Bremsvorrichtung (BK103) so gesteuert wird, dass sie sich im Lösezustand befindet, und die steuerbare Bremsvorrichtung (BK102) so gesteuert wird, dass sie sich im Bremseneinrastzustand befindet, und die elektrische Maschine (EM100) mit Doppelantrieb nicht in der Funktion als elektrische Maschine betrieben wird, ist die Übersetzungsbeziehung zwischen der Welle (S101) und der Hohlwelle (AS101) eine Kontaktbeziehung und ermöglicht eine Übersetzung;
- wenn die steuerbare Bremsvorrichtung (BK103) so gesteuert wird, dass sie sich im Lösezustand befindet, und die steuerbare Bremsvorrichtung (BK102) so gesteuert wird, dass sie sich im Bremseneinrastzustand befindet, und die elektrische Maschine (EM100) mit Doppelantrieb in der Funktion als elektrische Maschine betrieben wird, wird zwischen dem inneren Drehbauteil der elektrischen Maschine (EM101) und dem äußeren Drehbauteil der elektrischen Maschine (EM102) die Stromerzeugungsfunktion oder Motorfunktion betrieben, um entsprechenden interaktiven Betrieb mit der Dämpfung externer Last oder der von der Welle (S101) und der Hohlwelle (AS101) aufgenommenen extern hinzugefügten kinetischen Drehenergie zu leisten;
- wenn die steuerbare Bremsvorrichtung (BK101) und die steuerbare Bremsvorrichtung (BK102) beide so gesteuert werden, dass sie sich im Bremseneinrastzustand befinden, ist die Beziehung zwischen der Welle (S101), der Welle (S102) und der Hohlwelle (AS101) insgesamt ein Bremseneinrastzustand.
Der interaktive Betrieb der von der elektrischen Maschine (EM100) mit Doppelantrieb ausgeführten entsprechenden Funktionen umfasst das Aufnehmen der Antriebssteuerung durch extern hinzugefügte elektrische Energie, und den Betrieb in der Motorfunktion für individuellen Antrieb der Last oder das Arbeiten mit der extern hinzugefügten kinetischen Drehenergie für das allgemeine Antreiben der Last.
Der interaktive Betrieb der von der elektrischen Maschine (EM100) mit Doppelantrieb ausgeführten entsprechenden Funktionen umfasst das Aufnehmen des Antriebs der extern hinzugefügten kinetischen Drehenergie oder des Antriebs der kinetischen Lastträgheitsenergie für einen Betrieb in der Stromerzeugungsfunktion, um die elektrische Energie für ein Antreiben der externen elektrischen Last auszugeben oder um die externe elektrische Energiespeichervorrichtung aufzuladen.

7. Elektrische Maschine mit Doppelantrieb mit einem steuerbaren Kegelradsatz gemäß Anspruch 1, wobei die gemeinsam vom Eingaberad (W101) des Kegelradsatzes (EG101) und dem inneren Drehbauteil der elektrischen Maschine (EM101) der elektrischen Maschine (EM100) mit Doppelantrieb verwendete Welle (S101) als Ausgabe-/Eingabeende für ein Anschließen an eine aktive Seite der steuerbaren Bremsvorrichtung (BK103) dient und die andere aktive Seite der steuerbaren Bremsvorrichtung (BK103) im Gehäuse (H100) befestigt ist; wobei das Rad (W103) des Kegelradsatzes (EG101) dazu vorgesehen ist, den Kipphebel (A101) zu verbinden und mit dem äußeren Drehbauteil der elektrischen Maschine (EM102) und der Hohlwelle (AS101) verbunden ist, wobei sich die Hohlwelle (AS101) dreht und mit der Welle (S101) verbunden ist, um als Ausgabe-/Eingabeende zu dienen, und wobei die Hohlwelle (AS101) an eine aktive Seite der steuerbaren Bremsvorrichtung (BK101) angeschlossen ist, und wobei die andere aktive Seite der steuerbaren Bremsvorrichtung (BK101) im Gehäuse (H100) befestigt ist, und wobei die Hülle des Kegelradsatzes (EG101) ebenfalls im Gehäuse (H100) befestigt ist, und wobei das Ausgaberad (W102) des Kegelradsatzes (EG101) dazu vorgesehen ist, die als Ausgabe-/Eingabeende dienende Welle (S102) anzutreiben, die hauptsächlich aus Folgendem besteht:
- Kegelradsatz (EG101): gebildet durch ein Eingaberad (W101) und ein Ausgaberad (W102) und mindestens ein Rad (W103), und beinhaltend, in Form der ineinandergreifenden Kegelräder oder der Ritzelreibungsräder, ein gemeinsames Erzeugen von Reibungsübersetzung, um die Kegelradsatzfunktion zu bilden, und ebenfalls gebildet durch die Welle (S101), die Welle (S102), den Kipphebel (A101), die Hohlwelle (AS101) und ein Lager, sowie zusammen eingebaut mit einer Hülle, um sie im Gehäuse (H100) zu verbinden;
- Kipphebel (A101): mit einem Ende, das dazu vorgesehen ist, dem Rad (W103) ein Drehen und Verbinden zu ermöglichen, und wobei das sich axial in Richtung der Welle (S101) erstreckende andere Ende für ein Verbinden mit dem äußeren Drehbauteil der elektrischen Maschine (EM102) und mit der Hohlwelle (AS101) vorgesehen ist, und wobei die Hohlwelle (AS101) auf die Welle (S101) und/oder die Welle (S102) aufgesteckt ist und sich darauf drehen kann;
- steuerbarer Bremsvorrichtung (BK101): mit zwei steuerbaren aktiven Seiten zum Betätigen eines Bremseneinrastzustands zum Ineinandergreifen oder eines Lösezustands zum Trennen, wobei eine der aktiven Seiten an die Hohlwelle (AS101) oder den Kipphebel (A101) angeschlossen ist, während die andere aktive Seite im Gehäuse (H100) befestigt ist;
- steuerbarer Bremsvorrichtung (BK103): mit zwei steuerbaren aktiven Seiten zum Betätigen eines Bremseneinrastzustands zum Ineinandergreifen oder eines Lösezustands zum Trennen, wobei eine der aktiven Seiten an die Welle (S101) angeschlossen ist, während die andere aktive Seite im Gehäuse (H100) befestigt ist;
- elektrischer Maschine (EM100) mit Doppelantrieb: mit einem inneren Drehbauteil der elektrischen Maschine (EM101) und einem äußeren Drehbauteil der elektrischen Maschine (EM102), wobei daran Endabdeckungen, Lager und zugehörige elektrische Leitungsvorrichtungen angebracht sind, um elektrische Energie zuzuführen, wobei das innere Drehbauteil der elektrischen Maschine (EM101) und das äußere Drehbauteil der elektrischen Maschine (EM102) koaxial gedreht werden, und wobei das innere Drehbauteil der elektrischen Maschine (EM101) mit einer Welle (S101) verbunden ist, und das äußere Drehbauteil der elektrischen Maschine (EM102) mit dem Kipphebel (A101) verbunden ist;
- wobei die gemeinsam vom Eingaberad (W101) des Kegelradsatzes (EG101) und dem inneren Drehbauteil der elektrischen Maschine (EM101) der elektrischen Maschine (EM100) mit Doppelantrieb verwendete Welle (S101) als Ausgabe-/Eingabeende und zum Verbinden mit einer aktiven Seite der steuerbaren Bremsvorrichtung (BK103) dient, während die andere aktive Seite der steuerbaren Bremsvorrichtung (BK103) im Gehäuse (H100) befestigt ist;
- wobei das Rad (W103) des Kegelradsatzes (EG101) dazu vorgesehen ist, den Kipphebel (A101) zu verbinden und mit dem äußeren Drehbauteil der elektrischen Maschine (EM102) und mit der Hohlwelle (AS101) verbunden ist, wobei die auf die Welle (S101) aufgesteckte und sich darauf drehende Hohlwelle (AS101) als Ausgabe-/Eingabeende dient, und wobei die Hohlwelle (AS101) an eine aktive Seite einer steuerbaren Bremsvorrichtung (BK101) angeschlossen ist, während die andere aktive Seite der steuerbaren Bremsvorrichtung (BK101) im Gehäuse (H100) befestigt ist, und wobei das Ausgaberad (W102) des Kegelradsatzes (EG101) dazu vorgesehen ist, die als Ausgabe-/Eingabeende dienende Welle (S102) anzutreiben.
Der Betrieb umfasst eine oder mehrere der folgenden Funktionen:
- wenn die steuerbare Bremsvorrichtung (BK101) und die steuerbare Bremsvorrichtung (BK103) so gesteuert werden, dass sie sich im Lösezustand befinden, und die elektrische Maschine (EM100) mit Doppelantrieb nicht in der Funktion als elektrische Maschine betrieben wird, befindet sich die Übersetzungsbeziehung zwischen der Welle (S101) und der Welle (S102) und der Hohlwelle (AS101) im Lösezustand und ermöglicht ein Drehen im Leerlauf;
- wenn die steuerbare Bremsvorrichtung (BK101) und die steuerbare Bremsvorrichtung (BK103) so gesteuert werden, dass sie sich im Lösezustand befinden, und die elektrische Maschine (EM100) in der Funktion als elektrische Maschine betrieben wird, wird der entsprechende interaktive Betrieb in der Stromerzeugungsfunktion oder der Motorfunktion entsprechend zwischen dem inneren Drehbauteil der elektrischen Maschine (EM101) und dem äußeren Drehbauteil der elektrischen Maschine (EM102) ausgeführt, gemäß dem Dämpfen einer externen Last oder des Drehmoments, der Drehgeschwindigkeit und der Drehrichtung der von der Welle (S101) aufgenommenen extern hinzugefügten kinetischen Drehenergie, der Welle (S102) und der Hohlwelle (AS101);
- wenn die steuerbare Bremsvorrichtung (BK101) so gesteuert wird, dass sie sich im Bremseneinrastzustand befindet, und die steuerbare Bremsvorrichtung (BK103) so gesteuert wird, dass sie sich im Lösezustand befindet, und die elektrische Maschine (EM100) mit Doppelantrieb nicht in der Funktion als elektrische Maschine betrieben wird, ist die Übersetzungsbeziehung zwischen der Welle (S101) und der Welle (S102) eine Kontaktbeziehung und ermöglicht eine Übersetzung;
- wenn die steuerbare Bremsvorrichtung (BK101) so gesteuert wird, dass sie sich im Bremseneinrastzustand befindet, und die steuerbare Bremsvorrichtung (BK103) so gesteuert wird, dass sie sich im Lösezustand befindet, und die elektrische Maschine (EM100) mit Doppelantrieb in der Funktion als elektrische Maschine betrieben wird, wird zwischen dem inneren Drehbauteil der elektrischen Maschine (EM101) und dem äußeren Drehbauteil der elektrischen Maschine (EM102) die Stromerzeugungsfunktion oder Motorfunktion betrieben, um entsprechenden interaktiven Betrieb mit der Dämpfung externer Last oder der von der Welle (S101) und der Welle (S102) aufgenommenen extern hinzugefügten kinetischen Drehenergie zu leisten;
- wenn die steuerbare Bremsvorrichtung (BK101) so gesteuert wird, dass sie sich im Lösezustand befindet, und die steuerbare Bremsvorrichtung (BK103) so gesteuert wird, dass sie sich im Bremseneinrastzustand befindet, und die elektrische Maschine (EM100) mit Doppelantrieb nicht in der Funktion als elektrische Maschine betrieben wird, ist die Übersetzungsbeziehung zwischen der Welle (S102) und der Hohlwelle (AS101) eine Kontaktbeziehung und ermöglicht eine Übersetzung;
- wenn die steuerbare Bremsvorrichtung (BK101) so gesteuert wird, dass sie sich im Lösezustand befindet, und die steuerbare Bremsvorrichtung (BK103) so gesteuert wird, dass sie sich im Bremseneinrastzustand befindet, und die elektrische Maschine (EM100) mit Doppelantrieb in der Funktion als elektrische Maschine betrieben wird, wird zwischen dem inneren Drehbauteil der elektrischen Maschine (EM101) und dem äußeren Drehbauteil der elektrischen Maschine (EM102) die Stromerzeugungsfunktion oder Motorfunktion betrieben, um entsprechenden interaktiven Betrieb mit der Dämpfung externer Last oder der von der Welle (S102) und der Hohlwelle (AS101) aufgenommenen extern hinzugefügten kinetischen Drehenergie zu leisten;
- wenn die steuerbare Bremsvorrichtung (BK101) und die steuerbare Bremsvorrichtung (BK102) beide so gesteuert werden, dass sie sich im Bremseneinrastzustand befinden, ist die Beziehung zwischen der Welle (S101), der Welle (S102) und der Hohlwelle (AS101) insgesamt ein Bremseneinrastzustand.
Der interaktive Betrieb der von der elektrischen Maschine (EM100) mit Doppelantrieb ausgeführten entsprechenden Funktionen umfasst das Aufnehmen der Antriebssteuerung durch extern hinzugefügte elektrische Energie, und den Betrieb in der Motorfunktion für individuellen Antrieb der Last oder das Arbeiten mit der extern hinzugefügten kinetischen Drehenergie für das allgemeine Antreiben der Last.
Der interaktive Betrieb der von der elektrischen Maschine (EM100) mit Doppelantrieb ausgeführten entsprechenden Funktionen umfasst das Aufnehmen des Antriebs der extern hinzugefügten kinetischen Drehenergie oder des Antriebs der kinetischen Lastträgheitsenergie für einen Betrieb in der Stromerzeugungsfunktion, um die elektrische Energie für ein Antreiben der externen elektrischen Last auszugeben oder um die externe elektrische Energiespeichervorrichtung aufzuladen.

8. Elektrische Maschine mit Doppelantrieb mit einem steuerbaren Kegelradsatz gemäß Anspruch 2, wobei die gemeinsam vom Eingaberad (W101) des Kegelradsatzes (EG101) und dem inneren Drehbauteil der elektrischen Maschine (EM101) der elektrischen Maschine (EM100) mit Doppelantrieb verwendete Welle (S101) als Ausgabe-/Eingabeende und zum Anschließen einer aktiven Seite der steuerbaren Bremsvorrichtung (BK103) dient, während die andere aktive Seite der steuerbaren Bremsvorrichtung (BK103) im Gehäuse (H100) befestigt ist; wobei das Rad (W103) des Kegelansatzes (EG101) dazu vorgesehen ist, den Kipphebel (A101) zu verbinden und wobei es mit dem äußeren Drehbauteil der elektrischen Maschine (EM102) und der Hohlwelle (AS101) verbunden ist, wobei die auf die Welle (S101) aufgesteckte und sich darauf drehende Hohlwelle (AS101) als Ausgabe-/Eingabeende dient, und wobei die Hohlwelle (AS101) an eine aktive Seite der steuerbaren Bremsvorrichtung (BK101) angeschlossen ist, während die andere aktive Seite der steuerbaren Bremsvorrichtung (BK101) im Gehäuse (H100) befestigt ist; wobei der Kegelradsatz (EG101) ebenfalls im Gehäuse (H100) befestigt ist, wobei das Ausgaberad (W102) des Kegelradsatzes (EG101) dazu vorgesehen ist, die als Ausgabe-/Eingabeende dienende Welle (S102) anzutreiben, und wobei die Welle (S102) an eine aktive Seite der steuerbaren Bremsvorrichtung (BK102) angeschlossen ist, während die andere aktive Seite der steuerbaren Bremsvorrichtung (BK102) im Gehäuse (H100) befestigt ist, das hauptsächlich aus Folgendem besteht:
- Kegelradsatz (EG101): gebildet durch ein Eingaberad (W101) und ein Ausgaberad (W102) und mindestens ein Rad (W103), und beinhaltend, in Form der ineinandergreifenden Kegelräder oder der Ritzelreibungsräder, ein gemeinsames Erzeugen von Reibungsübersetzung, um die Kegelradsatzfunktion zu bilden, und ebenfalls gebildet durch die Welle (S101), die Welle (S102), den Kipphebel (A101), die Hohlwelle (AS101) und ein Lager, sowie zusammen eingebaut mit einer Hülle, um sie im Gehäuse (H100) zu verbinden;
- Kipphebel (A101): mit einem Ende, das dazu vorgesehen ist, dem Rad (W103) ein Drehen und Verbinden zu ermöglichen, und wobei das sich axial in Richtung der Welle (S101) erstreckende andere Ende für ein Verbinden mit dem äußeren Drehbauteil der elektrischen Maschine (EM102) und mit der Hohlwelle (AS101) vorgesehen ist, und wobei die Hohlwelle (AS101) auf die Welle (S101) und/oder die Welle (S102) aufgesteckt ist und sich darauf drehen kann;
- steuerbarer Bremsvorrichtung (BK101): mit zwei steuerbaren aktiven Seiten zum Betätigen eines Bremseneinrastzustands zum Ineinandergreifen oder eines Lösezustands zum Trennen, wobei eine der aktiven Seiten an die Hohlwelle (AS101) oder den Kipphebel (A101) angeschlossen ist, während die andere aktive Seite im Gehäuse (H100) befestigt ist;
- steuerbarer Bremsvorrichtung (BK102): mit zwei steuerbaren aktiven Seiten zum Betätigen eines Bremseneinrastzustands zum Ineinandergreifen oder eines Lösezustands zum Trennen, wobei eine der aktiven Seiten an die Welle (S102) angeschlossen ist, während die andere aktive Seite im Gehäuse (H100) befestigt ist;
- steuerbarer Bremsvorrichtung (BK103): mit zwei steuerbaren aktiven Seiten zum Betätigen eines Bremseneinrastzustands zum Ineinandergreifen oder eines Lösezustands zum Trennen, wobei eine der aktiven Seiten an die Welle (S101) angeschlossen ist, während die andere aktive Seite im Gehäuse (H100) befestigt ist;
- elektrischer Maschine (EM100) mit Doppelantrieb: gebildet durch eine elektrische Gleichstrommaschine oder elektrische Wechselstrommaschine, mit oder ohne Bürsten, synchron oder asynchron, mit einem inneren Drehbauteil der elektrischen Maschine (EM101) und einem äußeren Drehbauteil der elektrischen Maschine (EM102), wobei daran Endabdeckungen, Lager und zugehörige elektrische Leitungsvorrichtungen angebracht sind, um elektrische Energie zuzuführen, wobei das innere Drehbauteil der elektrischen Maschine (EM101) und das äußere Drehbauteil der elektrischen Maschine (EM102) koaxial gedreht werden, und wobei das innere Drehbauteil der elektrischen Maschine (EM101) mit einer Welle (S101) verbunden ist, und wobei das äußere Drehbauteil der elektrischen Maschine (EM102) mit dem Kipphebel (A101) verbunden ist;
- wobei die gemeinsam vom Eingaberad (W101) des Kegelradsatzes (EG101) und dem inneren Drehbauteil der elektrischen Maschine (EM101) der elektrischen Maschine (EM100) mit Doppelantrieb verwendete Welle (S101) als Ausgabe-/Eingabeende und zum Verbinden mit einer aktiven Seite der steuerbaren Bremsvorrichtung (BK103) dient, während die andere aktive Seite der steuerbaren Bremsvorrichtung (BK103) im Gehäuse (H100) befestigt ist;
- wobei das Rad (W103) des Kegelradsatzes (EG101) dazu vorgesehen ist, den Kipphebel (A101) zu verbinden und mit dem äußeren Drehbauteil der elektrischen Maschine (EM102) und der Hohlwelle (AS101) verbunden ist, wobei die auf die Welle (S101) aufgesteckte und sich darauf drehende Hohlwelle (AS101) als Ausgabe-/Eingabeende dient, und wobei die Hohlwelle (AS101) an eine aktive Seite der steuerbaren Bremsvorrichtung (BK101) angeschlossen ist, während die andere aktive Seite der steuerbaren Bremsvorrichtung (BK101) im Gehäuse (H100) befestigt ist; wobei das Ausgaberad (W102) des Kegelradsatzes (EG101) dazu vorgesehen ist, die Welle (S102) anzutreiben, um als Ausgabe-/Eingabeende zu dienen, wobei die Welle (S102) an eine aktive Seite der steuerbaren Bremsvorrichtung (BK102) angeschlossen ist, während die andere aktive Seite der steuerbaren Bremsvorrichtung (BK102) im Gehäuse (H100) befestigt ist.
Der Betrieb umfasst eine oder mehrere der folgenden Funktionen:
- wenn die steuerbare Bremsvorrichtung (BK101), die steuerbare Bremsvorrichtung (BK102) und die steuerbare Bremsvorrichtung (BK103) alle so gesteuert werden, dass sie sich im Lösezustand befinden, und die elektrische Maschine (EM100) mit Doppelantrieb nicht in der Funktion als elektrische Maschine betrieben wird, befindet sich die Übersetzungsbeziehung zwischen der Welle (S101) und der Welle (S102) und der Hohlwelle (AS101) im Lösezustand und ermöglicht ein Drehen im Leerlauf;
- wenn die steuerbare Bremsvorrichtung (BK101), die steuerbare Bremsvorrichtung (BK102) und die steuerbare Bremsvorrichtung (BK103) alle so gesteuert werden, dass sie sich im Lösezustand befinden, und die elektrische Maschine (EM100) in der Funktion als elektrische Maschine betrieben wird, werden die entsprechenden interaktiven Betriebe in der Stromerzeugungsfunktion oder der Motorfunktion entsprechend zwischen dem inneren Drehbauteil der elektrischen Maschine (EM101) und dem äußeren Drehbauteil der elektrischen Maschine (EM102) ausgeführt, gemäß dem Dämpfen einer externen Last oder des Drehmoments, der Drehgeschwindigkeit und der Drehrichtung der von der Welle (S101) aufgenommenen extern hinzugefügten kinetischen Drehenergie, der Welle (S102) und der Hohlwelle (AS101);
- wenn die steuerbare Bremsvorrichtung (BK101) so gesteuert wird, dass sie sich im Bremseneinrastzustand befindet, und die steuerbare Bremsvorrichtung (BK102) und die steuerbare Bremsvorrichtung (BK103) so gesteuert werden, dass sie sich im Lösezustand befinden, und die elektrische Maschine (EM100) mit Doppelantrieb nicht in der Funktion als elektrische Maschine betrieben wird, ist die Übersetzungsbeziehung zwischen der Welle (S101) und der Welle (S102) eine Kontaktbeziehung und ermöglicht eine Übersetzung;
- wenn die steuerbare Bremsvorrichtung (BK101) so gesteuert wird, dass sie sich im Bremseneinrastzustand befindet, und die steuerbare Bremsvorrichtung (BK102) und die steuerbare Bremsvorrichtung (BK103) so gesteuert werden, dass sie sich im Lösezustand befinden, und die elektrische Maschine (EM100) mit Doppelantrieb in der Funktion als elektrische Maschine betrieben wird, wird zwischen dem inneren Drehbauteil der elektrischen Maschine (EM101) und dem äußeren Drehbauteil der elektrischen Maschine (EM102) die Stromerzeugungsfunktion oder Motorfunktion betrieben, um entsprechenden interaktiven Betrieb mit der Dämpfung externer Last oder der von der Welle (S101) und der Welle (S102) aufgenommenen extern hinzugefügten kinetischen Drehenergie zu leisten;
- wenn die steuerbare Bremsvorrichtung (BK102) so gesteuert wird, dass sie sich im Bremseneinrastzustand befindet, und die steuerbare Bremsvorrichtung (BK101) und die steuerbare Bremsvorrichtung (BK103) so gesteuert werden, dass sie sich im Lösezustand befinden, und die elektrische Maschine (EM100) mit Doppelantrieb nicht in der Funktion als elektrische Maschine betrieben wird, ist die Übersetzungsbeziehung zwischen der Welle (S101) und der Hohlwelle (AS101) eine Kontaktbeziehung und ermöglicht eine Übersetzung;
- wenn die steuerbare Bremsvorrichtung (BK102) so gesteuert wird, dass sie sich im Bremseneinrastzustand befindet, und die steuerbare Bremsvorrichtung (BK101) und die steuerbare Bremsvorrichtung (BK103) so gesteuert werden, dass sie sich im Lösezustand befinden, und die elektrische Maschine (EM100) mit Doppelantrieb in der Funktion als elektrische Maschine betrieben wird, wird zwischen dem inneren Drehbauteil der elektrischen Maschine (EM101) und dem äußeren Drehbauteil der elektrischen Maschine (EM102) die Stromerzeugungsfunktion oder Motorfunktion betrieben, um entsprechenden interaktiven Betrieb mit der Dämpfung externer Last oder der von der Welle (S101) und der Hohlwelle (AS101) aufgenommenen extern hinzugefügten kinetischen Drehenergie zu leisten;
- wenn die steuerbare Bremsvorrichtung (BK103) so gesteuert wird, dass sie sich im Bremseneinrastzustand befindet, und die steuerbare Bremsvorrichtung (BK101) und die steuerbare Bremsvorrichtung (BK102) so gesteuert werden, dass sie sich im Lösezustand befinden, und die elektrische Maschine (EM100) mit Doppelantrieb nicht in der Funktion als elektrische Maschine betrieben wird, ist die Übersetzungsbeziehung zwischen der Welle (S102) und der Hohlwelle (AS101) eine Kontaktbeziehung und ermöglicht eine Übersetzung;
- wenn die steuerbare Bremsvorrichtung (BK103) so gesteuert wird, dass sie sich im Bremseneinrastzustand befindet, und die steuerbare Bremsvorrichtung (BK101) und die steuerbare Bremsvorrichtung (BK102) so gesteuert werden, dass sie sich im Lösezustand befinden, und die elektrische Maschine (EM100) mit Doppelantrieb in der Funktion als elektrische Maschine betrieben wird, wird zwischen dem inneren Drehbauteil der elektrischen Maschine (EM101) und dem äußeren Drehbauteil der elektrischen Maschine (EM102) die Stromerzeugungsfunktion oder Motorfunktion betrieben, um entsprechenden interaktiven Betrieb mit der Dämpfung externer Last oder der von der Welle (S102) und der Hohlwelle (AS101) aufgenommenen extern hinzugefügten kinetischen Drehenergie zu leisten;
- wenn zwei oder alle der steuerbaren Bremsvorrichtung (BK101), der steuerbaren Bremsvorrichtung (BK102) und der steuerbaren Bremsvorrichtung (BK103) so gesteuert werden, dass sie sich im Bremseneinrastzustand befinden, so sind die Beziehungen zwischen der Welle (S101), der Welle S (S102) und der Hohlwelle (AS101) alle ein Bremseneinrastzustand.
Der interaktive Betrieb der von der elektrischen Maschine (EM100) mit Doppelantrieb ausgeführten entsprechenden Funktionen umfasst das Aufnehmen der Antriebssteuerung durch extern hinzugefügte elektrische Energie, und den Betrieb in der Motorfunktion für individuellen Antrieb der Last oder das Arbeiten mit der extern hinzugefügten kinetischen Drehenergie für das Antreiben der Last.
Der interaktive Betrieb der von der elektrischen Maschine (EM100) mit Doppelantrieb ausgeführten entsprechenden Funktionen umfasst das Aufnehmen des Antriebs der extern hinzugefügten kinetischen Drehenergie oder des Antriebs der kinetischen Lastträgheitsenergie für einen Betrieb in der Stromerzeugungsfunktion, um die elektrische Energie für ein Antreiben der externen elektrischen Last auszugeben oder um die externe elektrische Energiespeichervorrichtung aufzuladen.

## Revendications

1. Machine électrique à double entraînement en combinaison avec un engrenage conique réglable, dans laquelle une partie intérieure de rotation (EM101) et une partie extérieure de rotation (EM102) de la machine électrique à double entraînement (EM100) sont respectivement agencées avec deux des trois extrémités de sortie/entrée d'une roue d'entrée (W101), d'une roue de sortie (W102) et d'un culbuteur (A101), relié à une roue (W103) de l'engrenage conique (EG101) pour assurer une transmission, et une des trois extrémités de sortie/entrée, non reliée à la machine électrique à double entraînement (EM100), est utilisée pour une sortie externe ; la partie intérieure de rotation (EM101) de la machine électrique à double entraînement (EM100) est combinée avec la roue d'entrée (W101) de l'engrenage conique (EG101) et à un arbre de rotation (S101), qui sert d'extrémité de sortie/entrée, un arbre de rotation (S102) associé à la roue de sortie (W102) sert d'extrémité de sortie/entrée et le culbuteur (A101), relié à la roue (W103) de l'engrenage conique (EG101) associée à la partie extérieure de rotation de la machine électrique (EM102) et associée à l'arbre de rotation de type manchon (AS101), sert d'extrémité de sortie/entrée, une partie des trois extrémités de sortie/entrée est respectivement reliée à un côté d'actionnement d'un dispositif réglable de freinage, et l'autre côté d'actionnement du dispositif réglable de freinage est reliée à un carter (H100) ; par la commande du dispositif réglable de freinage pour effectuer un verrouillage ou une libération de frein, les opérations de fonction de transmission de transmission de liaison ou de libération entre l'arbre de rotation (S101) au niveau de l'extrémité de sortie/entrée, l'arbre de rotation (S102) au niveau de l'extrémité de sortie/entrée et l'arbre de rotation de type manchon (AS101) au niveau de l'extrémité de sortie/entrée de l'engrenage conique (EG101) sont activées pour être commandées, et les opérations interactives entre la machine électrique à double entraînement (EM100) et les extrémités de sortie/entrée sont également activées pour être commandées.

2. Machine électrique à double entraînement comportant un engrenage conique réglable selon la revendication 1, dans laquelle le culbuteur (A101) relié par la roue (W103) est associé à la partie extérieure de rotation de la machine électrique (EM102) et associé à l'arbre de rotation de type manchon (AS101), l'arbre de rotation de type manchon (AS101) servant d'extrémité de sortie/entrée et étant relié à un côté d'actionnement du dispositif réglable de freinage (BK101), et l'autre côté d'actionnement du dispositif réglable de freinage (BK101) est fixé dans le carter (H100) ; l'engrenage conique (EG101) est également fixé dans le carter (H100), et la roue de sortie (W102) de l'engrenage conique (EG101) est conçue pour entraîner l'arbre de rotation (S102) pour qu'il serve d'extrémité de sortie/entrée, la machine électrique est principalement constituée des éléments suivants :
- l'engrenage conique (EG101) : constitué d'une roue d'entrée (W101) et d'une roue de sortie (W102) et d'au moins une roue (W103) et comprenant, au moyen des roues coniques qui s'engrènent ou des roues coniques à frottement, effectuant mutuellement des transmissions par frottement pour assurer la fonction d'engrenage conique, et également constitué de l'arbre de rotation (S101), de l'arbre de rotation (S102), du culbuteur (A101), de l'arbre de rotation de type manchon (AS101) et d'un palier, et installé avec une coque pour être agencé dans le carter (H100) ;
- le culbuteur (A101) : présente une extrémité conçue pour permettre à la roue (W103) de tourner et une liaison, et l'autre extrémité s'étendant axialement vers l'arbre de rotation (S101) pour être combinée avec la partie externe de rotation de la machine électrique (EM102) et associée à l'arbre de rotation de type manchon (AS101), et l'arbre de rotation de type manchon (AS101) est emmanché sur l'arbre de rotation (S101) et/ou sur l'arbre de rotation (S102), et à même de tourner avec celui-ci ou avec ceux-ci ;
- le dispositif réglable de freinage (BK101) : présente deux côtés à action réglable pour les fonctionnements d'un état de verrouillage de frein pour la mise en prise ou un état de libération pour la séparation ;
- la machine électrique à double entraînement (EM100) installée avec des couvercles d'extrémité, des paliers et des dispositifs associés de conduction électrique, utilisés pour l'alimentation électrique, la partie interne de rotation de la machine électrique (EM101) et la partie externe de rotation de la machine électrique (EM102) tournent coaxialement, la partie interne de rotation de la machine électrique (EM101) étant associée à l'arbre de rotation (S101) et la partie externe de rotation de la machine électrique (EM102) étant associée au culbuteur (A101) ;
- un arbre de rotation (S101) ; les opérations comprennent au moins l'une des fonctions suivantes :
- quand le dispositif réglable de freinage (BK101) est commandé pour être dans l'état de libération et que la machine électrique à double entraînement (EM100) n'est pas actionnée avec la fonction de machine électrique, les relations de transmission entre l'arbre de rotation (S101) et l'arbre de rotation (S102) et l'arbre de rotation de type manchon (AS101) se trouvent dans l'état de libération permettant une rotation à vide ;
- quand le dispositif réglable de freinage (BK101) est commandé pour être dans l'état de libération et que la machine électrique à double entraînement (EM100) est actionnée avec la fonction de machine électrique, les opérations interactives correspondantes de la fonction d'alimentation électrique ou de la fonction motrice sont effectuées en correspondance entre la partie interne de rotation de la machine électrique (EM101) et la partie externe de rotation de la machine électrique (EM102), en fonction de l'amortissement de charge externe ou du couple de rotation, de la vitesse de rotation et du sens de rotation de l'énergie cinétique rotative induite extérieurement et assurée par l'arbre de rotation (S101), l'arbre de rotation (S102) et l'arbre de rotation de type manchon (AS101) ;
- quand le dispositif réglable de freinage (BK101) est commandé pour être dans l'état de verrouillage de frein et que la machine électrique à double entraînement (EM100) n'est pas actionnée avec la fonction de machine électrique, la relation de transmission entre l'arbre de rotation (S101) et l'arbre de rotation (S102) est en relation de liaison permettant la transmission ;
- quand le dispositif réglable de freinage (BK101) est commandé pour être dans l'état de verrouillage de frein et que la machine électrique à double entraînement (EM100) est actionnée avec la fonction de machine électrique, entre la partie interne de rotation de la machine électrique (EM101) et la partie externe de rotation de la machine électrique (EM102), comme fonction d'alimentation électrique ou fonction motrice, pour effectuer des opérations interactives correspondantes avec l'amortissement de charge externe ou avec l'énergie cinétique rotative induite de l'extérieur fournie par l'arbre de rotation (S101) et l'arbre de rotation (S102) ;
les opérations interactives de la fonction correspondante effectuées par la machine électrique à double entraînement (EM100) susmentionnée comprennent la réception de la commande d'entraînement d'énergie électrique alimentée depuis l'extérieur, le fonctionnement comme fonction motrice pour entraîner individuellement la charge ou le travail avec l'énergie cinétique rotative induite extérieurement pour entraîner conjointement la charge ;
les opérations interactives de la fonction correspondante effectuées par la machine électrique à double entraînement (EM100) susmentionnée comprennent la réception de l'entraînement de l'énergie cinétique rotative induite extérieurement ou de l'entraînement de l'énergie cinétique d'inertie de charge pour fonctionner comme fonction d'alimentation électrique, de manière à amener l'énergie électrique à entraîner la charge électrique externe ou à charger le dispositif externe d'accumulation d'énergie électrique.

3. Machine électrique à double entraînement comportant un engrenage conique réglable selon la revendication 2, dans laquelle l'arbre de rotation (S102) est relié à un côté d'actionnement d'un dispositif réglable de freinage (BK102) pendant que l'autre côté d'actionnement du dispositif réglable de freinage (BK102) est fixé dans le carter (H100), la machine électrique étant principalement constituée des éléments suivants :
- l'engrenage conique (EG101) : constitué d'une roue d'entrée (W101) et d'une roue de sortie (W102) et d'au moins une roue (W103) et comprenant, au moyen des roues coniques qui s'engrènent ou des roues coniques à frottement, effectuant mutuellement des transmissions par frottement pour assurer la fonction d'engrenage conique, et également constitué de l'arbre de rotation (S101), de l'arbre de rotation (S102), du culbuteur (A101), de l'arbre de rotation de type manchon (AS101) et d'un palier, et installé avec une coque pour être agencé dans le carter (H100) ;
- le culbuteur (A101) : présente une extrémité conçue pour permettre à la roue (W103) de tourner et une liaison, et l'autre extrémité s'étendant axialement vers l'arbre de rotation (S101) pour être combinée avec la partie externe de rotation de la machine électrique (EM102) et associée à l'arbre de rotation de type manchon (AS101), et l'arbre de rotation de type manchon (AS101) est emmanché sur l'arbre de rotation (S101) et/ou sur l'arbre de rotation (S102), et à même de tourner avec celui-ci ou avec ceux-ci ;
- le dispositif réglable de freinage (BK102) : présente deux côtés à action réglable pour les fonctionnements d'un état de verrouillage de frein pour la mise en prise ou un état de libération pour la séparation ;
- la machine électrique à double entraînement (EM100) : installée avec des couvercles d'extrémité, des paliers et des dispositifs associés de conduction électrique, utilisés pour l'alimentation électrique, la partie interne de rotation de la machine électrique (EM101) et la partie externe de rotation de la machine électrique (EM102) tournent coaxialement, la partie interne de rotation de la machine électrique (EM101) étant associée à l'arbre de rotation (S101), et la partie externe de rotation de la machine électrique (EM102) étant associée au culbuteur (A101) ;
un arbre de rotation (S101), partagé par la roue d'entrée (W101) de l'engrenage conique (EG101) et par la partie interne de rotation de la machine électrique (EM101) de la machine électrique à double entraînement (EM100), sert d'extrémité de sortie/entrée, le culbuteur (A101) relié par la roue (W103) est associé à la partie externe de rotation de la machine électrique (EM102) et associé à l'arbre de rotation de type manchon (AS101), et l'arbre de rotation de type manchon (AS101) tourne sur l'arbre de rotation (S101) et s'y emmanche pour servir d'extrémité de sortie/entrée ;
- la roue de sortie (W102) de l'engrenage conique (EG101) est conçue pour l'entraînement de l'arbre de rotation (S102) pour qu'elle serve d'extrémité de sortie/entrée ; les opérations comprennent au moins l'une des fonctions suivantes :
quand le dispositif réglable de freinage (BK102) est commandé pour être dans l'état de libération et que la machine électrique à double entraînement (EM100) n'est pas actionnée avec la fonction de machine électrique, les relations de transmission entre l'arbre de rotation (S101) et l'arbre de rotation de type manchon (AS101) et l'arbre de rotation (S102) sont dans l'état de libération permettant une rotation à vide ;
quand le dispositif réglable de freinage (BK102) est commandé pour être dans l'état de libération et que la machine électrique à double entraînement (EM100) est actionnée avec la fonction de machine électrique, les opérations interactives correspondantes de la fonction d'alimentation électrique ou de la fonction motrice sont réalisées en correspondance entre la partie interne de rotation de la machine électrique (EM101) et la partie externe de rotation de la machine électrique (EM102), en fonction de l'amortissement de la charge externe ou du couple de rotation, de la vitesse de rotation et du sens de rotation de l'énergie cinétique rotative induite extérieurement apportée par l'arbre de rotation (S101), l'arbre de rotation (S102) et l'arbre de rotation de type manchon (AS101) ;
quand le dispositif réglable de freinage (BK102) est commandé pour être dans l'état de verrouillage de frein et que la machine électrique à double entraînement (EM100) n'est pas actionnée avec la fonction de machine électrique, la relation de transmission entre l'arbre de rotation (S101) et l'arbre de rotation de type manchon (AS101) est en relation de liaison permettant la transmission ;
quand le dispositif réglable de freinage (BK102) est commandé pour être dans l'état de verrouillage de frein et que la machine électrique à double entraînement (EM100) est actionnée avec la fonction de machine électrique, entre la partie interne de rotation de la machine électrique (EM101) et la partie externe de rotation de la machine électrique (EM102), comme fonction d'alimentation électrique ou fonction motrice, pour effectuer des opérations interactives correspondantes avec l'amortissement de charge externe ou avec la charge externe ou avec l'énergie cinétique rotative induite de l'extérieur fournie par l'arbre de rotation (S101) et l'arbre de rotation de type manchon (AS101) ;
les opérations interactives de la fonction correspondante effectuées par la machine électrique à double entraînement (EM100) susmentionnée comprennent :
la réception de la commande d'entraînement d'énergie électrique alimentée depuis l'extérieur ;
le fonctionnement comme fonction motrice pour entraîner individuellement la charge ;
le travail avec l'énergie cinétique rotative induite extérieurement pour entraîner conjointement la charge ;
la réception de l'énergie cinétique rotative induite extérieurement ou de l'entraînement de l'énergie cinétique d'inertie de charge pour fonctionner comme fonction d'alimentation électrique, de manière à amener l'énergie électrique à entraîner la charge électrique externe ou à charger le dispositif externe d'accumulation d'énergie électrique.

4. Machine électrique à double entraînement comportant un engrenage conique réglable selon la revendication 1, dans laquelle l'arbre de rotation (S101), partagé par la roue d'entrée (W101) de l'engrenage conique (EG101) et par la partie interne de rotation de la machine électrique (EM101) de la machine électrique à double entraînement (EM100), sert d'extrémité de sortie/entrée pour une liaison avec un côté actionnement du dispositif réglable de freinage (BK103), tandis que l'autre côté d'actionnement du dispositif réglable de freinage (BK103) est fixé dans le carter (H100) ; l'engrenage conique (EG101) est également fixé dans le carter (H100), et la roue (W103) de l'engrenage conique (EG101) est conçue pour relier le culbuteur (A101) et associée à la partie extérieure de rotation de la machine électrique (EM102) et de l'arbre de rotation de type manchon (AS101), et l'arbre de rotation de type manchon (AS101) sert d'extrémité de sortie/entrée ; la roue de sortie (W102) de l'engrenage conique (EG101) est conçue pour entraîner l'arbre de rotation (S102) pour servir d'extrémité de sortie/entrée, laquelle est principalement constituée des éléments suivants :
- l'engrenage conique (EG101) : constitué d'une roue d'entrée (W101) et d'une roue de sortie (W102) et d'au moins une roue (W103) et comprenant, au moyen des roues coniques qui s'engrènent ou des roues coniques à frottement, effectuant mutuellement des transmissions par frottement pour assurer la fonction d'engrenage conique, et également constitué de l'arbre de rotation (S101), de l'arbre de rotation (S102), du culbuteur (A101), de l'arbre de rotation de type manchon (AS101) et d'un palier, et installé avec une coque pour être agencé dans le carter (H100) ;
- le culbuteur (A101) : présente une extrémité conçue pour permettre à la roue (W103) de tourner et une liaison, et l'autre extrémité s'étendant axialement vers l'arbre de rotation (S101) pour être combinée avec la partie externe de rotation de la machine électrique (EM102) et associée à l'arbre de rotation de type manchon (AS101), et l'arbre de rotation de type manchon (AS101) est emmanché sur l'arbre de rotation (S101) et/ou sur l'arbre de rotation (S102), et à même de tourner avec celui-ci ou avec ceux-ci ;
- le dispositif réglable de freinage (BK103) : présente deux côtés à action réglable pour les fonctionnements d'un état de verrouillage de frein pour la mise en prise ou un état de libération pour la séparation, un des côtés d'actionnement étant relié à l'arbre de rotation (S101) tandis que l'autre côté d'actionnement est fixé dans le carter (H100) ;
- la machine électrique à double entraînement (EM100) : comporte une partie interne de rotation de la machine électrique (EM101) et une partie externe de rotation de la machine électrique (EM102), et est dotée de couvercles d'extrémité, de paliers et de dispositifs associés de conduction électrique utilisés pour introduire l'énergie électrique, la partie interne de rotation de la machine électrique (EM101) et la partie externe de rotation de la machine électrique (EM102) tournant de manière coaxiale, la partie interne de rotation de la machine électrique (EM101) étant associée à l'arbre de rotation (S101), et la partie externe de rotation de la machine électrique (EM102) étant associée au culbuteur (A101) ;
- l'arbre de rotation (S101), partagé par la roue d'entrée (W101) de l'engrenage conique (EG101) et par la partie interne de rotation de la machine électrique (EM101) de la machine électrique à double entraînement (EM100), sert d'extrémité de sortie/entrée pour liaison à un côté d'actionnement du dispositif réglable de freinage (BK103), tandis que l'autre côté d'actionnement du dispositif réglable de freinage (BK103) est fixé au carter (H100) ;
- la roue (W103) de l'engrenage conique (EG101) est conçue pour la liaison avec le culbuteur (A101) et associée à la partie externe de rotation de la machine électrique (EM102) et associée à l'arbre de rotation de type manchon (AS101), et l'arbre de rotation de type manchon (AS101) est mis en rotation et emmanché sur l'arbre de rotation (S101) pour servir d'extrémité de sortie/entrée, la roue de sortie (W102) de l'engrenage conique (EG101) est conçue pour amener l'arbre de rotation (S102) à servir d'extrémité de sortie/entrée, et l'arbre de rotation (S101) relié à la roue d'entrée (W101) sert aussi d'extrémité de sortie/entrée ;
les opérations comprennent au moins l'une des fonctions suivantes :
- quand le dispositif réglable de freinage (BK103) est commandé pour être dans l'état de libération et que la machine électrique à double entraînement (EM100) n'est pas actionnée avec la fonction de machine électrique, les relations de transmission entre l'arbre de rotation (S101) et l'arbre de rotation de type manchon (AS101) et l'arbre de rotation (S102) sont dans l'état de libération, qui permet une rotation à vide ;
- quand le dispositif réglable de freinage (BK103) est commandé pour être dans l'état de libération et que la machine électrique à double entraînement (EM100) est actionnée avec la fonction de machine électrique, les opérations interactives correspondantes de la fonction d'alimentation électrique ou de la fonction motrice sont réalisées en correspondance entre la partie interne de rotation de la machine électrique (EM101) et la partie externe de rotation de la machine électrique (EM102), en fonction de l'amortissement de la charge externe ou du couple de rotation, de la vitesse de rotation et du sens de rotation de l'énergie cinétique rotative entrée extérieurement fournie par l'arbre de rotation (S101), l'arbre de rotation (S102) et l'arbre de rotation de type manchon (AS101) ;
- quand le dispositif réglable de freinage (BK103) est commandé pour être dans l'état de verrouillage de frein et que la machine électrique à double entraînement (EM100) n'est pas actionnée avec la fonction de machine électrique, la relation de transmission entre l'arbre de rotation de type manchon (AS101) et l'arbre de rotation (S102) est en relation de liaison permettant la transmission ;
- quand le dispositif réglable de freinage (BK103) est commandé pour être dans l'état de verrouillage de freinage et que la machine électrique à double entraînement (EM100) est actionnée avec la fonction de machine électrique, entre la partie interne de rotation de la machine électrique (EM101) et la partie externe de rotation de la machine électrique (EM102) comme fonction d'alimentation électrique ou fonction motrice, afin d'effectuer des opérations interactives correspondantes avec l'amortissement de charge externe ou de l'énergie cinétique rotative induite extérieurement et assurée par l'arbre de rotation de type manchon (AS101) et par l'arbre de rotation (S102) ;
les opérations interactives de la fonction correspondante effectuées par la machine électrique à double entraînement (EM100) susmentionnée comprennent la réception de la commande d'entraînement d'énergie électrique alimentée depuis l'extérieur, le fonctionnement comme fonction motrice pour entraîner individuellement la charge ou le travail avec l'énergie cinétique rotative induite extérieurement pour entraîner conjointement la charge ;
les opérations interactives de la fonction correspondante effectuées par la machine électrique à double entraînement (EM100) susmentionnée comprennent la réception de l'entraînement de l'énergie cinétique rotative induite extérieurement ou de l'entraînement de l'énergie cinétique d'inertie de charge pour fonctionner comme fonction d'alimentation électrique, de manière à amener l'énergie électrique à entraîner la charge électrique externe ou à charger le dispositif externe d'accumulation d'énergie électrique.

5. Machine électrique à double entraînement comportant un engrenage conique réglable selon la revendication 1, dans laquelle le culbuteur (A101) relié par la roue (W103) est associé à la partie extérieure de rotation de la machine électrique (EM102) et associé à l'arbre de rotation de type manchon (AS101), et l'arbre de rotation de type manchon (AS101) tournant et étant emmanché sur l'arbre de rotation (S101) servant d'extrémité de sortie/entrée, l'arbre de rotation de type manchon (AS101) étant relié à un côté d'actionnement du dispositif réglable de freinage (BK101), et l'autre côté d'actionnement du dispositif réglable de freinage (BK101) est fixé dans le carter (H100) ; l'engrenage conique (EG101) est également fixé dans le carter (H100), la roue de sortie (W102) de l'engrenage conique (EG101) est conçue pour entraîner l'arbre de rotation (S102) pour qu'il serve d'extrémité de sortie/entrée, et l'arbre de rotation (S102) est relié à un côté d'actionnement du dispositif réglable de freinage (BK102), et l'autre côté d'actionnement du dispositif réglable de freinage (BK102) est fixé au carter (H100), laquelle est principalement constituée des éléments suivants :
- l'engrenage conique (EG101) : constitué d'une roue d'entrée (W101) et d'une roue de sortie (W102) et d'au moins une roue (W103) et comprenant, au moyen des roues coniques qui s'engrènent ou des roues coniques à frottement, effectuant mutuellement des transmissions par frottement pour assurer la fonction d'engrenage conique, et également constitué de l'arbre de rotation (S101), de l'arbre de rotation (S102), du culbuteur (A101), de l'arbre de rotation de type manchon (AS101) et d'un palier, et installé avec une coque pour être agencé dans le carter (H100) ;
- le culbuteur (A101) : présente une extrémité conçue pour permettre à la roue (W103) de tourner et une liaison, et l'autre extrémité s'étendant axialement vers l'arbre de rotation (S101) pour être combinée avec la partie externe de rotation de la machine électrique (EM102) et associée à l'arbre de rotation de type manchon (AS101), et l'arbre de rotation de type manchon (AS101) est emmanché sur l'arbre de rotation (S101) et/ou sur l'arbre de rotation (S102), et à même de tourner avec celui-ci ou avec ceux-ci ;
- le dispositif réglable de freinage (BK101) : présente deux côtés à action réglable pour les fonctionnements d'un état de verrouillage de frein pour la mise en prise ou un état de libération pour la séparation, un des côtés d'actionnement étant relié à l'arbre de rotation de type manchon (AS101) ou au culbuteur (A101) tandis que l'autre côté d'actionnement est fixé dans le carter (H100) ;
- le dispositif réglable de freinage (BK102) : présente deux côtés à action réglable pour les fonctionnements d'un état de verrouillage de frein pour la mise en prise, ou un état de libération pour la séparation ; un des côtés d'actionnement étant relié à l'arbre de rotation (S102) tandis que l'autre côté d'actionnement est fixé dans le carter (H100) ;
- la machine électrique à double entraînement (EM100) : comportant une partie interne de rotation de la machine électrique (EM101) et une partie externe de rotation de la machine électrique (EM102), et installée avec des couvercles d'extrémité, des paliers et des dispositifs associés de conduction électrique, utilisés pour conduire l'énergie électrique, la partie interne de rotation de la machine électrique (EM101) et la partie externe de rotation de la machine électrique (EM102) tournent coaxialement, la partie interne de rotation de la machine électrique (EM101) étant associée à l'arbre de rotation (S101), et la partie externe de rotation de la machine électrique (EM102) étant associée au culbuteur (A101) ;
- l'arbre de rotation (S101), partagé par la roue d'entrée (W101) de l'engrenage conique (EG101) et par la partie interne de rotation de la machine électrique (EM101) de la machine électrique à double entraînement (EM100), sert d'extrémité de sortie/entrée, la roue de sortie (W102) de l'engrenage conique (EG101) associé à l'arbre de rotation (S102) servant d'extrémité de sortie/entrée, le culbuteur (A101) relié par la roue (W103) est associé à la partie externe de rotation de la machine électrique (EM102) et associé à l'arbre de rotation de type manchon (AS101), et l'arbre de rotation de type manchon (AS101) mis en rotation et emmanché sur l'arbre de rotation (S101) sert d'extrémité de sortie/entrée, et l'arbre de rotation de type manchon (AS101) est relié à un côté d'actionnement du dispositif réglable de freinage (BK101), et l'autre côté d'actionnement du dispositif réglable de freinage (BK101) est fixé dans le carter (H100), et la roue de sortie (W102) de l'engrenage conique (EG101) est conçue pour entraîner l'arbre de rotation (S102) pour servir d'extrémité de sortie/entrée, et l'arbre de rotation (S102) est relié à un côté d'actionnement du dispositif réglable de freinage (BK102) tandis que l'autre côté d'actionnement du dispositif réglable de freinage (BK102) est fixé dans le carter (H100) ;
les opérations comprennent au moins l'une des fonctions suivantes :
- quand le dispositif réglable de freinage (BK101) et le dispositif réglable de freinage (BK102) sont tous deux commandés pour être dans l'état de libération et que la machine électrique à double entraînement (EM100) n'est pas actionnée avec la fonction de machine électrique, les relations de transmission entre l'arbre de rotation (S101) et l'arbre de rotation (S102) et l'arbre de rotation de type manchon (AS101) se trouvent dans l'état de libération permettant une rotation à vide ;
- quand le dispositif réglable de freinage (BK101) et le dispositif réglable de freinage (BK102) sont tous les deux commandés pour être dans l'état de libération, et que la machine électrique à double entraînement (EM100) est actionnée avec la fonction de machine électrique, les opérations interactives correspondantes de la fonction d'alimentation électrique ou de la fonction motrice ont lieu de manière correspondante entre la partie interne de rotation de la machine électrique (EM101) et la partie externe de rotation de la machine électrique (EM102), en fonction de l'amortissement de la charge externe ou du couple de rotation, de la vitesse de rotation et du sens de rotation de l'énergie cinétique rotative induite de l'extérieur fournie par l'arbre de rotation (S101), l'arbre de rotation (S102) et l'arbre de rotation de type manchon (AS101) ;
- quand le dispositif réglable de freinage (BK101) est commandé pour être dans l'état de verrouillage de frein et que le dispositif réglable de freinage (BK102) est commandé pour être dans l'état de libération, et que la machine électrique à double entraînement (EM100) n'est pas actionnée avec la fonction de machine électrique, la relation de transmission entre l'arbre de rotation (S101) et l'arbre de rotation (S102) est en relation de liaison permettant la transmission ;
- quand le dispositif réglable de freinage (BK101) est commandé pour être dans l'état de verrouillage de frein et que le dispositif réglable de freinage (BK102) est commandé pour être dans l'état de libération et que la machine électrique à double entraînement (EM100) est actionnée avec la fonction de machine électrique, entre la partie interne de rotation de la machine électrique (EM101) et la partie externe de rotation de la machine électrique (EM102) comme fonction d'alimentation électrique ou de fonction motrice, pour réaliser des opérations interactives correspondantes avec l'amortissement de charge externe ou avec l'énergie cinétique rotative induite extérieurement fournie par l'arbre de rotation (S101) et l'arbre de rotation (S102) ;
- quand le dispositif réglable de freinage (BK101) est commandé pour être dans l'état de libération et que le dispositif réglable de freinage (BK102) est commandé pour être dans l'état de verrouillage de frein et que la machine électrique à double entraînement (EM100) n'est pas actionnée avec la fonction de machine électrique, la relation de transmission entre l'arbre de rotation (S101) et l'arbre de rotation (S102) est en relation de liaison permettant la transmission ;
- quand le dispositif réglable de freinage (BK101) est commandé pour être dans l'état de libération et que le dispositif réglable de freinage (BK102) est commandé pour être dans l'état de verrouillage de frein et que la machine électrique à double entraînement (EM100) est actionnée avec la fonction de machine électrique, entre la partie interne de rotation de la machine électrique (EM101) et la partie externe de rotation de la machine électrique (EM102) comme fonction d'alimentation électrique ou fonction motrice, afin d'effectuer des opérations interactives correspondantes avec l'amortissement de charge externe ou de l'énergie cinétique rotative induite extérieurement et assurée par l'arbre de rotation (S101) et l'arbre de rotation de type manchon (AS101) ;
- quand le dispositif réglable de freinage (BK101) et le dispositif réglable de freinage (BK102) sont tous deux commandés pour être dans l'état de verrouillage de frein, les relations entre l'arbre de rotation (S101), l'arbre de rotation (S102) et l'arbre de rotation de type manchon (AS101) sont toutes dans l'état de verrouillage de frein ;
les opérations interactives de la fonction correspondante effectuées par la machine électrique à double entraînement (EM100) susmentionnée comprennent la réception de la commande d'entraînement d'énergie électrique alimentée depuis l'extérieur, le fonctionnement comme fonction motrice pour entraîner individuellement la charge ou le travail avec l'énergie cinétique rotative induite extérieurement pour entraîner conjointement la charge ;
les opérations interactives de la fonction correspondante effectuées par la machine électrique à double entraînement (EM100) susmentionnée comprennent la réception de l'entraînement de l'énergie cinétique rotative induite extérieurement ou de l'entraînement de l'énergie cinétique d'inertie de charge pour fonctionner comme fonction d'alimentation électrique, de manière à amener l'énergie électrique à entraîner la charge électrique externe ou à charger le dispositif externe d'accumulation d'énergie électrique.

6. Machine électrique à double entraînement comportant un engrenage conique réglable selon la revendication 1, dans laquelle l'arbre de rotation (S101), partagé par la roue d'entrée (W101) de l'engrenage conique (EG101) et par la partie interne de rotation de la machine électrique (EM101) de la machine électrique à double entraînement (EM100), sert d'extrémité de sortie/entrée et est relié à un côté d'actionnement du dispositif réglable de freinage (BK103), tandis que l'autre côté d'actionnement du dispositif réglable de freinage (BK103) est fixé dans le carter (H100), et l'engrenage conique (EG101) est également fixé dans le carter (H100), et la roue (W103) de l'engrenage conique (EG101) est conçue pour être liée au culbuteur (A101) et associée à la partie externe de rotation de la machine électrique (EM102) et associée à l'arbre de rotation de type manchon (AS101), et l'arbre de rotation de type manchon (AS101), mis en rotation et emmanché sur l'arbre de rotation (S101) sert d'extrémité de sortie/entrée, et la roue de sortie (W102) de l'engrenage conique (EG101) est conçue pour amener l'arbre de rotation (S102) à servir d'extrémité de sortie/entrée, et l'arbre de rotation (S102) est relié à un côté d'actionnement du dispositif réglable de freinage (BK102) tandis que l'autre côté d'actionnement du dispositif réglable de freinage (BK102) est fixé au carter (H100), laquelle est principalement constituée des éléments suivants :
- l'engrenage conique (EG101) : constitué d'une roue d'entrée (W101) et d'une roue de sortie (W102) et d'au moins une roue (W103) et comprenant, au moyen des roues coniques qui s'engrènent ou des roues coniques à frottement, effectuant mutuellement des transmissions par frottement pour assurer la fonction d'engrenage conique, et également constitué de l'arbre de rotation (S101), de l'arbre de rotation (S102), du culbuteur (A101), de l'arbre de rotation de type manchon (AS101) et d'un palier, et installé avec une coque pour être agencé dans le carter (H100) ;
- le culbuteur (A101) : présente une extrémité conçue pour permettre à la roue (W103) de tourner et une liaison, et l'autre extrémité s'étendant axialement vers l'arbre de rotation (S101) pour être combinée avec la partie externe de rotation de la machine électrique (EM102) et associée à l'arbre de rotation de type manchon (AS101), et l'arbre de rotation de type manchon (AS101) est emmanché sur l'arbre de rotation (S101) et/ou sur l'arbre de rotation (S102), et à même de tourner avec celui-ci ou avec ceux-ci ;
- le dispositif réglable de freinage (BK102) : présente deux côtés à action réglable pour les fonctionnements d'un état de verrouillage de frein pour la mise en prise ou un état de libération pour la séparation, un des côtés d'actionnement étant relié à l'arbre de rotation (S102) tandis que l'autre côté d'actionnement est fixé dans le carter (H100) ;
- le dispositif réglable de freinage (BK103) : présente deux côtés à action réglable pour les fonctionnements d'un état de verrouillage de frein pour la mise en prise, ou un état de libération pour la séparation ; un des côtés d'actionnement étant relié à l'arbre de rotation (S101) tandis que l'autre côté d'actionnement est fixé dans le carter (H100) ;
- la machine électrique à double entraînement (EM100) : comportant une partie interne de rotation de la machine électrique (EM101) et une partie externe de rotation de la machine électrique (EM102), et installée avec des couvercles d'extrémité, des paliers et des dispositifs associés de conduction électrique, utilisés pour conduire l'énergie électrique, la partie interne de rotation de la machine électrique (EM101) et la partie externe de rotation de la machine électrique (EM102) tournent coaxialement, la partie interne de rotation de la machine électrique (EM101) étant associée à l'arbre de rotation (S101) et la partie externe de rotation de la machine électrique (EM102) étant associée au culbuteur (A101) ;
- l'arbre de rotation (S101), partagé par la roue d'entrée (W101) de l'engrenage conique (EG101) et la partie interne de rotation de la machine électrique (EM101) de la machine électrique à double entraînement (EM100), sert d'extrémité de sortie/entrée et est relié à un côté d'actionnement du dispositif réglable de freinage (BK103), et l'autre côté d'actionnement du dispositif réglable de freinage (BK103) est fixé dans le carter (H100) ; la roue de sortie (W102) de l'engrenage conique (EG101) est associée à l'arbre de rotation (S102) servant d'extrémité de sortie/entrée et est reliée à un côté d'actionnement du dispositif réglable de freinage (BK102), et l'autre côté d'actionnement du dispositif réglable de freinage (BK102) est fixé dans le carter (H100) ; le culbuteur (A101) relié par la roue (W103) est associé à la partie externe de rotation de la machine électrique (EM102) et associé à l'arbre de rotation de type manchon (AS101), et l'arbre de rotation de type manchon (AS101) mis en rotation et emmanché sur l'arbre de rotation (S101) sert d'extrémité de sortie/entrée ;
les opérations comprennent au moins l'une des fonctions suivantes :
- quand le dispositif réglable de freinage (BK102) et le dispositif réglable de freinage (BK103) sont tous deux commandés pour être dans l'état de libération et que la machine électrique à double entraînement (EM100) n'est pas actionnée avec la fonction de machine électrique, les relations de transmission entre l'arbre de rotation (S101) et l'arbre de rotation (S102) et l'arbre de rotation de type manchon (AS101) se trouvent dans l'état de libération permettant une rotation à vide ;
- quand le dispositif réglable de freinage (BK102) et le dispositif réglable de freinage (BK103) sont tous les deux commandés pour être dans l'état de libération et que la machine électrique à double entraînement (EM100) est actionnée avec la fonction de machine électrique, les opérations interactives correspondantes de la fonction d'alimentation électrique ou de la fonction motrice ont lieu de manière correspondante entre la partie interne de rotation de la machine électrique (EM101) et la partie externe de rotation de la machine électrique (EM102), en fonction de l'amortissement de la charge externe ou du couple de rotation, de la vitesse de rotation et du sens de rotation de l'énergie cinétique rotative induite de l'extérieur fournie par l'arbre de rotation (S101), l'arbre de rotation (S102) et l'arbre de rotation de type manchon (AS101) ;
- quand le dispositif réglable de freinage (BK103) est commandé pour être dans l'état de verrouillage de frein et que le dispositif réglable de freinage (BK102) est commandé pour être dans l'état de libération et que la machine électrique à double entraînement (EM100) n'est pas actionnée avec la fonction de machine électrique, la relation de transmission entre l'arbre de rotation (S102) et l'arbre de rotation (S102) est en relation de liaison permettant la transmission ;
- quand le dispositif réglable de freinage (BK103) est commandé pour être dans l'état de verrouillage de frein et que le dispositif réglable de freinage (BK102) est commandé pour être dans l'état de libération et que la machine électrique à double entraînement (EM100) est actionnée avec la fonction de machine électrique, entre la partie interne de rotation de la machine électrique (EM101) et la partie externe de rotation de la machine électrique (EM102) comme fonction d'alimentation électrique ou de fonction motrice, pour réaliser des opérations interactives correspondantes avec l'amortissement de charge externe ou avec l'énergie cinétique rotative induite extérieurement fournie par l'arbre de rotation de type manchon (AS101) et l'arbre de rotation (S102) ;
- quand le dispositif réglable de freinage (BK103) est commandé pour être dans l'état de libération et que le dispositif réglable de freinage (BK102) est commandé pour être dans l'état de verrouillage de frein et que la machine électrique à double entraînement (EM100) n'est pas actionnée avec la fonction de machine électrique, la relation de transmission entre l'arbre de rotation (S101) et l'arbre de rotation de type manchon (AS101) est en relation de liaison permettant la transmission ;
- quand le dispositif réglable de freinage (BK103) est commandé pour être dans l'état de libération et que le dispositif réglable de freinage (BK102) est commandé pour être dans l'état de verrouillage de frein et que la machine électrique à double entraînement (EM100) est actionnée avec la fonction de machine électrique, entre la partie interne de rotation de la machine électrique (EM101) et la partie externe de rotation de la machine électrique (EM102) comme fonction d'alimentation électrique ou fonction motrice, afin d'effectuer des opérations interactives correspondantes avec l'amortissement de charge externe ou de l'énergie cinétique rotative induite extérieurement et assurée par l'arbre de rotation (S101) et l'arbre de rotation de type manchon (AS101) ;
- quand le dispositif réglable de freinage (BK101) et le dispositif réglable de freinage (BK102) sont tous deux commandés pour être dans l'état de verrouillage de frein, les relations entre l'arbre de rotation (S101), l'arbre de rotation (S102) et l'arbre de rotation de type manchon (AS101) sont toutes dans l'état de verrouillage de frein ;
les opérations interactives de la fonction correspondante effectuées par la machine électrique à double entraînement (EM100) susmentionnée comprennent la réception de la commande d'entraînement d'énergie électrique alimentée depuis l'extérieur, le fonctionnement comme fonction motrice pour entraîner individuellement la charge ou le travail avec l'énergie cinétique rotative induite extérieurement pour entraîner conjointement la charge ;
les opérations interactives de la fonction correspondante effectuées par la machine électrique à double entraînement (EM100) susmentionnée comprennent la réception de l'entraînement de l'énergie cinétique rotative induite extérieurement ou de l'entraînement de l'énergie cinétique d'inertie de charge pour fonctionner comme fonction d'alimentation électrique, de manière à amener l'énergie électrique à entraîner la charge électrique externe ou à charger le dispositif externe d'accumulation d'énergie électrique.

7. Machine électrique à double entraînement comportant un engrenage conique réglable selon la revendication 1, dans laquelle l'arbre de rotation (S101), partagé par la roue d'entrée (W101) de l'engrenage conique (EG101) et par la partie interne de rotation de la machine électrique (EM101) de la machine électrique à double entraînement (EM100), sert d'extrémité de sortie/entrée pour être relié à un côté d'actionnement du dispositif réglable de freinage (BK103), tandis que l'autre côté d'actionnement du dispositif réglable de freinage (BK103) est fixé dans le carter (H100) ; la roue (W103) de l'engrenage conique (EG101) est conçue pour être liée au culbuteur (A101) et associée à la partie externe de rotation de la machine électrique (EM102) et associée à l'arbre de rotation de type manchon (AS101), et l'arbre de rotation de type manchon (AS101), mis en rotation et combiné sur l'arbre de rotation (S101) pour servir d'extrémité de sortie/entrée, et l'arbre de rotation de type manchon (AS101) est relié à un côté d'actionnement du dispositif réglable de freinage (BK101), et l'autre côté d'actionnement du dispositif réglable de freinage (BK101) est fixé dans le carter (H100), et la coque de l'engrenage conique (EG101) est également fixée dans le boîtier (H100), et la roue de sortie (W102) de l'engrenage conique (EG101) est conçue pour amener l'arbre de rotation (S102) à servir d'extrémité de sortie/entrée, laquelle est principalement constituée des éléments suivants :
- l'engrenage conique (EG101) : constitué d'une roue d'entrée (W101) et d'une roue de sortie (W102) et d'au moins une roue (W103) et comprenant, au moyen des roues coniques qui s'engrènent ou des roues coniques à frottement, effectuant mutuellement des transmissions par frottement pour assurer la fonction d'engrenage conique, et également constitué de l'arbre de rotation (S101), de l'arbre de rotation (S102), du culbuteur (A101), de l'arbre de rotation de type manchon (AS101) et d'un palier, et installé avec une coque pour être agencé dans le carter (H100) ;
- le culbuteur (A101) : présente une extrémité conçue pour permettre à la roue (W103) de tourner et une liaison, et l'autre extrémité s'étendant axialement vers l'arbre de rotation (S101) pour être combinée avec la partie externe de rotation de la machine électrique (EM102) et associée à l'arbre de rotation de type manchon (AS101), et l'arbre de rotation de type manchon (AS101) est emmanché sur l'arbre de rotation (S101) et/ou sur l'arbre de rotation (S102), et à même de tourner avec celui-ci ou avec ceux-ci ;
- le dispositif réglable de freinage (BK101) : présente deux côtés à action réglable pour les fonctionnements d'un état de verrouillage de frein pour la mise en prise ou un état de libération pour la séparation, un des côtés d'actionnement étant relié à l'arbre de rotation de type manchon (AS101) ou au culbuteur (A101) tandis que l'autre côté d'actionnement est fixé dans le carter (H100) ;
- le dispositif réglable de freinage (BK103) : présente deux côtés à action réglable pour les fonctionnements d'un état de verrouillage de frein pour la mise en prise ou un état de libération pour la séparation, un des côtés d'actionnement étant relié à l'arbre de rotation (S101) ou au culbuteur (A101) tandis que l'autre côté d'actionnement est fixé dans le carter (H100) ;
- la machine électrique à double entraînement (EM100) : comportant une partie interne de rotation de la machine électrique (EM101) et une partie externe de rotation de la machine électrique (EM102), et installée avec des couvercles d'extrémité, des paliers et des dispositifs associés de conduction électrique, utilisés pour l'alimentation électrique, la partie interne de rotation de la machine électrique (EM101) et la partie externe de rotation de la machine électrique (EM102) tournent coaxialement, la partie interne de rotation de la machine électrique (EM101) est associée à l'arbre de rotation (S101), et la partie externe de rotation de la machine électrique (EM102) est associée au culbuteur (A101) ;
- l'arbre de rotation (S101), partagé par la roue d'entrée (W101) de l'engrenage conique (EG101) et par la partie interne de rotation de la machine électrique (EM101) de la machine électrique à double entraînement (EM100) sert d'extrémité de sortie/entrée, et sert à une liaison à un côté d'actionnement du dispositif réglable de freinage (BK103), tandis que l'autre côté d'actionnement du dispositif réglable de freinage (BK103) est fixé dans le carter (H100) ;
- la roue (W103) de l'engrenage conique (EG101) est conçue pour une liaison au culbuteur (A101) et associée à la partie externe de rotation de la machine électrique (EM102) et associée à l'arbre de rotation de type manchon (AS101), et l'arbre de rotation de type manchon (AS101) est mis en rotation et emmanché sur l'arbre de rotation (S101) pour servir d'extrémité de sortie/entrée, et l'arbre de rotation de type manchon (AS101) est relié à un côté d'actionnement du dispositif réglable de freinage (BK101) tandis que l'autre côté d'actionnement du dispositif réglable de freinage (BK101) est fixé dans le carter (H100), et la roue de sortie (W102) de l'engrenage conique (EG101) est conçue pour entraîner l'arbre de rotation (S102) pour servir d'extrémité de sortie/entrée ;
les opérations comprennent au moins l'une des fonctions suivantes :
- quand le dispositif réglable de freinage (BK101) et le dispositif réglable de freinage (BK103) sont tous deux commandés pour être dans l'état de libération et que la machine électrique à double entraînement (EM100) n'est pas actionnée avec la fonction de machine électrique, les relations de transmission entre l'arbre de rotation (S101) et l'arbre de rotation (S102) et l'arbre de rotation de type manchon (AS101) se trouvent dans l'état de libération permettant une rotation à vide ;
- quand le dispositif réglable de freinage (BK101) et le dispositif réglable de freinage (BK103) sont tous les deux commandés pour être dans l'état de libération et que la machine électrique à double entraînement (EM100) est actionnée avec la fonction de machine électrique, l'opération interactive correspondante de la fonction d'alimentation électrique ou de la fonction motrice ont lieu de manière correspondante entre la partie interne de rotation de la machine électrique (EM101) et la partie externe de rotation de la machine électrique (EM102), en fonction de l'amortissement de la charge externe ou du couple de rotation, de la vitesse de rotation et du sens de rotation de l'énergie cinétique rotative induite de l'extérieur fournie par l'arbre de rotation (S101), l'arbre de rotation (S102) et l'arbre de rotation de type manchon (AS101) ;
- quand le dispositif réglable de freinage (BK101) est commandé pour être dans l'état de verrouillage de frein et que le dispositif réglable de freinage (BK103) est commandé pour être dans l'état de libération et que la machine électrique à double entraînement (EM100) n'est pas actionnée avec la fonction de machine électrique, la relation de transmission entre l'arbre de rotation (S101) et l'arbre de rotation (S102) est en relation de liaison permettant la transmission ;
- quand le dispositif réglable de freinage (BK101) est commandé pour être dans l'état de verrouillage de frein et que le dispositif réglable de freinage (BK103) est commandé pour être dans l'état de libération et que la machine électrique à double entraînement (EM100) est actionnée avec la fonction de machine électrique, entre la partie interne de rotation de la machine électrique (EM101) et la partie externe de rotation de la machine électrique (EM102) comme fonction d'alimentation électrique ou de fonction motrice, pour réaliser des opérations interactives correspondantes avec l'amortissement de charge externe ou avec l'énergie cinétique rotative induite extérieurement fournie par l'arbre de rotation (S101) et l'arbre de rotation (S102) ;
- quand le dispositif réglable de freinage (BK101) est commandé pour être dans l'état de libération et que le dispositif réglable de freinage (BK103) est commandé pour être dans l'état de verrouillage de frein et que la machine électrique à double entraînement (EM100) n'est pas actionnée avec la fonction de machine électrique, la relation de transmission entre l'arbre de rotation (S102) et l'arbre de rotation de type manchon (AS101) est en relation de liaison permettant la transmission ;
- quand le dispositif réglable de freinage (BK101) est commandé pour être dans l'état de libération et que le dispositif réglable de freinage (BK103) est commandé pour être dans l'état de verrouillage de frein et que la machine électrique à double entraînement (EM100) est actionnée avec la fonction de machine électrique, entre la partie interne de rotation de la machine électrique (EM101) et la partie externe de rotation de la machine électrique (EM102) comme fonction d'alimentation électrique ou fonction motrice, afin d'effectuer des opérations interactives correspondantes avec l'amortissement de charge externe ou de l'énergie cinétique rotative induite extérieurement et assurée par l'arbre de rotation (S102) et l'arbre de rotation de type manchon (AS101) ;
- quand le dispositif réglable de freinage (BK101) et le dispositif réglable de freinage (BK102) sont tous deux commandés pour être dans l'état de verrouillage de frein, les relations entre l'arbre de rotation (S101), l'arbre de rotation (S102) et l'arbre de rotation de type manchon (AS101) sont toutes dans l'état de verrouillage de frein ;
les opérations interactives de la fonction correspondante effectuées par la machine électrique à double entraînement (EM100) susmentionnée comprennent la réception de la commande d'entraînement d'énergie électrique alimentée depuis l'extérieur, le fonctionnement comme fonction motrice pour entraîner individuellement la charge ou le travail avec l'énergie cinétique rotative induite extérieurement pour entraîner conjointement la charge ;
les opérations interactives de la fonction correspondante effectuées par la machine électrique à double entraînement (EM100) susmentionnée comprennent la réception de l'entraînement de l'énergie cinétique rotative induite extérieurement ou de l'entraînement de l'énergie cinétique d'inertie de charge pour fonctionner comme fonction d'alimentation électrique, de manière à amener l'énergie électrique à entraîner la charge électrique externe ou à charger le dispositif externe d'accumulation d'énergie électrique.

8. Machine électrique à double entraînement comportant un engrenage conique réglable selon la revendication 2, dans laquelle l'arbre de rotation (S101), partagé par la roue d'entrée (W101) de l'engrenage conique (EG101) et par la partie interne de rotation de la machine électrique (EM101) de la machine électrique à double entraînement (EM100), sert d'extrémité de sortie/entrée pour être relié à un côté d'actionnement du dispositif réglable de freinage (BK103), tandis que l'autre côté d'actionnement du dispositif réglable de freinage (BK103) est fixé dans le carter (H100) ; la roue (W103) de l'engrenage conique (EG101) est conçue pour être liée au culbuteur (A101) et associée à la partie externe de rotation de la machine électrique (EM102) et associée à l'arbre de rotation de type manchon (AS101), et l'arbre de rotation de type manchon (AS101), mis en rotation et combiné sur l'arbre de rotation (S101) pour servir d'extrémité de sortie/entrée, et l'arbre de rotation de type manchon (AS101) est relié à un côté d'actionnement du dispositif réglable de freinage (BK101), tandis que l'autre côté d'actionnement du dispositif réglable de freinage (BK101) est fixé dans le carter (H100) ; l'engrenage conique (EG101) est également fixé dans le carter (H100), et la roue de sortie (W102) de l'engrenage conique (EG101) est conçue pour entraîner l'arbre de rotation (S102) pour qu'il serve d'extrémité de sortie/entrée, et l'arbre de rotation (S102) est relié à un côté d'actionnement du dispositif réglable de freinage (BK102) tandis que l'autre côté d'actionnement du dispositif réglable de freinage (BK102) est fixé dans le carter (H100), laquelle est principalement constituée des éléments suivants :
- l'engrenage conique (EG101) : constitué d'une roue d'entrée (W101) et d'une roue de sortie (W102) et d'au moins une roue (W103) et comprenant, au moyen des roues coniques qui s'engrènent ou des roues coniques à frottement, effectuant mutuellement des transmissions par frottement pour assurer la fonction d'engrenage conique, et également constitué de l'arbre de rotation (S101), de l'arbre de rotation (S102), du culbuteur (A101), de l'arbre de rotation de type manchon (AS101) et d'un palier, et installé avec une coque pour être agencé dans le carter (H100) ;
- le culbuteur (A101) : présente une extrémité conçue pour permettre à la roue (W103) de tourner et une liaison, et l'autre extrémité s'étendant axialement vers l'arbre de rotation (S101) pour être combinée avec la partie externe de rotation de la machine électrique (EM102) et associée à l'arbre de rotation de type manchon (AS101), et l'arbre de rotation de type manchon (AS101) est emmanché sur l'arbre de rotation (S101) et/ou sur l'arbre de rotation (S102), et à même de tourner avec celui-ci ou avec ceux-ci ;
- le dispositif réglable de freinage (BK101) : présente deux côtés à action réglable pour les fonctionnements d'un état de verrouillage de frein pour la mise en prise ou un état de libération pour la séparation, un des côtés d'actionnement étant relié à l'arbre de rotation de type manchon (AS101) ou au culbuteur (A101) tandis que l'autre côté d'actionnement est fixé dans le carter (H100) ;
- le dispositif réglable de freinage (BK102) : présente deux côtés à action réglable pour les fonctionnements d'un état de verrouillage de frein pour la mise en prise ou un état de libération pour la séparation, un des côtés d'actionnement étant relié à l'arbre de rotation (S102) tandis que l'autre côté d'actionnement est fixé dans le carter (H100) ;
- le dispositif réglable de freinage (BK103) : présente deux côtés à action réglable pour les fonctionnements d'un état de verrouillage de frein pour la mise en prise ou un état de libération pour la séparation, un des côtés d'actionnement étant relié à l'arbre de rotation (S101) tandis que l'autre côté d'actionnement est fixé dans le carter (H100) ;
- la machine électrique à double entraînement (EM100) : constituée d'une machine électrique à double entraînement synchrone ou asynchrone, avec ou sans balais, à courant continu ou alternatif, comportant une partie interne de rotation de la machine électrique (EM101) et une partie externe de rotation de la machine électrique (EM102), et installée avec des couvercles d'extrémité, des paliers et des dispositifs associés de conduction électrique, utilisés pour introduire de l'énergie électrique, la partie interne de rotation de la machine électrique (EM101) et la partie externe de rotation de la machine électrique (EM102) tournent coaxialement, la partie interne de rotation de la machine électrique (EM101) est associée à l'arbre de rotation (S101), et la partie externe de rotation de la machine électrique (EM102) est associée au culbuteur (A101) ;
- l'arbre de rotation (S101), partagé par la roue d'entrée (W101) de l'engrenage conique (EG101) et par la partie interne de rotation de la machine électrique (EM101) de la machine électrique à double entraînement (EM100), sert d'extrémité de sortie/entrée, et sert à une liaison à un côté d'actionnement du dispositif réglable de freinage (BK103), tandis que l'autre côté d'actionnement du dispositif réglable de freinage (BK103) est fixé dans le carter (H100) ;
- la roue (W103) de l'engrenage conique (EG101) est conçue pour une liaison au culbuteur (A101) et associée à la partie externe de rotation de la machine électrique (EM102) et associée à l'arbre de rotation de type manchon (AS101), et l'arbre de rotation de type manchon (AS101) est mis en rotation et emmanché sur l'arbre de rotation (S101) pour servir d'extrémité de sortie/entrée, et l'arbre de rotation de type manchon (AS101) est relié à un côté d'actionnement du dispositif réglable de freinage (BK101) tandis que l'autre côté d'actionnement du dispositif réglable de freinage (BK101) est fixé dans le carter (H100) ; la roue de sortie (W102) de l'engrenage conique (EG101) est conçue pour entraîner l'arbre de rotation (S102) pour servir d'extrémité de sortie/entrée, et l'arbre de rotation (S102) est relié à un côté d'actionnement du dispositif réglable de freinage (BK102) tandis que l'autre côté d'actionnement du dispositif réglable de freinage (BK102) est fixé dans le carter (H100) ;
les opérations comprennent au moins l'une des fonctions suivantes :
- quand le dispositif réglable de freinage (BK101), le dispositif réglable de freinage (BK102) et le dispositif réglable de freinage (BK103) sont tous commandés pour être dans l'état de libération et que la machine électrique à double entraînement (EM100) n'est pas actionnée avec la fonction de machine électrique, les relations de transmission entre l'arbre de rotation (S101) et l'arbre de rotation (S102) et l'arbre de rotation de type manchon (AS101) se trouvent dans l'état de libération permettant une rotation à vide ;
- quand le dispositif réglable de freinage (BK101), le dispositif réglable de freinage (BK102) et le dispositif réglable de freinage (BK103) sont tous commandés pour être dans l'état de libération et que la machine électrique à double entraînement (EM100) est actionnée avec la fonction de machine électrique, les opérations interactives correspondantes de la fonction d'alimentation électrique ou de la fonction motrice ont lieu de manière correspondante entre la partie interne de rotation de la machine électrique (EM101) et la partie externe de rotation de la machine électrique (EM102), en fonction de l'amortissement de la charge externe ou du couple de rotation, de la vitesse de rotation et du sens de rotation de l'énergie cinétique rotative induite de l'extérieur fournie par l'arbre de rotation (S101), l'arbre de rotation (S102) et l'arbre de rotation de type manchon (AS101) ;
- quand le dispositif réglable de freinage (BK101) est commandé pour être dans l'état de verrouillage de frein et que le dispositif réglable de freinage (BK102) et le dispositif réglable de freinage (BK103) sont commandés pour être dans l'état de libération et que la machine électrique à double entraînement (EM100) n'est pas actionnée avec la fonction de machine électrique, la relation de transmission entre l'arbre de rotation (S101) et l'arbre de rotation (S102) est en relation de liaison permettant la transmission ;
- quand le dispositif réglable de freinage (BK101) est commandé pour être dans l'état de verrouillage de frein et que le dispositif réglable de freinage (BK102) et le dispositif réglable de freinage (BK103) sont commandés pour être dans l'état de libération et que la machine électrique à double entraînement (EM100) est actionnée avec la fonction de machine électrique, entre la partie interne de rotation de la machine électrique (EM101) et la partie externe de rotation de la machine électrique (EM102) comme fonction d'alimentation électrique ou de fonction motrice, pour réaliser des opérations interactives correspondantes avec l'amortissement de charge externe ou avec l'énergie cinétique rotative induite extérieurement fournie par l'arbre de rotation (S101) et l'arbre de rotation (S102) ;
- quand le dispositif réglable de freinage (BK102) est commandé pour être dans l'état de verrouillage de frein et que le dispositif réglable de freinage (BK101) et le dispositif réglable de freinage (BK103) sont commandés pour être dans l'état de libération et que la machine électrique à double entraînement (EM100) n'est pas actionnée avec la fonction de machine électrique, la relation de transmission entre l'arbre de rotation (S101) et l'arbre de rotation de type manchon (AS101) est en relation de liaison permettant la transmission ;
- quand le dispositif réglable de freinage (BK102) est commandé pour être dans l'état de verrouillage de frein et que le dispositif réglable de freinage (BK101) et le dispositif réglable de freinage (BK103) sont commandés pour être dans l'état de libération et que la machine électrique à double entraînement (EM100) est actionnée avec la fonction de machine électrique, entre la partie interne de rotation de la machine électrique (EM101) et la partie externe de rotation de la machine électrique (EM102) comme fonction d'alimentation électrique ou de fonction motrice, pour réaliser des opérations interactives correspondantes avec l'amortissement de charge externe ou avec l'énergie cinétique rotative induite extérieurement fournie par l'arbre de rotation (S101) et l'arbre de rotation de type manchon (AS101) ;
- quand le dispositif réglable de freinage (BK103) est commandé pour être dans l'état de verrouillage de frein et que le dispositif réglable de freinage (BK101) et le dispositif réglable de freinage (BK102) sont commandés pour être dans l'état de libération et que la machine électrique à double entraînement (EM100) n'est pas actionnée avec la fonction de machine électrique, la relation de transmission entre l'arbre de rotation (S102) et l'arbre de rotation de type manchon (AS101) est en relation de liaison permettant la transmission ;
- quand le dispositif réglable de freinage (BK103) est commandé pour être dans l'état de verrouillage de frein et que le dispositif réglable de freinage (BK101) et le dispositif réglable de freinage (BK102) sont commandés pour être dans l'état de libération et que la machine électrique à double entraînement (EM100) est actionnée avec la fonction de machine électrique, entre la partie interne de rotation de la machine électrique (EM101) et la partie externe de rotation de la machine électrique (EM102) comme fonction d'alimentation électrique ou de fonction motrice, pour réaliser des opérations interactives correspondantes avec l'amortissement de charge externe ou avec l'énergie cinétique rotative induite extérieurement fournie par l'arbre de rotation (S102) et l'arbre de rotation de type manchon (AS101) ;
- quand deux des trois dispositifs ou l'ensemble du dispositif réglable de freinage (BK101), du dispositif réglable de freinage (BK102) et du dispositif réglable de freinage (BK103) sont commandés pour être dans l'état de verrouillage de frein, les relations entre l'arbre de rotation (S101), l'arbre de rotation (S102) et l'arbre de rotation de type manchon (AS101) sont toutes dans l'état de verrouillage de frein ;
les opérations interactives de la fonction correspondante effectuées par la machine électrique à double entraînement (EM100) susmentionnée comprennent la réception de la commande d'entraînement d'énergie électrique alimentée depuis l'extérieur, le fonctionnement comme fonction motrice pour entraîner individuellement la charge ou le travail avec l'énergie cinétique rotative induite extérieurement pour entraîner la charge ;
les opérations interactives de la fonction correspondante effectuées par la machine électrique à double entraînement (EM100) susmentionnée comprennent la réception de l'entraînement de l'énergie cinétique rotative induite extérieurement ou de l'entraînement de l'énergie cinétique d'inertie de charge pour fonctionner comme fonction d'alimentation électrique, de manière à amener l'énergie électrique à entraîner la charge électrique externe ou à charger le dispositif externe d'accumulation d'énergie électrique.
